(19) **Europäisches Patentamt / European Patent Office / Office européen des brevets**

(11) **EP 4 685 856 A1**

(12) **EUROPEAN PATENT APPLICATION**
published in accordance with Art. 153(4) EPC

(43) Date of publication:
**28.01.2026  Bulletin 2026/05**

(21) Application number: **24797514.7**

(22) Date of filing: **29.04.2024**

(51) International Patent Classification (IPC):
$H01M\ 4/02$ (2006.01)    $H01M\ 4/525$ (2010.01)
$H01M\ 4/505$ (2010.01)    $H01M\ 4/131$ (2010.01)
$H01M\ 10/052$ (2010.01)    $H01M\ 4/36$ (2006.01)
$H01M\ 4/04$ (2006.01)

(52) Cooperative Patent Classification (CPC):
Y02E 60/10

(86) International application number:
**PCT/KR2024/005824**

(87) International publication number:
**WO 2024/225860 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.04.2023  KR 20230056231**

(71) Applicant: **LG Chem, Ltd.**
**Seoul 07336 (KR)**

(72) Inventors:
• **HWANG, Joo Kyoung**
  **Daejeon 34122 (KR)**
• **JEONG, Jin Hoo**
  **Daejeon 34122 (KR)**
• **JEONG, Myung Gi**
  **Daejeon 34122 (KR)**
• **LEE, Ji Young**
  **Daejeon 34122 (KR)**
• **RYU, Hyeon Mo**
  **Daejeon 34122 (KR)**
• **HEO, Kook Jin**
  **Daejeon 34122 (KR)**
• **LEE, Jung Uk**
  **Daejeon 34122 (KR)**
• **BAK, Sang Eun**
  **Daejeon 34122 (KR)**
• **KIM, Jong Hyuk**
  **Daejeon 34122 (KR)**

(74) Representative: **Hoffmann Eitle**
**Patent- und Rechtsanwälte PartmbB**
**Arabellastraße 30**
**81925 München (DE)**

(54) **CATHODE ACTIVE MATERIAL, CATHODE, AND LITHIUM SECONDARY BATTERY**

(57)    The present invention relates to a positive electrode active material, and to a positive electrode active material which may simultaneously solve a problem of a conventional secondary particle and a problem of a single particle, wherein the positive electrode active material may improve energy density through excellent density characteristics as well as cell characteristics, such as improved lifetime and reduced gas generation amount of a lithium secondary battery, by including a particle, such as a conventional single particles, as a primary particle and including a secondary particle that is formed by aggregation of a plurality of primary particles, and a positive electrode and a lithium secondary battery which include the same.

[FIG. 1]

[FIG. 1]

[FIG. 1]

**Description**

**TECHNICAL FIELD**

Cross-reference to Related Applications

This application claims priority from Korean Patent Application Nos. 10-2023-0056231, filed on April 28, 2023, and 10-2024-0057193, filed on April 29, 2024, the disclosures of which are incorporated by reference herein.

Technical Field

The present invention relates to a positive electrode active material, and a positive electrode and a lithium secondary battery which include the same.

**BACKGROUND ART**

With the recent technological development of electric vehicles, demand for high-capacity secondary batteries is increasing, and, accordingly, research on a high nickel (high Ni) positive electrode active material having excellent capacity characteristics is being actively conducted.

With respect to the high nickel positive electrode active material formed in a secondary particle structure in which primary particles are aggregated, structural degradation occurs during charge and discharge of a lithium secondary battery, but a relatively large change in lattice structure constant, that is, a relatively large volume change in unit lattice occurs. This volume change causes cracks in the positive electrode active material. Also, cracks may occur in the positive electrode active material due to pressure even during electrode rolling.

The cracks thus occurred in the high nickel positive electrode active material become more severe in a charging and discharging process of the lithium secondary battery, and accordingly, since the crack acts as a void that may not be reached by an electrolyte solution or reduces conductivity, it degrades life characteristics of the lithium secondary battery or acts as a factor in increasing resistance.

As a way to minimize the occurrence of the cracks in the secondary particle structure, attempts are being made to prepare a positive electrode active material in a form of a single particle. However, since diameters of the particles of the positive electrode active material in the form of a single particle are non-uniform, there is a problem in that a particle diameter distribution of the positive electrode active material in the form of a single particle, which is obtained after grinding, is increased. Also, the positive electrode active material in the form of a single particle has a problem of poor cell resistance characteristics due to its low specific surface area.

Thus, there is a need to develop a positive electrode active material which may simultaneously solve the problem of the conventional secondary particle and the problem of the single particle.

Korean Patent No. 10-1785262 (Patent Document 1) discloses a large-diameter secondary particle including a secondary particle in which primary particles are aggregated, wherein the secondary particle includes a nickel-based lithium transition metal oxide, the primary particle has an average particle diameter of 3 $\mu$m to 5 $\mu$m, and the secondary particle has an average particle diameter of 10 $\mu$m to 20 $\mu$m. Since the large-diameter secondary particle includes the primary particles having an average particle diameter of a micron level, it may minimize cracks due to rolling by improving rolling density, and may improve cell characteristics by improving the specific surface area through the secondary particle structure.

In order to prepare the positive electrode active material in the form of a secondary particle in which the diameter of the primary particle is at a micron level, as disclosed in Patent Document 1, it is necessary to perform a heat treatment at a higher temperature than a secondary particle in which a diameter of a primary particle is at a submicron level of less than 1 $\mu$m. However, since a layered structure of lithium transition metal composite oxide is degenerated into a rock salt structure as the heat treatment temperature is increased, this causes a decrease in crystallinity, and this in turn becomes a cause of degrading performance of the positive electrode active material. Particularly, since nickel is most susceptible to the degeneration of the layered structure of the lithium transition metal composite oxide into the rock salt structure at the high heat treatment temperature, the degeneration is further intensified when an amount of the nickel in the lithium transition metal composite oxide constituting the positive electrode active material is increased. Thus, conventionally, as shown in Patent Document 1, the positive electrode active material in the form of a secondary particle, in which the diameter of the primary particle is at a micron level, may only be applied to a mid nickel (mid Ni) positive electrode active material in which an amount of nickel among transition metals of lithium transition metal composite oxide is about 50 mol%, and it was not possible to prepare the positive electrode active material in the form of a secondary particle, in which the diameter of the primary particle is at a micron level, for a high nickel (high Ni) positive electrode active material having excellent capacity characteristics due to a large amount of the nickel among the transition metals of the lithium transition metal composite oxide.

[Prior Art Documents]

[Patent Documents]

(Patent Document 1) KR 10-1785262 B1
(Patent Document 2) KR 10-2017-0119573 A

## DISCLOSURE OF THE INVENTION

### TECHNICAL PROBLEM

An aspect of the present invention provides a high nickel (high Ni) positive electrode active material which may simultaneously solve a problem of a conventional secondary particle and a problem of a single particle.
That is, an aspect of the present invention provides a positive electrode active material, which may improve energy density through excellent density characteristics as well as cell characteristics, such as improved lifetime and reduced gas generation amount, by achieving the positive electrode active material in a form of a secondary particle in which a diameter of a primary particle is at a micron level, as the high nickel (high Ni) positive electrode active material having excellent capacity characteristics due to a large amount of nickel among transition metals of lithium transition metal composite oxide.
Another aspect of the present invention provides a positive electrode and a lithium secondary battery which include the above positive electrode active material.

### TECHNICAL SOLUTION

In order to solve the above-described tasks, the present invention provides a positive electrode active material, and a positive electrode and a lithium secondary battery which include the same.

(1) The present invention provides a positive electrode active material including a secondary particle in which a plurality of primary particles are aggregated, wherein the plurality of primary particles have an average particle size measured from a scanning electron microscope (SEM) image of 1.5 $\mu$m to 5.0 $\mu$m, wherein the particle size of the primary particle is a particle size based on a long diameter of the primary particle, and when calculating a value of volume from Equation 5 for each of the primary particles observed from an SEM image (measurement magnification 3,000 times) of a surface of the secondary particle, a degree of single-particle formation ($Dv_{50}$) corresponding to a diameter of volume at 50% of cumulative distribution of the volume of the primary particles is in a range of 1.2 $\mu$m to 3.8 $\mu$m.

[Equation 5]

$$\text{Volume} = \frac{4\pi}{3} \times radius^3$$

In Equation 5,
radius is a radius of a surface of the primary particle when assuming that the surface of the primary particle, which is observed from the SEM image (measurement magnification 3,000 times) of the surface of the secondary particle, is circular.
(2) The present invention provides the positive electrode active material of (1) above, wherein the degree of single-particle formation ($Dv_{50}$) is in a range of 1.65 $\mu$m to 3.55 $\mu$m.
(3) The present invention provides the positive electrode active material of (1) or (2) above, wherein the positive electrode active material further includes a lithium transition metal composite oxide containing nickel, cobalt, and manganese.

(4) The present invention provides the positive electrode active material of any one of (1) to (3) above, wherein the positive electrode active material further includes a lithium transition metal composite oxide containing 60 mol% or more of nickel among total transition metals.

(5) The present invention provides the positive electrode active material of any one of (1) to (4) above, wherein the positive electrode active material further includes a lithium transition metal composite oxide having an average composition represented by Formula 1.

[Formula 1] $\quad Li_xNi_aCo_bMn_cM^1_dO_2$

In Formula 1, $M^1$ is at least one selected from the group consisting of aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), vanadium (V), fluorine (F), phosphorus (P), sulfur (S), and yttrium (Y), and $0.9 \leq x \leq 1.3$, $0.6 \leq a < 1.0$, $0 < b < 0.4$, $0 < c < 0.4$, $0 \leq d \leq 0.2$, and $a+b+c+d=1$.

(6) The present invention provides the positive electrode active material of any one of (1) to (5) above, wherein the plurality of primary particles include a single crystal primary particle.

(7) The present invention provides the positive electrode active material of any one of (1) to (6) above, wherein the secondary particle has an average particle diameter ($D_{50}$) according to a volume cumulative distribution measured using a laser diffraction particle size analyzer of 7.0 $\mu$m to 20.0 $\mu$m.

(8) The present invention provides a positive electrode including the positive electrode active material of any one of (1) to (7) above.

(9) The present invention provides a lithium secondary battery including the positive electrode of (8) above; a negative electrode; a separator disposed between the positive electrode and the negative electrode, and an electrolyte.

**ADVANTAGEOUS EFFECTS**

A positive electrode active material of the present invention is a high nickel (high Ni) positive electrode active material which may simultaneously solve a problem of a conventional secondary particle and a problem of a single particle, wherein the positive electrode active material of the present invention may improve energy density through excellent density characteristics as well as cell characteristics, such as improved lifetime and reduced gas generation amount of a lithium secondary battery, by achieving the positive electrode active material in a form of a secondary particle in which a size of a primary particle is at a micron level.

**BRIEF DESCRIPTION OF THE DRAWINGS**

FIG. 1 illustrates (A) a scanning electron microscope (SEM) image of a positive electrode active material of Example 1, and (B) an SEM image of a cross section of the positive electrode active material.

FIG. 2 illustrates (A) an SEM image of a positive electrode active material of Example 2, and (B) an SEM image of a cross section of the positive electrode active material.

FIG. 3 illustrates (A) an SEM image of a positive electrode active material of Example 3, and (B) an SEM image of a cross section of the positive electrode active material.

FIG. 4 illustrates (A) an SEM image of a positive electrode active material of Example 4, and (B) an SEM image of a cross section of the positive electrode active material.

FIG. 5 illustrates (A) an SEM image of a positive electrode active material of Example 5, and (B) an SEM image of a cross section of the positive electrode active material.

FIG. 6 illustrates (A) an SEM image of a positive electrode active material of Example 6, and (B) an SEM image of a cross section of the positive electrode active material.

FIG. 7 illustrates (A) an SEM image of a positive electrode active material of Example 7, and (B) an SEM image of a cross section of the positive electrode active material.

FIG. 8 illustrates (A) an SEM image of a positive electrode active material of Example 8, and (B) an SEM image of a cross section of the positive electrode active material.

FIG. 9 illustrates (A) an SEM image of a positive electrode active material of Example 9, and (B) an SEM image of a cross section of the positive electrode active material.

FIG. 10 illustrates (A) an SEM image of a positive electrode active material of Example 10, and (B) an SEM image of a cross section of the positive electrode active material.

FIG. 11 illustrates (A) an SEM image of a positive electrode active material of Example 11, and (B) an SEM image of a cross section of the positive electrode active material.

FIG. 12 illustrates (A) an SEM image of a positive electrode active material of Comparative Example 1, and (B) an SEM image of a cross section of the positive electrode active material.

FIG. 13 illustrates (A) an SEM image of a positive electrode active material of Comparative Example 2, and (B) an SEM image of a cross section of the positive electrode active material.

FIG. 14 illustrates (A) an SEM image of a positive electrode active material of Comparative Example 3, and (B) an SEM image of a cross section of the positive electrode active material.

FIG. 15 illustrates (A) an SEM image of a positive electrode active material of Comparative Example 4, and (B) an SEM image of a cross section of the positive electrode active material.

FIG. 16 illustrates (A) an SEM image of a positive electrode active material of Comparative Example 6, and (B) an SEM image of a cross section of the positive electrode active material.

FIG. 17 is a segmentation image illustrating a plurality of lithium composite transition metal oxides which are segmented by performing image analysis on the SEM image of the positive electrode active material of Example 1 based on an artificial intelligence model.

FIG. 18 is a segmentation image illustrating a plurality of lithium composite transition metal oxides which are segmented by performing image analysis on the SEM image of the positive electrode active material of Comparative Example 1 based on an artificial intelligence model.

FIG. 19 is a transmission electron microscope (TEM) image of a cross section of the positive electrode active material of Example 1.

FIG. 20 is a TEM image of a cross section of the positive electrode active material of Example 2.

FIG. 21 is a TEM image of a cross section of the positive electrode active material of Example 8.

FIG. 22 is an electron backscatter diffraction (EBSD) pattern image of a cross section of the positive electrode active material of Example 1.

FIG. 23 is an EBSD pattern image of a cross section of the positive electrode active material of Example 2.

FIG. 24 is an EBSD pattern image of a cross section of the positive electrode active material of Example 3.

FIG. 25 is an EBSD pattern image of a cross section of the positive electrode active material of Example 4.

FIG. 26 is an EBSD pattern image of a cross section of the positive electrode active material of Example 8.

FIG. 27 is an EBSD pattern image of a cross section of the positive electrode active material of Example 10.

FIG. 28 is an EBSD pattern image of a cross section of the positive electrode active material of Example 11.

FIG. 29 is an EBSD pattern image of a cross section of the positive electrode active material of Comparative Example 3.

FIG. 30 is an electron probe microanalysis (EPMA) image of the positive electrode active material of Example 1.

FIG. 31 is a frequency distribution graph illustrating a volume cumulative distribution that is obtained by measuring the positive electrode active material of Example 1 using a laser diffraction particle size analyzer, where an x value of the x-axis represents a particle diameter increasing from left to right on a linear scale, and a y value of the y-axis represents a weight distribution increasing from bottom to top.

FIG. 32 is a frequency distribution graph illustrating a volume cumulative distribution that is obtained by measuring the positive electrode active material of Example 2 using a laser diffraction particle size analyzer, where an x value of the x-axis represents a particle diameter increasing from left to right on a linear scale, and a y value of the y-axis represents a weight distribution increasing from bottom to top.

FIG. 33 is a frequency distribution graph illustrating a volume cumulative distribution that is obtained by measuring the positive electrode active material of Example 3 using a laser diffraction particle size analyzer, where an x value of the x-axis represents a particle diameter increasing from left to right on a linear scale, and a y value of the y-axis represents a weight distribution increasing from bottom to top.

FIG. 34 is a frequency distribution graph illustrating a volume cumulative distribution that is obtained by measuring the positive electrode active material of Example 4 using a laser diffraction particle size analyzer, where an x value of the x-axis represents a particle diameter increasing from left to right on a linear scale, and a y value of the y-axis represents a weight distribution increasing from bottom to top.

FIG. 35 is a frequency distribution graph illustrating a volume cumulative distribution that is obtained by measuring the positive electrode active material of Example 5 using a laser diffraction particle size analyzer, where an x value of the x-axis represents a particle diameter increasing from left to right on a linear scale, and a y value of the y-axis represents a weight distribution increasing from bottom to top.

FIG. 36 is a frequency distribution graph illustrating a volume cumulative distribution that is obtained by measuring the positive electrode active material of Example 6 using a laser diffraction particle size analyzer, where an x value of the x-axis represents a particle diameter increasing from left to right on a linear scale, and a y value of the y-axis represents a weight distribution increasing from bottom to top.

FIG. 37 is a frequency distribution graph illustrating a volume cumulative distribution that is obtained by measuring the positive electrode active material of Example 7 using a laser diffraction particle size analyzer, where an x value of the x-axis represents a particle diameter increasing from left to right on a linear scale, and a y value of the y-axis represents a weight distribution increasing from bottom to top.

FIG. 38 is a frequency distribution graph illustrating a volume cumulative distribution that is obtained by measuring the positive electrode active material of Example 8 using a laser diffraction particle size analyzer, where an x value of the x-axis represents a particle diameter increasing from left to right on a linear scale, and a y value of the y-axis represents a weight distribution increasing from bottom to top.

FIG. 39 is a frequency distribution graph illustrating a volume cumulative distribution that is obtained by measuring the positive electrode active material of Example 9 using a laser diffraction particle size analyzer, where an x value of the x-axis represents a particle diameter increasing from left to right on a linear scale, and a y value of the y-axis represents a weight distribution increasing from bottom to top.

FIG. 40 is a frequency distribution graph illustrating a volume cumulative distribution that is obtained by measuring the positive electrode active material of Example 10 using a laser diffraction particle size analyzer, where an x value of the x-axis represents a particle diameter increasing from left to right on a linear scale, and a y value of the y-axis represents a weight distribution increasing from bottom to top.

FIG. 41 is a frequency distribution graph illustrating a volume cumulative distribution that is obtained by measuring the positive electrode active material of Example 11 using a laser diffraction particle size analyzer, where an x value of the x-axis represents a particle diameter increasing from left to right on a linear scale, and a y value of the y-axis represents a weight distribution increasing from bottom to top.

FIG. 42 is a frequency distribution graph illustrating a volume cumulative distribution that is obtained by measuring the positive electrode active material of Comparative Example 1 using a laser diffraction particle size analyzer, where an x value of the x-axis represents a particle diameter increasing from left to right on a linear scale, and a y value of the y-axis represents a weight distribution increasing from bottom to top.

FIG. 43 is a frequency distribution graph illustrating a volume cumulative distribution that is obtained by measuring the positive electrode active material of Comparative Example 3 using a laser diffraction particle size analyzer, where an x value of the x-axis represents a particle diameter increasing from left to right on a linear scale, and a y value of the y-axis represents a weight distribution increasing from bottom to top.

FIG. 44 is a frequency distribution graph illustrating a volume cumulative distribution that is obtained by measuring the positive electrode active material of Example 1 using a laser diffraction particle size analyzer, where an x value of the x-axis represents a particle diameter increasing from left to right on a log scale, and a y value of the y-axis represents a weight distribution increasing from bottom to top.

FIG. 45 is a frequency distribution graph illustrating a volume cumulative distribution that is obtained by measuring the positive electrode active material of Example 2 using a laser diffraction particle size analyzer, where an x value of the x-axis represents a particle diameter increasing from left to right on a log scale, and a y value of the y-axis represents a weight distribution increasing from bottom to top.

FIG. 46 is a frequency distribution graph illustrating a volume cumulative distribution that is obtained by measuring the positive electrode active material of Example 3 using a laser diffraction particle size analyzer, where an x value of the x-axis represents a particle diameter increasing from left to right on a log scale, and a y value of the y-axis represents a weight distribution increasing from bottom to top.

FIG. 47 is a frequency distribution graph illustrating a volume cumulative distribution that is obtained by measuring the positive electrode active material of Example 4 using a laser diffraction particle size analyzer, where an x value of the x-axis represents a particle diameter increasing from left to right on a log scale, and a y value of the y-axis represents a weight distribution increasing from bottom to top.

FIG. 48 is a frequency distribution graph illustrating a volume cumulative distribution that is obtained by measuring the positive electrode active material of Example 5 using a laser diffraction particle size analyzer, where an x value of the x-axis represents a particle diameter increasing from left to right on a log scale, and a y value of the y-axis represents a weight distribution increasing from bottom to top.

FIG. 49 is a frequency distribution graph illustrating a volume cumulative distribution that is obtained by measuring the positive electrode active material of Example 6 using a laser diffraction particle size analyzer, where an x value of the x-axis represents a particle diameter increasing from left to right on a log scale, and a y value of the y-axis represents a weight distribution increasing from bottom to top.

FIG. 50 is a frequency distribution graph illustrating a volume cumulative distribution that is obtained by measuring the positive electrode active material of Example 7 using a laser diffraction particle size analyzer, where an x value of the x-axis represents a particle diameter increasing from left to right on a log scale, and a y value of the y-axis represents a weight distribution increasing from bottom to top.

FIG. 51 is a frequency distribution graph illustrating a volume cumulative distribution that is obtained by measuring the positive electrode active material of Example 8 using a laser diffraction particle size analyzer, where an x value of the x-axis represents a particle diameter increasing from left to right on a log scale, and a y value of the y-axis represents a weight distribution increasing from bottom to top.

FIG. 52 is a frequency distribution graph illustrating a volume cumulative distribution that is obtained by measuring the positive electrode active material of Example 9 using a laser diffraction particle size analyzer, where an x value of the x-axis represents a particle diameter increasing from left to right on a log scale, and a y value of the y-axis represents a weight distribution increasing from bottom to top.

FIG. 53 is a frequency distribution graph illustrating a volume cumulative distribution that is obtained by measuring the positive electrode active material of Example 10 using a laser diffraction particle size analyzer, where an x value of the x-axis represents a particle diameter increasing from left to right on a log scale, and a y value of the y-axis represents a weight distribution increasing from bottom to top.

FIG. 54 is a frequency distribution graph illustrating a volume cumulative distribution that is obtained by measuring the positive electrode active material of Example 11 using a laser diffraction particle size analyzer, where an x value of the x-axis represents a particle diameter increasing from left to right on a log scale, and a y value of the y-axis represents a weight distribution increasing from bottom to top.

FIG. 55 is a frequency distribution graph illustrating a volume cumulative distribution that is obtained by measuring the positive electrode active material of Comparative Example 1 using a laser diffraction particle size analyzer, where an x value of the x-axis represents a particle diameter increasing from left to right on a log scale, and a y value of the y-axis represents a weight distribution increasing from bottom to top.

FIG. 56 is a frequency distribution graph illustrating a volume cumulative distribution that is obtained by measuring the positive electrode active material of Comparative Example 3 using a laser diffraction particle size analyzer, where an x value of the x-axis represents a particle diameter increasing from left to right on a log scale, and a y value of the y-axis represents a weight distribution increasing from bottom to top.

## BEST MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, the expression 'primary particle' denotes a smallest particle unit which is distinguished as one body when a cross section of a positive electrode active material is observed through a scanning electron microscope (SEM), wherein it may be composed of a single crystal or a plurality of crystallites.

In the present invention, the expression 'secondary particle' denotes a secondary structure formed by aggregation of a plurality of primary particles. An average particle diameter of the secondary particle may be measured using a particle size analyzer.

The expression "average particle diameter ($D_{50}$)" in the present invention denotes a particle diameter at 50% of cumulative distribution of volume according to the particle diameter. After dispersing measurement target powder in a dispersion medium, the dispersion medium is introduced into a commercial laser diffraction particle size measurement instrument (e.g., S3500 by Microtrac MRB), a particle size distribution is calculated by measuring a difference in diffraction patterns due to a particle size when particles pass through a laser beam, and the $D_{50}$ may be measured by calculating a particle diameter at 50% of the cumulative distribution of volume according to the particle diameter using the measurement instrument.

The expression 'long diameter of the primary particle' in the present invention refers to a length of the longest line segment when a line is drawn passing through two points of a primary particle boundary in the primary particle observed from an SEM image of a surface or cross section of the secondary particle.

The expression 'short diameter of the primary particle' in the present invention refers to a length of the shortest line segment when a line is drawn passing through two points of the primary particle boundary in the primary particle observed from the SEM image of the surface or cross section of the secondary particle.

Positive Electrode Active Material

The present invention provides a positive electrode active material.

According to an embodiment of the present invention, the positive electrode active material includes a secondary particle in which a plurality of primary particles are aggregated, wherein the plurality of primary particles may have an average particle size measured from an SEM image of 1.5 $\mu$m to 5.0 $\mu$m.

According to an embodiment of the present invention, the secondary particle is a secondary particle in which a plurality of primary particles are aggregated, wherein it may be a secondary particle in which at least two, as a specific example, at least three primary particles are aggregated.

According to an embodiment of the present invention, the average particle size measured from the SEM image of the plurality of primary particles may be 1.5 $\mu$m or more, 1.6 $\mu$m or more, 1.7 $\mu$m or more, 1.8 $\mu$m or more, 1.9 $\mu$m or more, 2.0 $\mu$m or more, 2.1 $\mu$m or more, 2.2 $\mu$m or more, 2.3 $\mu$m or more, 2.4 $\mu$m or more, or 2.5 $\mu$m or more, and also, may be 5.0 $\mu$m or less, 4.9 $\mu$m or less, 4.8 $\mu$m or less, 4.7 $\mu$m or less, 4.6 $\mu$m or less, 4.5 $\mu$m or less, 4.4 $\mu$m or less, 4.3 $\mu$m or less, 4.2 $\mu$m or less, 4.1 $\mu$m or less, 4.0 $\mu$m or less, 3.9 $\mu$m or less, 3.8 $\mu$m or less, 3.7 $\mu$m or less, 3.6 $\mu$m or less, 3.5 $\mu$m or less, 3.4 $\mu$m or less, 3.3 $\mu$m or less, 3.2 $\mu$m or less, 3.1 $\mu$m or less, or 3.0 $\mu$m or less. Herein, when the average particle size of the plurality of primary particles is measured from the SEM image, the particle size of each primary particle may be a particle size based on a long diameter of the primary particle. Within this range, lifetime of a lithium secondary battery may be further improved while rolling density of the positive electrode active material is further improved.

According to an embodiment of the present invention, the positive electrode active material may include a lithium transition metal composite oxide containing nickel, cobalt, and manganese. As a specific example, the positive electrode active material may include a lithium transition metal composite oxide containing 60 mol% or more of nickel among total transition metals. The lithium transition metal composite oxide may be a primary particle, a secondary particle, and the positive electrode active material itself including them, and, as a specific example, the positive electrode active material may include a secondary particle in which a plurality of primary particles formed of lithium transition metal composite oxide are aggregated.

According to an embodiment of the present invention, the positive electrode active material may include a lithium transition metal composite oxide having an average composition represented by Formula 1 below.

$$[\text{Formula 1}] \qquad \text{Li}_x\text{Ni}_a\text{Co}_b\text{Mn}_c\text{M}^1_d\text{O}_2$$

In Formula 1, $M^1$ is at least one selected from the group consisting of aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), vanadium (V), fluorine (F), phosphorus (P), sulfur (S), and yttrium (Y), and $0.9 \leq x \leq 1.3$, $0.6 \leq a < 1.0$, $0 < b < 0.4$, $0 < c < 0.4$, $0 \leq d \leq 0.2$, and $a+b+c+d=1$.

According to an embodiment of the present invention, in Formula 1, x is a molar ratio of lithium to transition metals in the lithium transition metal composite oxide, wherein x may be 0.9 or more, 0.95 or more, or 1.0 or more, and also, may be 1.1 or less, 1.07 or less, 1.05 or less, or 1.03 or less.

According to an embodiment of the present invention, in Formula 1, a, b, c, and d may be mole fractions of nickel (Ni), cobalt (Co), manganese (Mn), and a doping element ($M^1$) among the transition metals, respectively. As a specific example, a is the mole fraction of the nickel (Ni) among the transition metals, wherein a may be 0.6 or more, 0.7 or more, 0.8 or more, 0.85 or more, 0.88 or more, 0.90 or more, 0.91 or more, 0.92 or more, 0.93 or more, 0.94 or more, 0.95 or more, or 0.96 or more, and also, may be less than 1.0, 0.99 or less, 0.98 or less, 0.97 or less, or 0.96 or less. Also, b is the mole fraction of the cobalt (Co) among the transition metals, wherein b may be greater than 0, 0.01 or more, 0.02 or more, or 0.03 or more, and also, may be less than 0.4, 0.3 or less, 0.2 or less, 0.1 or less, 0.09 or less, 0.08 or less, 0.07 or less, 0.06 or less, or 0.05 or less. c is the mole fraction of the manganese (Mn) among the transition metals, wherein c may be greater than 0, 0.01 or more, or 0.05 or more, and also, may be less than 0.4, 0.3 or less, 0.2 or less, 0.1 or less, 0.09 or less, 0.08 or less, 0.07 or less, 0.06 or less, or 0.05 or less. d is the mole fraction of the doping element ($M^1$) among the transition metals, wherein d may be 0, 0.01 or more, 0.02 or more, 0.03 or more, 0.04 or more, 0.05 or more, 0.06 or more, 0.07 or more, 0.08 or more, 0.09 or more, 0.10 or more, 0.11 or more, 0.12 or more, 0.13 or more, 0.14 or more, 0.15 or more, 0.16 or more, 0.17 or more, 0.18 or more, or 0.19 or more, and also, may be less than 0.20, 0.19 or less, 0.18 or less, 0.17 or less, 0.16 or less, 0.15 or less, 0.14 or less, 0.13 or less, 0.12 or less, 0.11 or less, 0.10 or less, 0.09 or less, 0.08 or less, 0.07 or less, 0.06 or less, 0.05 or less, 0.04 or less, 0.03 or less, 0.02 or less, or 0.01 or less. In a case in which the composition of the lithium transition metal composite oxide is adjusted as above, capacity may be further improved.

According to an embodiment of the present invention, the plurality of primary particles may include a single crystal primary particle, and, in this case, the rolling density of the positive electrode active material may be further improved. The single crystal primary particle means a primary particle composed of a single crystal.

According to an embodiment of the present invention, the secondary particle may have an average particle diameter ($D_{50}$) according to a volume cumulative distribution measured using a laser diffraction particle size analyzer of 7.0 $\mu$m to 20.0 $\mu$m. As a specific example, the average particle diameter ($D_{50}$) of the secondary particle may be 7.0 $\mu$m or more, 7.1 $\mu$m or more, 7.2 $\mu$m or more, 7.3 $\mu$m or more, 7.4 $\mu$m or more, 7.5 $\mu$m or more, 7.6 $\mu$m or more, 7.7 $\mu$m or more, 7.8 $\mu$m or more, 7.9 $\mu$m or more, 8.0 $\mu$m or more, 8.1 $\mu$m or more, 8.2 $\mu$m or more, 8.3 $\mu$m or more, 8.4 $\mu$m or more, 8.5 $\mu$m or more, 8.6 $\mu$m or more, 8.7 $\mu$m or more, 8.8 $\mu$m or more, 8.9 $\mu$m or more, or 9.0 $\mu$m or more, and also, may be 20.0 $\mu$m or less, 19.9 $\mu$m or less, 19.8 $\mu$m or less, 19.7 $\mu$m or less, 19.6 $\mu$m or less, 19.5 $\mu$m or less, 19.4 $\mu$m or less, 19.3 $\mu$m or less, 19.2 $\mu$m or less, 19.1 $\mu$m or less, 19.0 $\mu$m or less, 18.9 $\mu$m or less, 18.8 $\mu$m or less, 18.7 $\mu$m or less, 18.6 $\mu$m or less, 18.5 $\mu$m or less, 18.4 $\mu$m or less, 18.3 $\mu$m or less, 18.2 $\mu$m or less, 18.1 $\mu$m or less, 18.0 $\mu$m or less, 17.9 $\mu$m or less, 17.8 $\mu$m or less, 17.7 $\mu$m or less, 17.6 $\mu$m or less, 17.5 $\mu$m or less, 17.4 $\mu$m or less, 17.3 $\mu$m or less, 17.2 $\mu$m or less, 17.1 $\mu$m or less,

17.0 $\mu$m or less, 16.9 $\mu$m or less, 16.8 $\mu$m or less, 16.7 $\mu$m or less, 16.6 $\mu$m or less, 16.5 $\mu$m or less, 16.4 $\mu$m or less, 16.3 $\mu$m or less, 16.2 $\mu$m or less, 16.1 $\mu$m or less, 16.0 $\mu$m or less, 15.9 $\mu$m or less, 15.8 $\mu$m or less, 15.7 $\mu$m or less, 15.6 $\mu$m or less, 15.5 $\mu$m or less, 15.4 $\mu$m or less, 15.3 $\mu$m or less, 15.2 $\mu$m or less, 15.1 $\mu$m or less, or 15.0 $\mu$m or less. The rolling density of the positive electrode active material may be further improved within this range, and the lifetime may be further improved.

As a specific example, while the positive electrode active material is a high nickel positive electrode active material which includes the lithium transition metal composite oxide containing 60 mol% or more of the nickel among the total transition metal, the plurality of primary particles may include a primary particle having a particle size same as a conventional single particle of 0.5 $\mu$m to 5.0 $\mu$m, specifically, a micron-level primary particle of 1.0 $\mu$m or more, and more specifically, a large-diameter secondary particle having an average particle diameter ($D_{50}$) of 7.0 $\mu$m to 20.0 $\mu$m which is formed by aggregation of a plurality of primary particles having an average particle size measured from an SEM image of 2.0 $\mu$m to 3.5 $\mu$m, and in the sense that the primary particles in the form of a single particle are aggregated to form the large particle in the form of a secondary particle, it may be expressed as a large single particle cluster.

As previously described in the background art of the present invention, in order to prepare a positive electrode active material in the form of a secondary particle in which a diameter of a primary particle is at a micron level, it is necessary to perform a heat treatment at a higher temperature than a secondary particle in which a diameter of a primary particle is at a submicron level of less than 1 $\mu$m. However, since a layered structure of lithium transition metal composite oxide is degenerated into a rock salt structure as the heat treatment temperature is increased, this causes a decrease in crystallinity, and this in turn becomes a cause of degrading performance of the positive electrode active material. Particularly, since nickel is most susceptible to the degeneration of the layered structure of the lithium transition metal composite oxide into the rock salt structure at the high heat treatment temperature, the degeneration is further intensified when an amount of the nickel in the lithium transition metal composite oxide constituting the positive electrode active material is increased. Thus, conventionally, the positive electrode active material in the form of a secondary particle, in which the diameter of the primary particle is at a micron level, may only be applied to a mid nickel (mid Ni) positive electrode active material in which an amount of nickel among transition metals of lithium transition metal composite oxide is about 50 mol%, and it was not possible to prepare the positive electrode active material in the form of a secondary particle, in which the diameter of the primary particle is at a micron level, for a high nickel (high Ni) positive electrode active material having excellent capacity characteristics due to a large amount of the nickel among the transition metals of the lithium transition metal composite oxide.

However, since the positive electrode active material of the present invention has a large amount of the nickel among the transition metals of the lithium transition metal composite oxide, it recovers the layered structure from the rock salt structure even if the layered structure of the lithium transition metal composite oxide is degenerated into the rock salt structure at a high heat treatment temperature, and thus, the previously mentioned problem was solved. Specifically, the positive electrode active material of the present invention, unlike the conventional mid nickel positive electrode active material, is a high nickel positive electrode active material which includes the lithium transition metal composite oxide containing 60 mol% or more of the nickel among the total transition metals, wherein since it recovers the layered structure from the rock salt structure formed by the high heat treatment temperature while including the secondary particle in which the diameter of the primary particle is at a micron level, the crystallinity of the lithium transition metal composite oxide is excellent, and thus, it may simultaneously solve a problem of a conventional secondary particle and a problem of a single particle. The positive electrode active material of the present invention may be prepared by recovering the layered structure from the rock salt structure formed by the high heat treatment temperature as described above, and a method of recovering the layered structure from the rock salt structure is not limited, but, according to an embodiment of the present invention, the method of recovering the layered structure from the rock salt structure may be performing cobalt (Co) coating on the lithium transition metal composite oxide which includes the rock salt structure formed by the high heat treatment temperature.

According to an embodiment of the present invention, the plurality of primary particles may include a disk-type primary particle, and, as a specific example, may include three or more disk-type primary particles, and, in this case, lifetime and energy density of a cell are excellent.

According to an embodiment of the present invention, in a primary particle observed from an SEM image of a surface or cross section of a secondary particle, when an imaginary tangent line with the most contact points is drawn to each of two boundary lines of the primary particle present within an angle of 45° or less based on a long diameter direction and one imaginary line crossing the two tangent lines is drawn, the disk-type primary particle may mean one in which interior angles of same side are in a range of 150° to 210°, a short diameter of the primary particle is 0.3 $\mu$m or more, and an aspect ratio (long diameter/short diameter) is 1.5 or more. As a specific example, the disk-type primary particle may have a short diameter of the primary particle of 0.3 $\mu$m or more, 0.4 $\mu$m or more, 0.5 $\mu$m or more, 0.6 $\mu$m or more, 0.7 $\mu$m or more, 0.8 $\mu$m or more, 0.9 $\mu$m or more, or 1.0 $\mu$m or more. Herein, in a case in which the short diameter of the disk-type primary particle is 0.3 $\mu$m or more and the aspect ratio (long diameter/short diameter) is 1.5 or more, an area ratio of a (003) plane to crystal planes of a surface portion of the primary particle may be the largest.

According to an embodiment of the present invention, in a primary particle observed from an SEM image of a surface or cross section of a secondary particle, when an imaginary tangent line with the most contact points is drawn to each of two boundary lines of the primary particle present within an angle of 45° or less based on a long diameter direction and one imaginary line crossing the two tangent lines is drawn, the disk-type primary particle may mean one in which interior angles of same side are in a range of 150° to 210° and an area ratio of a (003) plane to crystal planes of a surface portion of the primary particle is the largest. Herein, in a case in which the area ratio of the (003) plane to the crystal planes of the surface portion of the disk-type primary particle is the largest, the primary particle may have a short diameter of 0.3 $\mu$m or more and an aspect ratio (long diameter/short diameter) of 1.5 or more. That is, that the area ratio of the (003) plane to the crystal planes of the surface portion of the disk-type primary particle is the largest may be confirmed from the fact that the short diameter of the primary particle is 0.3 $\mu$m or more and the aspect ratio (long diameter/short diameter) is 1.5 or more.

As a specific example, the positive electrode active material includes a secondary particle in which a plurality of primary particles are aggregated, wherein the plurality of primary particles have an average particle size measured from an SEM image of 1.5 $\mu$m to 5.0 $\mu$m, the particle size of the primary particle is a particle size based on a long diameter of the primary particle, and the plurality of primary particles include a disk-type primary particle, wherein, in the primary particle observed from the SEM image of the surface or cross section of the secondary particle, when the imaginary tangent line with the most contact points is drawn to each of the two boundary lines of the primary particle present within an angle of 45° or less based on the long diameter direction and one imaginary line crossing the two tangent lines is drawn, the disk-type primary particle may be one in which the interior angles of same side are in a range of 150° to 210° and the area ratio of the (003) plane to the crystal planes of the surface portion of the disk-type primary particle is the largest.

According to an embodiment of the present invention, in a frequency distribution graph illustrating a volume cumulative distribution measured using a laser diffraction particle size analyzer, where an x value of an x-axis represents a particle diameter increasing from left to right on a log scale, and a y value of a y-axis represents a weight distribution increasing from bottom to top, when a triangle is drawn with a peak point at an uppermost end of the y-axis of a peak appearing at a mode; and two contact points of a frequency distribution curve which are tangent at a full width at half maximum (FWHM) of the mode, the positive electrode active material may have a difference ($\theta_L - \theta_R$) between an internal angle ($\theta_L$) at a left contact point and an internal angle ($\theta_R$) at a right contact point of the two contact points of the frequency distribution curve, which are tangent at the full width at half maximum, of 6 to 20. As a specific example, the difference ($\theta_L - \theta_R$) between the internal angle ($\theta_L$) at the left contact point and the internal angle ($\theta_R$) at the right contact point may be 6 or more, 7 or more, 8 or more, 9 or more, 10 or more, 11 or more, 12 or more, 13 or more, or 14 or more, and also, may be 20 or less, 19 or less, 18 or less, 17 or less, 16 or less, or 15 or less. The positive electrode active material may have a ratio ($\theta_L/\theta_R$) of the internal angle at the left contact point to the internal angle at the right contact point of 1.100 to 2.000. As a specific example, the ratio ($\theta_L/\theta_R$) of the internal angle at the left contact point to the internal angle at the right contact point may be 1.100 or more, 1.110 or more, 1.120 or more, 1.130 or more, 1.140 or more, 1.150 or more, 1.160 or more, 1.170 or more, 1.180 or more, 1.190 or more, 1.200 or more, 1.210 or more, 1.220 or more, 1.230 or more, 1.240 or more, 1.250 or more, 1.260 or more, 1.270 or more, 1.280 or more, 1.290 or more, 1.300 or more, 1.310 or more, 1.320 or more, 1.330 or more, 1.340 or more, 1.350 or more, 1.360 or more, 1.370 or more, 1.380 or more, 1.390 or more, 1.400 or more, 1.410 or more, 1.420 or more, 1.430 or more, or 1.440 or more, and also, may be 1.450 or less, 1.460 or less, 1.470 or less, 1.480 or less, 1.490 or less, 1.500 or less, 1.550 or less, 1.600 or less, 1.650 or less, 1.700 or less, 1.750 or less, 1.800 or less, 1.850 or less, 1.900 or less, 1.950 or less, or 2.000 or less. Herein, the frequency distribution graph may be a unimodal distribution graph.

According to an embodiment of the present invention, in a frequency distribution graph illustrating a volume cumulative distribution measured using a laser diffraction particle size analyzer, where an x value of an x-axis represents a particle diameter increasing from left to right on a linear scale, and a y value of a y-axis represents a weight distribution increasing from bottom to top, the positive electrode active material may exhibit positive skewness. Herein, the frequency distribution graph may be a unimodal distribution graph.

According to an embodiment of the present invention, the positive electrode active material may have a ratio ($S/P_{MODE}$) of a skewness value (S) to a y value ($P_{MODE}$) of the peak point at the uppermost end of the y-axis of the peak appearing at the mode according to the volume cumulative distribution of 0.037 to 0.150. As a specific example, the ratio ($S/P_{MODE}$) of the skewness value (S) to the y value ($P_{MODE}$) of the peak point at the uppermost end of the y-axis of the peak appearing at the mode according to the volume cumulative distribution of the positive electrode active material may be 0.037 or more, 0.038 or more, 0.039 or more, 0.040 or more, 0.041 or more, 0.042 or more, 0.043 or more, 0.044 or more, 0.045 or more, 0.046 or more, 0.047 or more, 0.048 or more, 0.049 or more, 0.050 or more, 0.051 or more, 0.052 or more, 0.053 or more, 0.054 or more, 0.055 or more, 0.056 or more, 0.057 or more, 0.058 or more, 0.059 or more, 0.060 or more, 0.061 or more, 0.062 or more, 0.063 or more, 0.064 or more, 0.065 or more, 0.066 or more, 0.067 or more, 0.068 or more, 0.069 more, 0.070 or more, 0.071 or more, 0.072 or more, 0.073 or more, 0.074 or more, 0.075 or more, 0.076 or more, 0.077 or more, 0.078 or more, 0.079 or more, 0.080 or more, 0.081 or more, 0.082 or more, 0.083 or more, 0.083 or more, 0.084 or more, 0.085 or more, 0.086 or more, 0.087 or more, 0.088 or more, 0.089 or more, 0.090 or more, 0.091 or more, 0.092 or more, 0.093 or more, 0.094 or more, 0.095 or more, 0.096 or more, 0.097 or more, 0.098 or more, 0.099 or more, or 0.100 or more, and may be 0.150 or less, 0.140 or less, 0.130 or less, 0.120 or less, or 0.110 or less. Herein, the skewness value (S) may be calculated from Equation 3 below.

[Equation 3]

$$\text{Skewness value (S)} = 3 \times \frac{(\text{volume average particle diameter}) - (D_{50})}{\text{standard deviation of positive electrode active material particle diameter}}$$

According to an embodiment of the present invention, the positive electrode active material may have a Brunauer-Emmett-Teller (BET) specific surface area measured by nitrogen adsorption BET specific surface area analysis of 0.20 $m^2$/g to 0.35 $m^2$/g. As a specific example, the BET specific surface area measured by nitrogen adsorption BET specific surface area analysis of the positive electrode active material may be 0.20 $m^2$/g or more, 0.21 $m^2$/g or more, 0.22 $m^2$/g or more, 0.23 $m^2$/g or more, 0.24 $m^2$/g or more, 0.25 $m^2$/g or more, 0.26 $m^2$/g or more, 0.27 $m^2$/g or more, 0.28 $m^2$/g or more, 0.29 $m^2$/g or more, 0.30 $m^2$/g or more, or 0.31 $m^2$/g or more, and also, may be 0.35 $m^2$/g or less, or 0.34 $m^2$/g or less. Within this range, direct current resistance may be reduced and the rolling density may be improved.

According to an embodiment of the present invention, the positive electrode active material has an average particle diameter ($D_{50}$) according to the volume cumulative distribution, which is measured for the secondary particle using a laser diffraction particle size analyzer, of 7.0 $\mu$m to 20.0 $\mu$m, and, for a cross section of the secondary particle having a size within a range of the average particle diameter ($D_{50}$) of the secondary particle which is observed from an SEM image of the cross section of the secondary particle, the number of cross sections of the primary particles identified within a unit area of 5 $\mu$m width $\times$ 5 $\mu$m length in the cross section of the secondary particle may be in a range of 1 to 100.

According to an embodiment of the present invention, for the cross section of the secondary particle having a size within the range of the average particle diameter ($D_{50}$) of the secondary particle which is observed from the SEM image of the cross section of the secondary particle, the number of cross sections of the primary particles identified within a unit area of 5 $\mu$m width $\times$ 5 $\mu$m length in the cross section of the secondary particle means the number of cross sections of all primary particles, in which at least a portion of the cross section of the primary particle is included, in addition to the primary particle in which the entire cross section of the primary particle is included, identified within the unit area. Also, the unit area of 5 $\mu$m width $\times$ 5 $\mu$m length in the cross section of the secondary particle is a unit area at a random point in the cross section of the secondary particle, wherein a position is not limited as long as it is in the cross section of the secondary particle.

According to an embodiment of the present invention, for the cross section of the secondary particle having a size within the range of the average particle diameter ($D_{50}$) of the secondary particle which is observed from the SEM image of the cross section of the secondary particle, the number of cross sections of the primary particles identified within a unit area of 5 $\mu$m width $\times$ 5 $\mu$m length in the cross section of the secondary particle of the positive electrode active material may be in a range of 1 to 100, as a specific example, may be 1 or more, 2 or more, 3 or more, 4 or more, 5 or more, 6 or more, 7 or more, 8 or more, 9 or more, or 10 or more, and also, may be 100 or less, 95 or less, 90 or less, 85 or less, 80 or less, 75 or less, 70 or less, 65 or less, 60 or less, 55 or less, 50 or less, 45 or less, 40 or less, 35 or less, 30 or less, or 25 or less. In a case in which the above range is satisfied, the positive electrode active material may indicate that the plurality of primary particles include a primary particle having a particle size same as the conventional single particle of 0.5 $\mu$m to 5.0 $\mu$m, specifically, a micron-level primary particle of 1.0 $\mu$m or more, and more specifically, a large-diameter secondary particle having an average particle diameter ($D_{50}$) of 7.0 $\mu$m to 20.0 $\mu$m which is formed by aggregation of a plurality of primary particles having an average particle size measured from an SEM image of 2.0 $\mu$m to 3.5 $\mu$m.

According to an embodiment of the present invention, the positive electrode active material has an average particle diameter ($D_{50}$) according to the volume cumulative distribution, which is measured for the secondary particle using a laser diffraction particle size analyzer, of 7.0 $\mu$m to 20.0 $\mu$m, and, for a cross section of the secondary particle having a size within a range of the average particle diameter ($D_{50}$) of the secondary particle which is observed from an electron backscatter diffraction (EBSD) pattern (measured under the following conditions: accelerating voltage 20 kV, WD 16 mm, measurement magnification 5,000 times (16 $\mu$m width $\times$ 16 $\mu$m height), and step size 0.025 $\mu$m) of an SEM image of the cross section of the secondary particle, the number of cross sections of grains identified within a unit area of 5 $\mu$m width $\times$ 5 $\mu$m length in the cross section of the secondary particle may be in a range of 1 to 150.

According to an embodiment of the present invention, for the cross section of the secondary particle having a size within the range of the average particle diameter ($D_{50}$) of the secondary particle which is observed from the electron backscatter diffraction (EBSD) pattern (measured under the following conditions: accelerating voltage 20 kV, WD 16 mm, measurement magnification 5,000 times (16 $\mu$m width $\times$ 16 $\mu$m height), and step size 0.025 $\mu$m) of the SEM image of the cross section of the secondary particle, the number of cross sections of grains identified within a unit area of 5 $\mu$m width $\times$ 5

μm length in the cross section of the secondary particle means the number of cross sections of all grains, in which at least a portion of the cross section of the grain is included, in addition to the grains in which the entire cross section of the grain is included, identified within the unit area. Also, the unit area of 5 μm width × 5 μm length in the cross section of the secondary particle is a unit area at a random point in the cross section of the secondary particle, wherein a position is not limited as long as it is in the cross section of the secondary particle.

According to an embodiment of the present invention, for the cross section of the secondary particle having a size within the range of the average particle diameter ($D_{50}$) of the secondary particle which is observed from the electron backscatter diffraction (EBSD) pattern (measured under the following conditions: accelerating voltage 20 kV, WD 16 mm, measurement magnification 5,000 times (16 μm width × 16 μm height), and step size 0.025 μm) of the SEM image of the cross section of the secondary particle, the number of cross sections of the grains identified within a unit area of 5 μm width × 5 μm length in the cross section of the secondary particle of the positive electrode active material may be in a range of 1 to 150, as a specific example, may be 1 or more, 2 or more, 3 or more, 4 or more, 5 or more, 6 or more, 7 or more, 8 or more, or 9 or more, and also, may be 150 or less, 145 or less, 140 or less, 135 or less, 130 or less, 125 or less, 120 or less, 115 or less, 110 or less, 105 or less, 100 or less, 95 or less, 90 or less, 85 or less, 80 or less, 75 or less, 70 or less, 65 or less, 60 or less, 55 or less, 50 or less, 45 or less, 40 or less, 35 or less, 30 or less, 25 or less, or 20 or less. In a case in which the above range is satisfied, the positive electrode active material may indicate that the plurality of primary particles include a primary particle having a particle size same as the conventional single particle of 0.5 μm to 5.0 μm, specifically, a micron-level primary particle of 1.0 μm or more, and more specifically, a large-diameter secondary particle having an average particle diameter ($D_{50}$) of 7.0 μm to 20.0 μm which is formed by aggregation of a plurality of primary particles having an average particle size measured from an SEM image of 2.0 μm to 3.5 μm.

According to an embodiment of the present invention, the positive electrode active material may have a degree of single-crystal formation, which is calculated from Equation 1 below, of 0.15 μm$^3$ or more.

$$[\text{Equation 1}]$$

$$\text{Degree of single-crystal formation} = \frac{\sum_1^n \frac{4\pi}{3} \times \text{radius(grain)}^3}{n}$$

In Equation 1, for a cross section of a grain with a cross-sectional area of 0.196 μm$^2$ or more among the cross sections of all grains which may be identified in the cross section of the secondary particle having a size within the range of the average particle diameter ($D_{50}$) of the secondary particle which is observed from the electron backscatter diffraction (EBSD) pattern (measured under the following conditions: accelerating voltage 20 kV, WD 16 mm, measurement magnification 5,000 times (16 μm width × 16 μm height), and step size 0.025 μm) of the SEM image of the cross section of the secondary particle, radius (grain) is a radius of the cross section of the grain when assuming that the cross section of the grain is circular, and n is the number of grains.

According to an embodiment of the present invention, the positive electrode active material may have a degree of single-crystal formation, which is calculated from Equation 1, of 0.15 μm$^3$ to 12.70 μm$^3$. As a specific example, the degree of single-crystal formation, which is calculated from Equation 1, of the positive electrode active material may be 0.15 μm$^3$ or more, 0.20 μm$^3$ or more, 0.25 μm$^3$ or more, 0.30 μm$^3$ or more, 0.35 μm$^3$ or more, 0.40 μm$^3$ or more, 0.45 μm$^3$ or more, 0.50 μm$^3$ or more, 0.55 μm$^3$ or more, 0.60 μm$^3$ or more, 0.65 μm$^3$ or more, 0.70 μm$^3$ or more, 0.75 μm$^3$ or more, 0.80 μm$^3$ or more, 0.85 μm$^3$ or more, 0.90 μm$^3$ or more, 0.95 μm$^3$ or more, 1.00 μm$^3$ or more, or 1.05 μm$^3$ or more, and, also, an upper limit thereof is not particularly limited, but may be 20.00 μm$^3$ or less, 19.00 μm$^3$ or less, 18.00 μm$^3$ or less, 17.00 μm$^3$ or less, 16.00 μm$^3$ or less, 15.00 μm$^3$ or less, 14.00 μm$^3$ or less, 13.00 μm$^3$ or less, or 12.70 μm$^3$ or less.

According to an embodiment of the present invention, the positive electrode active material may include a lithium transition metal composite oxide containing aluminum (Al), yttrium (Y), and zirconium (Zr). As a specific example, the positive electrode active material may include aluminum (Al), yttrium (Y), and zirconium (Zr) as doping elements.

According to an embodiment of the present invention, the aluminum (Al) may be included in an amount of 500 ppm to 3,000 ppm based on a total weight of the lithium transition metal composite oxide. As a specific example, the aluminum (Al) may be included in an amount of 500 ppm or more, 1,000 ppm or more, or 1,500 ppm or more based on the total weight of the lithium transition metal composite oxide, and also, may be included in an amount of 3,000 ppm or less, 2,500 ppm or less, or 2,000 ppm or less.

According to an embodiment of the present invention, the yttrium (Y) may be included in an amount of 100 ppm to 2,000 ppm based on the total weight of the lithium transition metal composite oxide. As a specific example, the yttrium (Y) may be included in an amount of 100 ppm or more, 200 ppm or more, 300 ppm or more, 400 ppm or more, or 500 ppm or more based on the total weight of the lithium transition metal composite oxide, and also, may be included in an amount of 2,000 ppm or less, 1,900 ppm or less, 1,800 ppm or less, 1,700 ppm or less, 1,600 ppm or less, or 1,500 ppm or less.

According to an embodiment of the present invention, the zirconium (Zr) may be included in an amount of 500 ppm to 5,000 ppm based on the total weight of the lithium transition metal composite oxide. As a specific example, the zirconium (Zr) may be included in an amount of 500 ppm or more, 1,000 ppm or more, or 1,500 ppm or more based on the total weight of the lithium transition metal composite oxide, and also, may be included in an amount of 5,000 ppm or less, 4,500 ppm or less, 4,000 ppm or less, 3,500 ppm or less, or 3,000 ppm or less.

According to an embodiment of the present invention, the positive electrode active material may include a lithium transition metal composite oxide having an average composition represented by Formula 2 below.

$$[Formula\ 2] \qquad Li_x[Ni_aCo_bMn_cAl_eY_fZr_gM^2_d]O_{2-y}A_y$$

In Formula 2, $M^2$ is at least one selected from the group consisting of B, W, Mo, Cr, Nb, Mg, Hf, Ta, La, Ti, Sr, Ba, Ce, V, F, P, and S, A is at least one selected from the group consisting of F, chlorine (Cl), bromine (Br), iodine (I), and S, and $0.9 \leq x \leq 1.3$, $0.6 \leq a < 1.0$, $0 < b < 0.4$, $0 < c < 0.4$, $0 \leq d \leq 0.2$, $0 < e \leq 0.01$, $0 < f \leq 0.0006$, $0 < g \leq 0.0005$, $a+b+c+d+e+f+g=1$, and $0 \leq y \leq 0.2$.

According to an embodiment of the present invention, in Formula 2, x is a molar ratio of lithium to transition metals in the lithium transition metal composite oxide, wherein x may be 0.9 or more, 0.95 or more, or 1.0 or more, and also, may be 1.1 or less, 1.07 or less, 1.05 or less, or 1.03 or less.

According to an embodiment of the present invention, in Formula 2, a, b, c, d, e, f, and g may be mole fractions of nickel (Ni), cobalt (Co), manganese (Mn), a doping element ($M^2$), aluminum (Al), yttrium (Y), and zirconium (Zr) among the transition metals, respectively. As a specific example, a is the mole fraction of the nickel (Ni) among the transition metals, wherein a may be 0.6 or more, 0.7 or more, 0.8 or more, 0.85 or more, 0.88 or more, 0.90 or more, 0.91 or more, 0.92 or more, 0.93 or more, 0.94 or more, 0.95 or more, or 0.96 or more, and also, may be less than 1.0, 0.99 or less, 0.98 or less, 0.97 or less, or 0.96 or less. Also, b is the mole fraction of the cobalt (Co) among the transition metals, wherein b may be greater than 0, 0.01 or more, 0.02 or more, or 0.03 or more, and also, may be less than 0.4, 0.3 or less, 0.2 or less, 0.1 or less, 0.09 or less, 0.08 or less, 0.07 or less, 0.06 or less, or 0.05 or less. c is the mole fraction of the manganese (Mn) among the transition metals, wherein c may be greater than 0, 0.01 or more, or 0.05 or more, and also, may be less than 0.4, 0.3 or less, 0.2 or less, 0.1 or less, 0.09 or less, 0.08 or less, 0.07 or less, 0.06 or less, or 0.05 or less. d is the mole fraction of the doping element ($M^2$) among the transition metals, wherein d may be 0, 0.01 or more, 0.02 or more, 0.03 or more, 0.04 or more, 0.05 or more, 0.06 or more, 0.07 or more, 0.08 or more, 0.09 or more, 0.10 or more, 0.11 or more, 0.12 or more, 0.13 or more, 0.14 or more, 0.15 or more, 0.16 or more, 0.17 or more, 0.18 or more, or 0.19 or more, and also, may be less than 0.20, 0.19 or less, 0.18 or less, 0.17 or less, 0.16 or less, 0.15 or less, 0.14 or less, 0.13 or less, 0.12 or less, 0.11 or less, 0.10 or less, 0.09 or less, 0.08 or less, 0.07 or less, 0.06 or less, 0.05 or less, 0.04 or less, 0.03 or less, 0.02 or less, or 0.01 or less. e is the mole fraction of the aluminum (Al) among the transition metals, wherein e may be greater than 0, 0.001 or more, 0.002 or more, 0.003 or more, 0.004 or more, or 0.005 or more, and also, may be 0.01 or less, 0.009 or less, or 0.008 or less. f is the mole fraction of the yttrium (Y) among the transition metals, wherein f may be greater than 0, 0.0001 or more, 0.0002 or more, or 0.0003 or more, and also, may be 0.0006 or less, 0.0005 or less, or 0.0004 or less. g is the mole fraction of the zirconium (Zr) among the transition metals, wherein g may be greater than 0, 0.0001 or more, or 0.0002 or more, and also, may be 0.0005 or less, or 0.0004 or less.

According to an embodiment of the present invention, in Formula 2, y is a molar ratio of an oxygen-substituted A element in the lithium transition metal composite oxide, wherein y may be 0, greater than 0, 0.01 or more, 0.02 or more, or 0.03 or more, and also, may be 0.2 or less, 0.15 or less, or 0.1 or less.

According to an embodiment of the present invention, the positive electrode active material may include a lithium transition metal composite oxide containing aluminum (Al), zirconium (Zr), and $M^3$. As a specific example, the positive electrode active material may include aluminum (Al), zirconium (Zr), and $M^3$ as doping elements.

According to an embodiment of the present invention, the $M^3$ may be a metallic element with an oxidation number of +4 or more. As a specific example, the $M^3$ may be at least one selected from the group consisting of titanium (Ti), tantalum (Ta), tungsten (W), vanadium (V), molybdenum (Mo), and niobium (Nb).

According to an embodiment of the present invention, the aluminum (Al) may be included in an amount of 500 ppm to 3,000 ppm based on a total weight of the lithium transition metal composite oxide. As a specific example, the aluminum (Al) may be included in an amount of 500 ppm or more, 1,000 ppm or more, or 1,500 ppm or more based on the total weight of the lithium transition metal composite oxide, and also, may be included in an amount of 3,000 ppm or less, 2,500 ppm or less, or 2,000 ppm or less.

According to an embodiment of the present invention, the zirconium (Zr) may be included in an amount of 500 ppm to 3,000 ppm based on the total weight of the lithium transition metal composite oxide. As a specific example, the zirconium (Zr) may be included in an amount of 500 ppm or more, 1,000 ppm or more, or 1,500 ppm or more based on the total weight of the lithium transition metal composite oxide, and also, may be included in an amount of 3,000 ppm or less, 2,500 ppm or less, or 2,000 ppm or less.

According to an embodiment of the present invention, the $M^3$ may be included in an amount of 100 ppm to 2,000 ppm based on the total weight of the lithium transition metal composite oxide. As a specific example, the $M^3$ may be included in an amount of 100 ppm or more, 200 ppm or more, 300 ppm or more, 400 ppm or more, or 500 ppm or more based on the total weight of the lithium transition metal composite oxide, and also, may be included in an amount of 2,000 ppm or less, 1,900 ppm or less, 1,800 ppm or less, 1,700 ppm or less, 1,600 ppm or less, or 1,500 ppm or less.

According to an embodiment of the present invention, the positive electrode active material includes a coating portion formed on at least one of a surface of the primary particle, an interface of the primary particle, and a surface of the secondary particle, wherein the coating portion may include at least one coating element selected from the group consisting of cobalt (Co) and boron (B).

According to an embodiment of the present invention, the coating portion may be an island-type coating portion formed on at least one of the surface of the primary particle, the interface of the primary particle, and the surface of the secondary particle.

According to an embodiment of the present invention, the coating portion may be a coating layer formed surrounding at least one of the surface of the primary particle, the interface of the primary particle, and the surface of the secondary particle.

According to an embodiment of the present invention, the coating portion may include at least one coating portion of a coating portion containing cobalt (Co), a coating portion containing cobalt (Co) and boron (B), and a coating portion containing boron (B).

According to an embodiment of the present invention, the coating portion may include a coating portion in which a coating portion containing cobalt (Co), a coating portion containing cobalt (Co) and boron (B), and a coating portion containing boron (B) are sequentially formed.

According to an embodiment of the present invention, the coating portion may include cobalt-boron oxide.

According to an embodiment of the present invention, when a pellet is formed by introducing the positive electrode active material into a cylindrical mold with a diameter of 13 mm and applying a force until the force reaches 9,000 kgf using an automatic pellet press, the positive electrode active material may have a rolling density calculated by the following Equation 2 of 3.60 g/cm$^3$ or more.

$$\text{Rolling density (g/cm}^3\text{)} = \text{positive electrode active material weight (g)/pellet volume (cm}^3\text{)} \qquad \text{[Equation 2]}$$

According to an embodiment of the present invention, the positive electrode active material may have a rolling density calculated by Equation 2 of 3.60 g/cm$^3$ or more, and, as a specific example, the rolling density may be 3.61 g/cm$^3$ or more, 3.62 g/cm$^3$ or more, 3.63 g/cm$^3$ or more, 3.64 g/cm$^3$ or more, 3.65 g/cm$^3$ or more, 3.66 g/cm$^3$, or more, 3.67 g/cm$^3$ or more, 3.68 g/cm$^3$ or more, 3.69 g/cm$^3$ or more, 3.70 g/cm$^3$ or more, or 3.71 g/cm$^3$ or more, and, an upper limit thereof is not particularly limited, but may be 10.0 g/cm$^3$ or less.

According to an embodiment of the present invention, for a lithium secondary battery which includes a positive electrode including the positive electrode active material; a negative electrode; a separator disposed between the positive electrode and the negative electrode; and an electrolyte, the positive electrode active material may have a discharge capacity, when the lithium secondary battery is charged at a current of 0.5 C and then discharged at a current of 1.0 C, of 92.0% or more based on discharge capacity when the lithium secondary battery is charged at a current of 0.5 C and then discharged at a current of 0.1 C. Herein, the lithium secondary battery is to check the discharge capacity according to output characteristics of the positive electrode active material, wherein a component other than the positive electrode active material is not particularly limited as long as it may be used in the lithium secondary battery. As a specific example, the positive electrode active material may have a discharge capacity, when the lithium secondary battery is charged at a current of 0.5 C and then discharged at a current of 1.0 C, of 92.0% or more, 92.1% or more, 92.2% or more, 92.3% or more, 92.4% or more, 92.5% or more, 92.6% or more, 92.7% or more, 92.8% or more, 92.9% or more, 93.0% or more, or 93.1% or more based on discharge capacity when the lithium secondary battery is charged at a current of 0.5 C and then discharged at a current of 0.1 C, and an upper limit thereof is not particularly limited, but may be 100% or less.

According to an embodiment of the present invention, for a lithium secondary battery which includes a positive electrode including the positive electrode active material; a negative electrode; a separator disposed between the positive electrode and the negative electrode; and an electrolyte, the positive electrode active material may have a discharge capacity, when the lithium secondary battery is charged at a current of 0.5 C and then discharged at a current of 2.0 C, of 89.0% or more based on discharge capacity when the lithium secondary battery is charged at a current of 0.5 C and then discharged at a current of 0.1 C. Herein, the lithium secondary battery is to check the discharge capacity according to output characteristics of the positive electrode active material, wherein a component other than the positive electrode active material is not particularly limited as long as it may be used in the lithium secondary battery. As a specific example, the positive electrode active material may have a discharge capacity, when the lithium secondary battery is charged at a current of 0.5 C and then discharged at a current of 2.0 C, of 89.0% or more, 89.1% or more, 89.2% or more, 89.3% or more, 89.4% or more, 89.5% or more, 89.6% or more, 89.7% or more, 89.8% or more, 89.9% or more, 90.0% or more, 90.1% or more, 90.2% or more, 90.3% or more, or 90.4% or more based on discharge capacity when the lithium secondary battery is charged at a current of 0.5 C and then discharged at a current of 0.1 C, and an upper limit thereof is not particularly limited, but may be 100% or less.

According to an embodiment of the present invention, when calculating a value of volume from Equation 5 below for each of the primary particles observed from an SEM image (measurement magnification 3,000 times) of the surface of the secondary particle, the positive electrode active material may have a degree of single-particle formation ($Dv_{50}$) corresponding to a diameter of volume at 50% of cumulative distribution of the volume of the primary particles of 1.2 μm to 3.8 μm.

[Equation 5]

$$Volume = \frac{4\pi}{3} \times radius^3$$

In Equation 5,

radius is a radius of a surface of the primary particle when assuming that the surface of the primary particle, which is observed from the SEM image (measurement magnification 3,000 times) of the surface of the secondary particle, is circular.

As a specific example, the degree of single-particle formation ($Dv_{50}$) of the positive electrode active material may be 1.2 μm or more, 1.3 μm or more, 1.4 μm or more, 1.5 μm or more, 1.6 μm or more, or 1.65 μm or more, and also, may be 3.8 μm or less, 3.7 μm or more, 3.6 μm or less, 3.59 μm or less, 3.58 μm or less, 3.57 μm or less, 3.56 μm or less, or 3.55 μm or less.

Method of Preparing Positive Electrode Active Material

The present invention provides a method of preparing a positive electrode active material.

According to an embodiment of the present invention, the method of preparing a positive electrode active material may be a method for preparing the above-described positive electrode active material.

According to an embodiment of the present invention, the method of preparing a positive electrode active material may be performed by including a step (S10) of mixing a positive electrode active material precursor containing nickel, cobalt, and manganese and a lithium raw material and sintering the mixture to prepare a sintered product.

According to an embodiment of the present invention, the step (S10) may be performed by a method such as a method of performing sintering by dividing a temperature section in one sintering step (one-step method), a method of performing two sintering steps separately (two-step method), and a method of performing pre-sintering (pre-sintering method) before performing sintering by dividing a temperature section in one sintering step.

According to an embodiment of the present invention, the one-step method is a method of continuously sintering in two temperature sections in one sintering step, wherein first-stage sintering is performed on the mixture of the positive electrode active material precursor and the lithium raw material, and immediately thereafter, second-stage sintering may be performed by changing the temperature section. In this case, the second-stage sintering may be performed at a lower temperature than the first-stage sintering, each sintering temperature may be adjusted depending on the amount of the nickel, and shape and size of the primary particle and the average particle diameter of the secondary particle may be adjusted through the temperature adjustment.

According to an embodiment of the present invention, the two-step method is a method of performing primary sintering and secondary sintering separately, wherein the method may be performed by performing the primary sintering on the mixture of the positive electrode active material precursor and the lithium raw material, and performing the secondary sintering on a ground product after grinding a first sintered product prepared by the primary sintering. In this case, the secondary sintering may be performed at a lower temperature than the primary sintering, each sintering temperature may be adjusted depending on the amount of the nickel, and the shape and size of the primary particle and the average particle diameter of the secondary particle may be adjusted through the temperature adjustment.

According to an embodiment of the present invention, the pre-sintering method is a method of performing pre-sintering prior to one-step sintering, wherein the pre-sintering is performed on the mixture of the positive electrode active material precursor and the lithium raw material, and the one-step method may be performed on a pre-sintered product. In this case, the pre-sintering may be performed at a lower temperature than the one-step sintering, each sintering temperature may be adjusted depending on the amount of the nickel, and the shape and size of the primary particle and the average particle diameter of the secondary particle may be adjusted through the temperature adjustment.

According to an embodiment of the present invention, the positive electrode active material precursor may contain 60 mol% or more of nickel among transition metals. As a specific example, the positive electrode active material precursor may be a transition metal hydroxide which contains nickel, cobalt, and manganese and contains 60 mol% or more of the nickel among the transition metals. As a specific example, the transition metal hydroxide may have an average composition represented by Formula 3 below.

[Formula 3] $\quad Ni_{a'}Co_{b'}Mn_{c'}(OH)_2$

In Formula 3, $0.6 \leq a' < 1.0$, $0 < b' < 0.4$, $0 < c' < 0.4$, and $a'+b'+c' = 1$.

According to an embodiment of the present invention, in Formula 3, a', b', and c' may be mole fractions of nickel (Ni), cobalt (Co), and manganese (Mn) among transition metals, respectively. As a specific example, a' is the mole fraction of the nickel (Ni) among the transition metals, wherein a' may be 0.6 or more, 0.7 or more, 0.8 or more, 0.85 or more, 0.88 or more, 0.90 or more, 0.91 or more, 0.92 or more, 0.93 or more, 0.94 or more, 0.95 or more, or 0.96 or more, and, also, may be less than 1.0, 0.99 or less, 0.98 or less, 0.97 or less, or 0.96 or less. Also, b' is the mole fraction of the cobalt (Co) among the transition metals, wherein b' may be greater than 0, 0.01 or more, 0.02 or more, or 0.03 or more, and, also, may be less than 0.4, 0.3 or less, 0.2 or less, 0.1 or less, 0.09 or less, 0.08 or less, 0.07 or less, 0.06 or less, or 0.05 or less. c' is the mole fraction of the manganese (Mn) among the transition metals, wherein c' may be greater than 0, 0.01 or more, or 0.05 or more, and, also, may be less than 0.4, 0.3 or less, 0.2 or less, 0.1 or less, 0.09 or less, 0.08 or less, 0.07 or less, 0.06 or less, or 0.05 or less.

According to an embodiment of the present invention, as the lithium raw material, lithium-containing sulfates, nitrates, acetic acid salts, carbonates, oxalates, citrates, halides, hydroxides, or oxyhydroxides may be used, and, for example, $Li_2CO_3$, $LiNO_3$, $LiNO_2$, LiOH, $LiOH \cdot H_2O$, LiH, LiF, LiCl, LiBr, LiI, $CH_3COOLi$, $Li_2O$, $Li_2SO_4$, $CH_3COOLi$, $Li_3C_6H_5O_7$, or a mixture thereof may be used.

According to an embodiment of the present invention, the step (S10) may be performed by further including at least one doping raw material selected from the group consisting of Al, Zr, B, W, Mo, Cr, Nb, Mg, Hf, Ta, La, Ti, Sr, Ba, Ce, F, P, S, and Y. The doping raw material may be acetic acid salts, nitrates, sulfates, halides, sulfides, hydroxides, oxides, or oxyhydroxides containing the above elements, and, as a specific example, the doping raw material may be $Al_2O_3$, $Al(OH)_3$, $Al(NO_3)_3 \cdot 9H_2O$, $Al_2(SO_4)_3$, $Y_2O_3$, or $ZrO_2$.

According to an embodiment of the present invention, the doping raw material may include Al, Y, and Zr. Also, the doping raw material may include Al, Zr, and a metallic element ($M^3$) with an oxidation number of +4 or more.

According to an embodiment of the present invention, during the mixing of the positive electrode active material precursor and the lithium raw material in the step (S10), a molar ratio (Li/M) of lithium (Li) of the lithium raw material to the transition metals (M) of the positive electrode active material precursor may be in a range of 0.9 to 1.3. As a specific example, the Li/M may be 0.9 or more, 0.95 or more, or 1.0 or more, and also, may be 1.1 or less, 1.07 or less, 1.05 or less, or 1.04 or less, and the Li/M may be adjusted depending on the amount of the nickel in the transition metals.

According to an embodiment of the present invention, the method of preparing a positive electrode active material may further include a step (S20) of coating the positive electrode active material prepared in the step (S10). As a specific example, the step (S20) may be performed by including at least one coating raw material selected from the group consisting of Co and B. Also, the step (S20) may be performed by further including an Al coating raw material.

According to an embodiment of the present invention, the coating of the step (S20) may be performed by simultaneously coating each coating raw material, or may be performed sequentially. As a specific example, the coating of the step (S20) may be performed by including a step (S21) of mixing the positive electrode active material with a Co coating raw material and an Al coating raw material and performing a heat treatment, and a step (S22) of mixing a coated product prepared in the step (S21) with a B coating raw material and performing a heat treatment.

According to an embodiment of the present invention, the Co coating raw material may be cobalt hydroxide such as $Co(OH)_2$, the Al coating raw material may be aluminum hydroxide such as $Al(OH)_3$, and the B coating raw material may be $H_3BO_3$.

According to an embodiment of the present invention, in performing the steps (S10) and (S20), the method of preparing a positive electrode active material may include a step of grinding the sintered product, if necessary, after the sintering, wherein the grinding may be performed using a grinding device without particular limitation as long as it may grind the positive electrode active material.

According to an embodiment of the present invention, the doping raw material and the coating raw material may be added and adjusted to satisfy a doping element content and a coating element content of the positive electrode active material described above.

Positive Electrode

The present invention provides a positive electrode including the positive electrode active material.

According to an embodiment of the present invention, the positive electrode may include a positive electrode collector and a positive electrode active material layer formed on the positive electrode collector, wherein the positive electrode active material layer may include the above positive electrode active material.

According to an embodiment of the present invention, the positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

According to an embodiment of the present invention, the positive electrode active material layer may optionally include a conductive agent and a binder in addition to the positive electrode active material, if necessary. In this case, the positive electrode active material may be included in an amount of 80 wt% to 99 wt%, for example, 85 wt% to 98.5 wt% based on a total weight of the positive electrode active material layer, and excellent capacity characteristics may be obtained within this range.

According to an embodiment of the present invention, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

According to an embodiment of the present invention, the binder improves the adhesion between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 0.1 wt% to 15 wt% based on the total weight of the positive electrode active material layer.

According to an embodiment of the present invention, the positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder and the conductive agent in a solvent, is coated on the positive electrode collector, and the positive electrode may then be prepared by drying and rolling the coated positive electrode collector, or the positive electrode may be prepared by casting the composition for forming a positive electrode active material layer on a separate support and then laminating a film separated from the support on the positive electrode collector.

According to an embodiment of the present invention, the solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of a slurry and manufacturing yield, and may allow to have a viscosity that may provide excellent thickness uniformity during the subsequent coating for the preparation of the positive electrode.

Lithium Secondary Battery

The present invention provides a lithium secondary battery including the positive electrode.

According to an embodiment of the present invention, the lithium secondary battery may include the positive electrode; a negative electrode; a separator disposed between the positive electrode and the negative electrode, and an electrolyte. Also, the lithium secondary battery may further optionally include a battery container accommodating an electrode assembly of the positive electrode, the negative electrode, and the separator, and a sealing member sealing the battery container.

According to an embodiment of the present invention, the negative electrode may include a negative electrode collector and a negative electrode active material layer disposed on the negative electrode collector.

According to an embodiment of the present invention, the negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 $\mu$m to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

According to an embodiment of the present invention, the negative electrode active material layer may optionally include a binder and a conductive agent in addition to the negative electrode active material.

According to an embodiment of the present invention, a compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes. The negative electrode active material may be included in an amount of 80 wt% to 99 wt% based on a total weight of the negative electrode active material layer.

According to an embodiment of the present invention, the binder of the negative electrode active material layer is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

According to an embodiment of the present invention, the conductive agent of the negative electrode active material layer is a component for further improving conductivity of the negative electrode active material, wherein the conductive agent may be added in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

According to an embodiment of the present invention, the negative electrode may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

According to an embodiment of the present invention, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

According to an embodiment of the present invention, the electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto. As a specific example, the electrolyte may include an organic solvent and a lithium salt.

According to an embodiment of the present invention, any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

According to an embodiment of the present invention, the lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

According to an embodiment of the present invention, in order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 5 wt% based on a total weight of the electrolyte.

Since the lithium secondary battery including the positive electrode active material according to the present invention stably exhibits excellent capacity characteristics, output characteristics, and life characteristics, the lithium secondary battery is suitable for portable devices, such as mobile phones, notebook computers, and digital cameras, and electric cars such as hybrid electric vehicles (HEVs) and electric vehicles (EVs).

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Thus, according to an embodiment of the present invention, a battery module including the lithium secondary battery as a unit cell and a battery pack including the battery module are provided.

According to an embodiment of the present invention, the battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

**MODE FOR CARRYING OUT THE INVENTION**

**Examples**

Hereinafter, the present invention will be described in more detail, according to examples. However, the following examples are merely presented to exemplify the present invention, and the scope of the present invention is not limited thereto.

**Example 1**

A transition metal composite hydroxide ($D_{50}$: 10.2 $\mu$m) having a composition represented by $Ni_{0.89}Co_{0.03}Mn_{0.08}$ $(OH)_2$ in a form of a secondary particle, which was formed by aggregation of tens to hundreds of primary particles, and LiOH were mixed such that a molar ratio (Li/(Ni+Co+Mn)) of lithium (Li) to transition metals (Ni+Co+Mn) was 1.04. Herein, a mixture was prepared by adding $Al(OH)_3$, $Y_2O_3$, and $ZrO_2$ in amounts of 1,470 ppm, 1,000 ppm, and 1,500 ppm, respectively, based on a total weight of the transition metal composite hydroxide and mixing them.

The mixture was sintered at 850°C for 6 hours and then at 800°C for 9 hours in an oxygen atmosphere to obtain a sintered product. The sintered product was ground at room temperature to prepare a lithium transition metal oxide which had an average particle diameter ($D_{50}$) of 9.8 $\mu$m, had a composition represented by $LiNi_{0.8833}Co_{0.0298}Mn_{0.0794}Al_{0.0050}Y_{0.0010}Zr_{0.0015}O_2$, and was in a form of a secondary particle in which primary particles were aggregated.

To the above-prepared lithium transition metal oxide in the form of a secondary particle, $Co(OH)_2$ was added such that a molar ratio (Co/(Ni+Co+Mn+Al+Y+Zr)) of cobalt (Co) to metals (Ni+Co+Mn+Al+Y+Zr) excluding lithium was 0.02 and $Al(OH)_3$ was added in an amount of 500 ppm based on a total weight of the above-prepared lithium transition metal oxide in the form of a secondary particle and uniformly mixed to prepare a mixture. The mixture was sintered at 740°C for 3 hours and then at 500°C for 3 hours in an oxygen atmosphere to obtain a first coated product. The first coated product was ground at room temperature such that an average particle diameter ($D_{50}$) was 10.2 $\mu$m to prepare a positive electrode active material in which a coating portion containing Co and Al was formed on the lithium transition metal oxide in the form of a secondary particle in which the primary particles were aggregated. A total composition of the positive electrode active material including the coating portion was $LiNi_{0.8641}Co_{0.0491}Mn_{0.0777}Al_{0.0066}Y_{0.0010}Zr_{0.0015}O_2$.

$H_3BO_3$ was added to the ground first coated product in an amount of 500 ppm based on a total weight of the ground first coated product and mixed to prepare a mixture. The mixture was heat-treated at 330°C for 5 hours in an air atmosphere to obtain a second coated product. The second coated product was ground at room temperature such that an average particle diameter ($D_{50}$) was 10.2 $\mu$m to prepare a positive electrode active material in which a coating portion containing Co, Al, and B was formed on the lithium transition metal oxide in the form of a secondary particle in which the primary particles were aggregated. A total composition of the positive electrode active material including the coating portion was $LiNi_{0.8602}Co_{0.0489}Mn_{0.0773}Al_{0.0066}Y_{0.0010}Zr_{0.0015}B_{0.0045}O_2$.

**Example 2**

A transition metal composite hydroxide ($D_{50}$: 10.2 $\mu$m) having a composition represented by $Ni_{0.89}Co_{0.03}Mn_{0.08}$ $(OH)_2$ in a form of a secondary particle, which was formed by aggregation of tens to hundreds of primary particles, and LiOH were mixed such that a molar ratio (Li/(Ni+Co+Mn)) of lithium (Li) to transition metals (Ni+Co+Mn) was 1.00. Herein, a mixture was prepared by adding $Al(OH)_3$, $Y_2O_3$, and $ZrO_2$ in amounts of 1,470 ppm, 1,000 ppm, and 1,500 ppm, respectively, based on a total weight of the transition metal composite hydroxide and mixing them.

The mixture was primarily sintered at 850°C for 6 hours in an oxygen atmosphere to obtain a first sintered product. Thereafter, the first sintered product was ground at room temperature such that an average particle diameter ($D_{50}$) was 9.8 $\mu$m.

The ground first sintered product and LiOH were mixed such that a molar ratio (Li/(Ni+Co+Mn)) of lithium (Li) to transition metals (Ni+Co+Mn) was 0.04, and secondarily sintered at 800°C for 9 hours in an oxygen atmosphere to obtain a second sintered product. The second sintered product was ground at room temperature to prepare a lithium transition metal oxide which had an average particle diameter ($D_{50}$) of 9.8 $\mu$m, had a composition represented by $LiNi_{0.8833}Co_{0.0298}Mn_{0.0794}Al_{0.0050}Y_{0.0010}Zr_{0.0015}O_2$, and was in a form of a secondary particle in which primary particles were aggregated.

To the above-prepared lithium transition metal oxide in the form of a secondary particle, $Co(OH)_2$ was added such that a molar ratio (Co/(Ni+Co+Mn+Al+Y+Zr)) of cobalt (Co) to metals (Ni+Co+Mn+Al+Y+Zr) excluding lithium was 0.02 and $Al(OH)_3$ was added in an amount of 500 ppm based on a total weight of the above-prepared lithium transition metal oxide in the form of a secondary particle and uniformly mixed to prepare a mixture. The mixture was sintered at 740°C for 3 hours and then at 500°C for 3 hours in an oxygen atmosphere to obtain a first coated product. The first coated product was ground at room temperature such that an average particle diameter ($D_{50}$) was 10.2 $\mu$m to prepare a positive electrode active material in which a coating portion containing Co and Al was formed on the lithium transition metal oxide in the form of a secondary particle in which the primary particles were aggregated. A total composition of the positive electrode active material including the coating portion was $LiNi_{0.8641}Co_{0.0491}Mn_{0.0777}Al_{0.0066}Y_{0.0010}Zr_{0.0015}O_2$.

$H_3BO_3$ was added to the ground first coated product in an amount of 500 ppm based on a total weight of the ground first coated product and mixed to prepare a mixture. The mixture was heat-treated at 330°C for 5 hours in an air atmosphere to obtain a second coated product. The second coated product was ground at room temperature such that an average particle diameter ($D_{50}$) was 10.2 $\mu$m to prepare a positive electrode active material in which a coating portion containing Co, Al, and B was formed on the lithium transition metal oxide in the form of a secondary particle in which the primary particles were aggregated. A total composition of the positive electrode active material including the coating portion was $LiNi_{0.8602}Co_{0.0489}Mn_{0.0773}Al_{0.0066}Y_{0.0010}Zr_{0.0015}B_{0.0045}O_2$.

**Example 3**

A transition metal composite hydroxide ($D_{50}$: 10.2 $\mu$m) having a composition represented by $Ni_{0.89}Co_{0.03}Mn_{0.08}$ $(OH)_2$ in a form of a secondary particle, which was formed by aggregation of tens to hundreds of primary particles, and LiOH were mixed such that a molar ratio (Li/(Ni+Co+Mn)) of lithium (Li) to transition metals (Ni+Co+Mn) was 1.04. Herein, a mixture was prepared by adding $Al(OH)_3$, $Y_2O_3$, and $ZrO_2$ in amounts of 1,470 ppm, 1,000 ppm, and 1,500 ppm, respectively, based on a total weight of the transition metal composite hydroxide and mixing them.

The mixture was pre-sintered at 550°C for 5 hours in an oxygen atmosphere to obtain a pre-sintered product. Thereafter, the pre-sintered product was ground at room temperature such that an average particle diameter ($D_{50}$) was 9.8 $\mu$m.

The ground pre-sintered product was sintered at 850°C for 6 hours and then at 800°C for 9 hours in an oxygen atmosphere to obtain a sintered product. The sintered product was ground at room temperature to prepare a lithium transition metal oxide which had an average particle diameter ($D_{50}$) of 9.8 $\mu$m, had a composition represented by $LiNi_{0.8833}Co_{0.0298}Mn_{0.0794}Al_{0.0050}Y_{0.0010}Zr_{0.0015}O_2$, and was in a form of a secondary particle in which primary particles were aggregated.

To the above-prepared lithium transition metal oxide in the form of a secondary particle, $Co(OH)_2$ was added such that a molar ratio (Co/(Ni+Co+Mn+Al+Y+Zr)) of cobalt (Co) to metals (Ni+Co+Mn+Al+Y+Zr) excluding lithium was 0.02 and $Al(OH)_3$ was added in an amount of 500 ppm based on a total weight of the above-prepared lithium transition metal oxide in the form of a secondary particle and uniformly mixed to prepare a mixture. The mixture was sintered at 740°C for 3 hours and then at 500°C for 3 hours in an oxygen atmosphere to obtain a first coated product. The first coated product was ground at room temperature such that an average particle diameter ($D_{50}$) was 10.2 $\mu$m to prepare a positive electrode active material in which a coating portion containing Co and Al was formed on the lithium transition metal oxide in the form of a secondary particle in which the primary particles were aggregated. A total composition of the positive electrode active material including the coating portion was $LiNi_{0.8641}Co_{0.0491}Mn_{0.0777}Al_{0.0066}Y_{0.0010}Zr_{0.0015}O_2$.

$H_3BO_3$ was added to the ground first coated product in an amount of 500 ppm based on a total weight of the ground first coated product and mixed to prepare a mixture. The mixture was heat-treated at 330°C for 5 hours in an air atmosphere to obtain a second coated product. The second coated product was ground at room temperature such that an average particle diameter ($D_{50}$) was 10.2 $\mu$m to prepare a positive electrode active material in which a coating portion containing Co, Al, and B was formed on the lithium transition metal oxide in the form of a secondary particle in which the primary particles were aggregated. A total composition of the positive electrode active material including the coating portion was $LiNi_{0.8602}Co_{0.0489}Mn_{0.0773}Al_{0.0066}Y_{0.0010}Zr_{0.0015}B_{0.0045}O_2$.

**Example 4**

A transition metal composite hydroxide ($D_{50}$: 10.2 $\mu$m) having a composition represented by $Ni_{0.89}Co_{0.03}Mn_{0.08}$ $(OH)_2$ in a form of a secondary particle, which was formed by aggregation of tens to hundreds of primary particles, and LiOH were mixed such that a molar ratio (Li/(Ni+Co+Mn)) of lithium (Li) to transition metals (Ni+Co+Mn) was 1.04. Herein, a mixture was prepared by adding $Al(OH)_3$, $Y_2O_3$, and $ZrO_2$ in amounts of 1,470 ppm, 1,000 ppm, and 1,500 ppm, respectively, based on a total weight of the transition metal composite hydroxide and mixing them.

The mixture was sintered at 880°C for 6 hours and then at 800°C for 9 hours in an oxygen atmosphere to obtain a sintered product. The sintered product was ground at room temperature to prepare a lithium transition metal oxide which had an average particle diameter ($D_{50}$) of 9.8 $\mu$m, had a composition represented by $LiNi_{0.8833}Co_{0.0298}Mn_{0.0794}Al_{0.0050}Y_{0.0010}Zr_{0.0015}O_2$, and was in a form of a secondary particle in which primary particles were aggregated.

To the above-prepared lithium transition metal oxide in the form of a secondary particle, $Co(OH)_2$ was added such that a molar ratio (Co/(Ni+Co+Mn+Al+Y+Zr)) of cobalt (Co) to metals (Ni+Co+Mn+Al+Y+Zr) excluding lithium was 0.02 and $Al(OH)_3$ was added in an amount of 500 ppm based on a total weight of the above-prepared lithium transition metal oxide in the form of a secondary particle and uniformly mixed to prepare a mixture. The mixture was sintered at 740°C for 3 hours and then at 500°C for 3 hours in an oxygen atmosphere to obtain a first coated product. The first coated product was ground at room temperature such that an average particle diameter ($D_{50}$) was 10.2 $\mu$m to prepare a positive electrode active material in which a coating portion containing Co and Al was formed on the lithium transition metal oxide in the form of a secondary particle in which the primary particles were aggregated. A total composition of the positive electrode active material including the coating portion was $LiNi_{0.8641}Co_{0.0491}Mn_{0.0777}Al_{0.0066}Y_{0.0010}Zr_{0.0015}O_2$.

$H_3BO_3$ was added to the ground first coated product in an amount of 500 ppm based on a total weight of the ground first coated product and mixed to prepare a mixture. The mixture was heat-treated at 330°C for 5 hours in an air atmosphere to obtain a second coated product. The second coated product was ground at room temperature such that an average particle diameter ($D_{50}$) was 10.2 $\mu$m to prepare a positive electrode active material in which a coating portion containing Co, Al, and B was formed on the lithium transition metal oxide in the form of a secondary particle in which the primary particles were aggregated. A total composition of the positive electrode active material including the coating portion was $LiNi_{0.8602}Co_{0.0489}MN_{0.0773}Al_{0.0066}Y_{0.0010}Zr_{0.0015}B_{0.0045}O_2$.

**Example 5**

A transition metal composite hydroxide ($D_{50}$: 10.2 $\mu$m) having a composition represented by $Ni_{0.89}Co_{0.03}Mn_{0.08}$ $(OH)_2$ in a form of a secondary particle, which was formed by aggregation of tens to hundreds of primary particles, and LiOH were mixed such that a molar ratio (Li/(Ni+Co+Mn)) of lithium (Li) to transition metals (Ni+Co+Mn) was 1.04. Herein, a mixture was prepared by adding $Al(OH)_3$, $Y_2O_3$, and $ZrO_2$ in amounts of 1,470 ppm, 2,000 ppm, and 1,500 ppm, respectively, based on a total weight of the transition metal composite hydroxide and mixing them.

The mixture was sintered at 850°C for 6 hours and then at 800°C for 9 hours in an oxygen atmosphere to obtain a sintered product. The sintered product was ground at room temperature to prepare a lithium transition metal oxide which had an average particle diameter ($D_{50}$) of 9.8 $\mu$m, had a composition represented by $LiNi_{0.8824}Co_{0.0297}Mn_{0.0793}Al_{0.0050}Y_{0.0021}Zr_{0.0015}O_2$, and was in a form of a secondary particle in which primary particles were aggregated.

To the above-prepared lithium transition metal oxide in the form of a secondary particle, $Co(OH)_2$ was added such that a molar ratio (Co/(Ni+Co+Mn+Al+Y+Zr)) of cobalt (Co) to metals (Ni+Co+Mn+Al+Y+Zr) excluding lithium was 0.02 and $Al(OH)_3$ was added in an amount of 500 ppm based on a total weight of the above-prepared lithium transition metal oxide in the form of a secondary particle and uniformly mixed to prepare a mixture. The mixture was sintered at 740°C for 3 hours and then at 500°C for 3 hours in an oxygen atmosphere to obtain a first coated product. The first coated product was ground at room temperature such that an average particle diameter ($D_{50}$) was 10.2 $\mu$m to prepare a positive electrode active material in which a coating portion containing Co and Al was formed on the lithium transition metal oxide in the form of a secondary particle in which the primary particles were aggregated. A total composition of the positive electrode active material including the coating portion was $LiNi_{0.8632}Co_{0.0491}Mn_{0.0776}Al_{0.0066}Y_{0.0020}Zr_{0.0015}O_2$.

$H_3BO_3$ was added to the ground first coated product in an amount of 500 ppm based on a total weight of the ground first coated product and mixed to prepare a mixture. The mixture was heat-treated at 330°C for 5 hours in an air atmosphere to obtain a second coated product. The second coated product was ground at room temperature such that an average particle diameter ($D_{50}$) was 10.2 $\mu$m to prepare a positive electrode active material in which a coating portion containing Co, Al, and B was formed on the lithium transition metal oxide in the form of a secondary particle in which the primary particles were aggregated. A total composition of the positive electrode active material including the coating portion was $LiNi_{0.8593}Co_{0.0489}Mn_{0.0772}Al_{0.0066}Y_{0.002}Zr_{0.0015}B_{0.0045}O_2$.

**Example 6**

A transition metal composite hydroxide ($D_{50}$: 10.2 $\mu$m) having a composition represented by $Ni_{0.89}Co_{0.03}Mn_{0.08}$ $(OH)_2$ in a form of a secondary particle, which was formed by aggregation of tens to hundreds of primary particles, and LiOH were mixed such that a molar ratio (Li/(Ni+Co+Mn)) of lithium (Li) to transition metals (Ni+Co+Mn) was 1.04. Herein, a mixture was prepared by adding $Al(OH)_3$, $Y_2O_3$, and $ZrO_2$ in amounts of 2,940 ppm, 1,000 ppm, and 1,500 ppm, respectively, based on a total weight of the transition metal composite hydroxide and mixing them.

The mixture was sintered at 850°C for 6 hours and then at 800°C for 9 hours in an oxygen atmosphere to obtain a sintered product. The sintered product was ground at room temperature to prepare a lithium transition metal oxide which had an average particle diameter ($D_{50}$) of 9.8 $\mu$m, had a composition represented by $LiNi_{0.8789}Co_{0.0296}Mn_{0.0790}Al_{0.0100}Y_{0.0010}Zr_{0.0015}O_2$, and was in a form of a secondary particle in which primary particles were aggregated.

To the above-prepared lithium transition metal oxide in the form of a secondary particle, $Co(OH)_2$ was added such that a molar ratio (Co/(Ni+Co+Mn+Al+Y+Zr)) of cobalt (Co) to metals (Ni+Co+Mn+Al+Y+Zr) excluding lithium was 0.02 and $Al(OH)_3$ was added in an amount of 500 ppm based on a total weight of the above-prepared lithium transition metal oxide in the form of a secondary particle and uniformly mixed to prepare a mixture. The mixture was sintered at 740°C for 3 hours and then at 500°C for 3 hours in an oxygen atmosphere to obtain a first coated product. The first coated product was ground at room temperature such that an average particle diameter ($D_{50}$) was 10.2 $\mu$m to prepare a positive electrode active material in which a coating portion containing Co and Al was formed on the lithium transition metal oxide in the form of a secondary particle in which the primary particles were aggregated. A total composition of the positive electrode active material including the coating portion was $LiNi_{0.8597}Co_{0.0490}Mn_{0.0773}Al_{0.0115}Y_{0.0010}Zr_{0.0015}O_2$.

$H_3BO_3$ was added to the ground first coated product in an amount of 500 ppm based on a total weight of the ground first coated product and mixed to prepare a mixture. The mixture was heat-treated at 330°C for 5 hours in an air atmosphere to obtain a second coated product. The second coated product was ground at room temperature such that an average particle diameter ($D_{50}$) was 10.2 $\mu$m to prepare a positive electrode active material in which a coating portion containing Co, Al, and B was formed on the lithium transition metal oxide in the form of a secondary particle in which the primary particles were aggregated. A total composition of the positive electrode active material including the coating portion was $LiNi_{0.8559}Co_{0.0488}Mn_{0.0769}Al_{0.0115}Y_{0.0010}Zr_{0.0014}B_{0.0045}O_2$.

**Example 7**

A transition metal composite hydroxide ($D_{50}$: 10.2 $\mu$m) having a composition represented by $Ni_{0.89}Co_{0.03}Mn_{0.08}$ $(OH)_2$ in a form of a secondary particle, which was formed by aggregation of tens to hundreds of primary particles, and LiOH were mixed such that a molar ratio (Li/(Ni+Co+Mn)) of lithium (Li) to transition metals (Ni+Co+Mn) was 1.04. Herein, a mixture was prepared by adding $Al(OH)_3$, $Y_2O_3$, and $ZrO_2$ in amounts of 1,470 ppm, 1,000 ppm, and 3,500 ppm, respectively, based on a total weight of the transition metal composite hydroxide and mixing them.

The mixture was sintered at 850°C for 6 hours and then at 800°C for 9 hours in an oxygen atmosphere to obtain a sintered product. The sintered product was ground at room temperature to prepare a lithium transition metal oxide which had an average particle diameter ($D_{50}$) of 9.8 $\mu$m, had a composition represented by $LiNi_{0.8815}Co_{0.0297}Mn_{0.0793}Al_{0.0050}Y_{0.0010}Zr_{0.0035}O_2$, and was in a form of a secondary particle in which primary particles were aggregated.

To the above-prepared lithium transition metal oxide in the form of a secondary particle, $Co(OH)_2$ was added such that a molar ratio (Co/(Ni+Co+Mn+Al+Y+Zr)) of cobalt (Co) to metals (Ni+Co+Mn+Al+Y+Zr) excluding lithium was 0.02 and $Al(OH)_3$ was added in an amount of 500 ppm based on a total weight of the above-prepared lithium transition metal oxide in the form of a secondary particle and uniformly mixed to prepare a mixture. The mixture was sintered at 740°C for 3 hours and then at 500°C for 3 hours in an oxygen atmosphere to obtain a first coated product. The first coated product was ground at room temperature such that an average particle diameter ($D_{50}$) was 10.2 $\mu$m to prepare a positive electrode active material in which a coating portion containing Co and Al was formed on the lithium transition metal oxide in the form of a secondary particle in which the primary particles were aggregated. A total composition of the positive electrode active material including the coating portion was $LiNi_{0.8623}Co_{0.0491}Mn_{0.0775}Al_{0.0066}Y_{0.005}O_2$.

$H_3BO_3$ was added to the ground first coated product in an amount of 500 ppm based on a total weight of the ground first coated product and mixed to prepare a mixture. The mixture was heat-treated at 330°C for 5 hours in an air atmosphere to obtain a second coated product. The second coated product was ground at room temperature such that an average particle diameter ($D_{50}$) was 10.2 $\mu$m to prepare a positive electrode active material in which a coating portion containing Co, Al, and B was formed on the lithium transition metal oxide in the form of a secondary particle in which the primary particles were aggregated. A total composition of the positive electrode active material including the coating portion was $LiNi_{0.8584}Co_{0.0489}Mn_{0.0772}Al_{0.0066}Y_{0.0010}Zr_{0.0034}B_{0.0045}O_2$.

**Example 8**

A transition metal composite hydroxide ($D_{50}$: 14.5 $\mu$m) having a composition represented by $Ni_{0.96}Co_{0.03}Mn_{0.01}$ $(OH)_2$ in a form of a secondary particle, which was formed by aggregation of tens to hundreds of primary particles, and LiOH were mixed such that a molar ratio (Li/(Ni+Co+Mn)) of lithium (Li) to transition metals (Ni+Co+Mn) was 1.02. Herein, a mixture was prepared by adding $Al(OH)_3$, $Y_2O_3$, and $ZrO_2$ in amounts of 1,470 ppm, 1,000 ppm, and 1,500 ppm, respectively, based on a total weight of the transition metal composite hydroxide and mixing them.

The mixture was sintered at 800°C for 6 hours and then at 760°C for 9 hours in an oxygen atmosphere to obtain a sintered product. The sintered product was ground at room temperature to prepare a lithium transition metal oxide which had an average particle diameter ($D_{50}$) of 14.2 $\mu$m, had a composition represented by $LiNi_{0.9528}Co_{0.0298}Mn_{0.0099}Al_{0.0050}Y_{0.0010}Zr_{0.0015}O_2$, and was in a form of a secondary particle in which primary particles were aggregated.

To the above-prepared lithium transition metal oxide in the form of a secondary particle, $Co(OH)_2$ was added such that a molar ratio (Co/(Ni+Co+Mn+Al+Y+Zr)) of cobalt (Co) to metals (Ni+Co+Mn+Al+Y+Zr) excluding lithium was 0.02 and $Al(OH)_3$ was added in an amount of 500 ppm based on a total weight of the above-prepared lithium transition metal oxide in the form of a secondary particle and uniformly mixed to prepare a mixture. The mixture was sintered at 700°C for 3 hours and then at 500°C for 3 hours in an oxygen atmosphere to obtain a first coated product. The first coated product was ground at room temperature such that an average particle diameter ($D_{50}$) was 14.5 $\mu$m to prepare a positive electrode active material in which a coating portion containing Co and Al was formed on the lithium transition metal oxide in the form of a secondary particle in which the primary particles were aggregated. A total composition of the positive electrode active material including the coating portion was $LiNi_{0.9320}Co_{0.0491}Mn_{0.0097}Al_{0.0067}Y_{0.0010}Zr_{0.0015}O_2$.

$H_3BO_3$ was added to the ground first coated product in an amount of 500 ppm based on a total weight of the ground first coated product and mixed to prepare a mixture. The mixture was heat-treated at 330°C for 5 hours in an air atmosphere to obtain a second coated product. The second coated product was ground at room temperature such that an average particle diameter ($D_{50}$) was 14.2 $\mu$m to prepare a positive electrode active material in which a coating portion containing Co, Al, and B was formed on the lithium transition metal oxide in the form of a secondary particle in which the primary particles were aggregated. A total composition of the positive electrode active material including the coating portion was $LiNi_{0.9278}Co_{0.0489}Mn_{0.0097}Al_{0.0066}Y_{0.0010}Zr_{0.0015}B_{0.0045}O_2$.

**Example 9**

A transition metal composite hydroxide ($D_{50}$: 14.5 $\mu$m) having a composition represented by $Ni_{0.96}Co_{0.03}Mn_{0.01}$ $(OH)_2$ in a form of a secondary particle, which was formed by aggregation of tens to hundreds of primary particles, and LiOH were mixed such that a molar ratio (Li/(Ni+Co+Mn)) of lithium (Li) to transition metals (Ni+Co+Mn) was 0.98. Herein, a mixture was prepared by adding $Al(OH)_3$, $Y_2O_3$, and $ZrO_2$ in amounts of 1,470 ppm, 1,000 ppm, and 1,500 ppm, respectively, based on a total weight of the transition metal composite hydroxide and mixing them.
The mixture was primarily sintered at 800°C for 6 hours in an oxygen atmosphere to obtain a first sintered product. Thereafter, the first sintered product was ground at room temperature such that an average particle diameter ($D_{50}$) was 14.2 $\mu$m.
The ground first sintered product and LiOH were mixed such that a molar ratio (Li/(Ni+Co+Mn)) of lithium (Li) to transition metals (Ni+Co+Mn) was 0.04, and secondarily sintered at 760°C for 9 hours in an oxygen atmosphere to obtain a second sintered product. The second sintered product was ground at room temperature to prepare a lithium transition metal oxide which had an average particle diameter ($D_{50}$) of 14.2 $\mu$m, had a composition represented by Li-$Ni_{0.9528}Co_{0.0298}Mn_{0.0099}Al_{0.0050}Y_{0.0010}Zr_{0.0015}O_2$, and was in a form of a secondary particle in which primary particles were aggregated.
To the above-prepared lithium transition metal oxide in the form of a secondary particle, $Co(OH)_2$ was added such that a molar ratio (Co/(Ni+Co+Mn+Al+Y+Zr)) of cobalt (Co) to metals (Ni+Co+Mn+Al+Y+Zr) excluding lithium was 0.02 and $Al(OH)_3$ was added in an amount of 500 ppm based on a total weight of the above-prepared lithium transition metal oxide in the form of a secondary particle and uniformly mixed to prepare a mixture. The mixture was sintered at 700°C for 3 hours and then at 500°C for 3 hours in an oxygen atmosphere to obtain a first coated product. The first coated product was ground at room temperature such that an average particle diameter ($D_{50}$) was 14.5 $\mu$m to prepare a positive electrode active material in which a coating portion containing Co and Al was formed on the lithium transition metal oxide in the form of a secondary particle in which the primary particles were aggregated. A total composition of the positive electrode active material including the coating portion was $LiNi_{0.9320}Co_{0.0491}Mn_{0.0097}Al_{0.0067}Y_{0.0010}Zr_{0.0015}O_2$.
$H_3BO_3$ was added to the ground first coated product in an amount of 500 ppm based on a total weight of the ground first coated product and mixed to prepare a mixture. The mixture was heat-treated at 330°C for 5 hours in an air atmosphere to obtain a second coated product. The second coated product was ground at room temperature such that an average particle diameter ($D_{50}$) was 14.2 $\mu$m to prepare a positive electrode active material in which a coating portion containing Co, Al, and B was formed on the lithium transition metal oxide in the form of a secondary particle in which the primary particles were aggregated. A total composition of the positive electrode active material including the coating portion was $LiNi_{0.9278}Co_{0.0489}Mn_{0.0097}Al_{0.0066}Y_{0.0010}Zr_{0.0015}B_{0.0045}O_2$.

**Example 10**

A transition metal composite hydroxide ($D_{50}$: 14.5 $\mu$m) having a composition represented by $Ni_{0.96}Co_{0.03}Mn_{0.01}$ $(OH)_2$ in a form of a secondary particle, which was formed by aggregation of tens to hundreds of primary particles, and LiOH were mixed such that a molar ratio (Li/(Ni+Co+Mn)) of lithium (Li) to transition metals (Ni+Co+Mn) was 1.02. Herein, a mixture was prepared by adding $Al(OH)_3$, $Y_2O_3$, and $ZrO_2$ in amounts of 1,470 ppm, 1,000 ppm, and 1,500 ppm, respectively, based on a total weight of the transition metal composite hydroxide and mixing them.
The mixture was pre-sintered at 550°C for 5 hours in an oxygen atmosphere to obtain a pre-sintered product. Thereafter, the pre-sintered product was ground at room temperature such that an average particle diameter ($D_{50}$) was 14.2 $\mu$m.
The ground pre-sintered product was sintered at 800°C for 6 hours and then at 760°C for 9 hours in an oxygen atmosphere to obtain a sintered product. The sintered product was ground at room temperature to prepare a lithium transition metal oxide which had an average particle diameter ($D_{50}$) of 14.2 $\mu$m, had a composition represented by $LiNi_{0.9528}Co_{0.0298}Mn_{0.0099}Al_{0.0050}Y_{0.0010}Zr_{0.0015}O_2$, and was in a form of a secondary particle in which primary particles were aggregated.
To the above-prepared lithium transition metal oxide in the form of a secondary particle, $Co(OH)_2$ was added such that a molar ratio (Co/(Ni+Co+Mn+Al+Y+Zr)) of cobalt (Co) to metals (Ni+Co+Mn+Al+Y+Zr) excluding lithium was 0.02 and $Al(OH)_3$ was added in an amount of 500 ppm based on a total weight of the above-prepared lithium transition metal oxide in the form of a secondary particle and uniformly mixed to prepare a mixture. The mixture was sintered at 700°C for 3 hours and then at 500°C for 3 hours in an oxygen atmosphere to obtain a first coated product. The first coated product was ground at room temperature such that an average particle diameter ($D_{50}$) was 14.5 $\mu$m to prepare a positive electrode active material in which a coating portion containing Co and Al was formed on the lithium transition metal oxide in the form of a secondary particle in which the primary particles were aggregated. A total composition of the positive electrode active material including the coating portion was $LiNi_{0.9320}Co_{0.0491}Mn_{0.0097}Al_{0.0067}Y_{0.0010}Zr_{0.0015}O_2$.

$H_3BO_3$ was added to the ground first coated product in an amount of 500 ppm based on a total weight of the ground first coated product and mixed to prepare a mixture. The mixture was heat-treated at 330°C for 5 hours in an air atmosphere to obtain a second coated product. The second coated product was ground at room temperature such that an average particle diameter ($D_{50}$) was 14.2 $\mu$m to prepare a positive electrode active material in which a coating portion containing Co, Al, and B was formed on the lithium transition metal oxide in the form of a secondary particle in which the primary particles were aggregated. A total composition of the positive electrode active material including the coating portion was $LiNi_{0.9278}Co_{0.0489}Mn_{0.0097}Al_{0.0066}Y_{0.0010}Zr_{0.0015}B_{0.0045}O_2$.

**Example 11**

A transition metal composite hydroxide ($D_{50}$: 14.5 $\mu$m) having a composition represented by $Ni_{0.96}Co_{0.03}Mn_{0.01}$ $(OH)_2$ in a form of a secondary particle, which was formed by aggregation of tens to hundreds of primary particles, and LiOH were mixed such that a molar ratio (Li/(Ni+Co+Mn)) of lithium (Li) to transition metals (Ni+Co+Mn) was 1.02. Herein, a mixture was prepared by adding $Al(OH)_3$, $Y_2O_3$, and $ZrO_2$ in amounts of 1,470 ppm, 1,000 ppm, and 1,500 ppm, respectively, based on a total weight of the transition metal composite hydroxide and mixing them.

The mixture was sintered at 830°C for 6 hours and then at 760°C for 9 hours in an oxygen atmosphere to obtain a sintered product. The sintered product was ground at room temperature to prepare a lithium transition metal oxide which had an average particle diameter ($D_{50}$) of 14.2 $\mu$m, had a composition represented by $LiNi_{0.9528}Co_{0.0298}Mn_{0.0099}Al_{0.0050}Y_{0.0010}Zr_{0.0015}O_2$, and was in a form of a secondary particle in which primary particles were aggregated.

To the above-prepared lithium transition metal oxide in the form of a secondary particle, $Co(OH)_2$ was added such that a molar ratio (Co/(Ni+Co+Mn+Al+Y+Zr)) of cobalt (Co) to metals (Ni+Co+Mn+Al+Y+Zr) excluding lithium was 0.02 and $Al(OH)_3$ was added in an amount of 500 ppm based on a total weight of the above-prepared lithium transition metal oxide in the form of a secondary particle and uniformly mixed to prepare a mixture. The mixture was sintered at 700°C for 3 hours and then at 500°C for 3 hours in an oxygen atmosphere to obtain a first coated product. The first coated product was ground at room temperature such that an average particle diameter ($D_{50}$) was 14.5 $\mu$m to prepare a positive electrode active material in which a coating portion containing Co and Al was formed on the lithium transition metal oxide in the form of a secondary particle in which the primary particles were aggregated. A total composition of the positive electrode active material including the coating portion was $LiNi_{0.9320}Co_{0.0491}Mn_{0.0097}Al_{0.0067}Y_{0.0010}Zr_{0.0015}O_2$.

$H_3BO_3$ was added to the ground first coated product in an amount of 500 ppm based on a total weight of the ground first coated product and mixed to prepare a mixture. The mixture was heat-treated at 330°C for 5 hours in an air atmosphere to obtain a second coated product. The second coated product was ground at room temperature such that an average particle diameter ($D_{50}$) was 14.2 $\mu$m to prepare a positive electrode active material in which a coating portion containing Co, Al, and B was formed on the lithium transition metal oxide in the form of a secondary particle in which the primary particles were aggregated. A total composition of the positive electrode active material including the coating portion was $LiNi_{0.9278}Co_{0.0489}Mn_{0.0097}Al_{0.0066}Y_{0.0010}Zr_{0.0015}B_{0.0045}O_2$.

**Comparative Example 1**

A transition metal composite hydroxide ($D_{50}$: 10.2 $\mu$m) having a composition represented by $Ni_{0.87}Co_{0.05}Mn_{0.08}$ $(OH)_2$ in a form of a secondary particle, which was formed by aggregation of tens to hundreds of primary particles, and LiOH were mixed such that a molar ratio (Li/(Ni+Co+Mn)) of lithium (Li) to transition metals (Ni+Co+Mn) was 1.05. Herein, a mixture was prepared by adding $Al(OH)_3$, $Y_2O_3$, and $ZrO_2$ in amounts of 1,470 ppm, 1,000 ppm, and 1,500 ppm, respectively, based on a total weight of the transition metal composite hydroxide and mixing them.

The mixture was sintered at 780°C for 5 hours in an oxygen atmosphere to obtain a sintered product. The sintered product was ground at room temperature to prepare a lithium transition metal oxide which had an average particle diameter ($D_{30}$) of 9.8 $\mu$m, had a composition represented by $LiNi_{0.8635}Co_{0.0496}Mn_{0.0794}Al_{0.0050}Y_{0.0010}Zr_{0.0015}O_2$, and was in a form of a secondary particle in which primary particles were aggregated. Subsequently, 100 parts by weight of the above-prepared lithium transition metal oxide in the form of a secondary particle and 100 parts by weight of water were stirred for 5 minutes and then washed using a filter press. A washed product was dried at 130°C for 4 hours to prepare a dried product.

$H_3BO_3$ was added to the above-prepared dried product in an amount of 1,000 ppm based on a total weight of the lithium transition metal oxide and mixed to prepare a mixture. The mixture was heat-treated at 300°C for 5 hours in an air atmosphere to obtain a coated product. The coated product was ground at room temperature such that an average particle diameter ($D_{50}$) was 10.2 $\mu$m to prepare a positive electrode active material in which a coating portion containing B was formed on the lithium transition metal oxide in the form of a secondary particle in which the primary particles were aggregated. A total composition of the positive electrode active material including the coating portion was Li-

$Ni_{0.8558}Co_{0.0492}Mn_{0.0787}Al_{0.00049}Y_{0.0010}Zr_{0.0015}B_{0.0089}O_2$.

**Comparative Example 2**

A transition metal composite hydroxide ($D_{50}$: 12.2 μm) having a composition represented by $Ni_{0.87}Co_{0.05}Mn_{0.08}$ $(OH)_2$ in a form of a secondary particle, which was formed by aggregation of tens to hundreds of primary particles, and LiOH were mixed such that a molar ratio (Li/(Ni+Co+Mn)) of lithium (Li) to transition metals (Ni+Co+Mn) was 1.05. Herein, a mixture was prepared by adding $Al(OH)_3$, $Y_2O_3$, and $ZrO_2$ in amounts of 1,470 ppm, 1,000 ppm, and 1,500 ppm, respectively, based on a total weight of the transition metal composite hydroxide and mixing them.

The mixture was sintered at 780°C for 5 hours in an oxygen atmosphere to obtain a sintered product. The sintered product was ground at room temperature to prepare a lithium transition metal oxide which had an average particle diameter ($D_{30}$) of 11.8 μm, had a composition represented by $LiNi_{0.8635}Co_{0.0496}Mn_{0.0794}Al_{0.0050}Y_{0.0010}Zr_{0.0015}O_2$, and was in a form of a secondary particle in which primary particles were aggregated. Subsequently, 100 parts by weight of the above-prepared lithium transition metal oxide in the form of a secondary particle and 100 parts by weight of water were stirred for 5 minutes and then washed using a filter press. A washed product was dried at 130°C for 4 hours to prepare a dried product.

$H_3BO_3$ was added to the above-prepared dried product in an amount of 1,000 ppm based on a total weight of the lithium transition metal oxide and mixed to prepare a mixture. The mixture was heat-treated at 300°C for 5 hours in an air atmosphere to obtain a coated product. The coated product was ground at room temperature such that an average particle diameter ($D_{50}$) was 12.2 μm to prepare a positive electrode active material in which a coating portion containing B was formed on the lithium transition metal oxide in the form of a secondary particle in which the primary particles were aggregated. A total composition of the positive electrode active material including the coating portion was Li-$Ni_{0.8558}Co_{0.0492}Mn_{0.0787}Al_{0.0049}Y_{0.0010}Zr_{0.089}O_2$.

**Comparative Example 3**

A transition metal composite hydroxide ($D_{50}$: 14.5 μm) having a composition represented by $Ni_{0.94}CO_{0.05}Mn_{0.01}$ $(OH)_2$ in a form of a secondary particle, which was formed by aggregation of tens to hundreds of primary particles, and LiOH were mixed such that a molar ratio (Li/(Ni+Co+Mn)) of lithium (Li) to transition metals (Ni+Co+Mn) was 1.02. Herein, a mixture was prepared by adding $Al(OH)_3$, $Y_2O_3$, and $ZrO_2$ in amounts of 1,470 ppm, 1,000 ppm, and 1,500 ppm, respectively, based on a total weight of the transition metal composite hydroxide and mixing them.

The mixture was sintered at 730°C for 5 hours in an oxygen atmosphere to obtain a sintered product. The sintered product was ground at room temperature to prepare a lithium transition metal oxide which had an average particle diameter ($D_{30}$) of 14.2 μm, had a composition represented by $LiNi_{0.9330}Co_{0.0496}Mn_{0.0099}Al_{0.0050}Y_{0.0010}Zr_{0.0015}O_2$, and was in a form of a secondary particle in which primary particles were aggregated. Subsequently, 100 parts by weight of the above-prepared lithium transition metal oxide in the form of a secondary particle and 100 parts by weight of water were stirred for 5 minutes and then washed using a filter press. A washed product was dried at 130°C for 4 hours to prepare a dried product.

$H_3BO_3$ was added to the above-prepared dried product in an amount of 1,000 ppm based on a total weight of the lithium transition metal oxide and mixed to prepare a mixture. The mixture was heat-treated at 300°C for 5 hours in an air atmosphere to obtain a coated product. The coated product was ground at room temperature such that an average particle diameter ($D_{50}$) was 14.2 μm to prepare a positive electrode active material in which a coating portion containing B was formed on the lithium transition metal oxide in the form of a secondary particle in which the primary particles were aggregated. A total composition of the positive electrode active material including the coating portion was Li-$Ni_{0.9246}Co_{0.0492}Mn_{0.0098}Al_{0.0050}Y_{0.0010}Zr_{0.0015}B_{0.0089}O_2$.

**Comparative Example 4**

A transition metal composite hydroxide ($D_{50}$: 10.2 μm) having a composition represented by $Ni_{0.94}CO_{0.05}Mn_{0.01}$ $(OH)_2$ in a form of a secondary particle, which was formed by aggregation of tens to hundreds of primary particles, and LiOH were mixed such that a molar ratio (Li/(Ni+Co+Mn)) of lithium (Li) to transition metals (Ni+Co+Mn) was 1.02. Herein, a mixture was prepared by adding $Al(OH)_3$, $Y_2O_3$, and $ZrO_2$ in amounts of 1,470 ppm, 1,000 ppm, and 1,500 ppm, respectively, based on a total weight of the transition metal composite hydroxide and mixing them.

The mixture was sintered at 730°C for 5 hours in an oxygen atmosphere to obtain a sintered product. The sintered product was ground at room temperature to prepare a lithium transition metal oxide which had an average particle diameter ($D_{30}$) of 9.8 μm, had a composition represented by $LiNi_{0.9330}Co_{0.0496}Mn_{0.0099}Al_{0.0050}Y_{0.0010}Zr_{0.0015}O_2$, and was in a form of a secondary particle in which primary particles were aggregated. Subsequently, 100 parts by weight of the above-prepared lithium transition metal oxide in the form of a secondary particle and 100 parts by weight of water were stirred for 5 minutes and then washed using a filter press. A washed product was dried at 130°C for 4 hours to prepare a dried product.

$H_3BO_3$ was added to the above-prepared dried product in an amount of 1,000 ppm based on a total weight of the lithium transition metal oxide and mixed to prepare a mixture. The mixture was heat-treated at 300°C for 5 hours in an air atmosphere to obtain a coated product. The coated product was ground at room temperature such that an average particle diameter ($D_{50}$) was 10.2 $\mu$m to prepare a positive electrode active material in which a coating portion containing B was formed on the lithium transition metal oxide in the form of a secondary particle in which the primary particles were aggregated. A total composition of the positive electrode active material including the coating portion was $LiNi_{0.9246}Co_{0.0492}Mn_{0.0098}Al_{0.0050}Y_{0.0010}Zr_{0.0015}B_{0.0089}O_2$.

## Comparative Example 5

A transition metal composite hydroxide ($D_{50}$: 10.2 $\mu$m) having a composition represented by $Ni_{0.89}Co_{0.03}Mn_{0.08}(OH)_2$ in a form of a secondary particle, which was formed by aggregation of tens to hundreds of primary particles, and LiOH were mixed such that a molar ratio (Li/(Ni+Co+Mn)) of lithium (Li) to transition metals (Ni+Co+Mn) was 1.04. Herein, a mixture was prepared by adding $Al(OH)_3$, $Y_2O_3$, and $ZrO_2$ in amounts of 1,470 ppm, 1,000 ppm, and 1,500 ppm, respectively, based on a total weight of the transition metal composite hydroxide and mixing them.

The mixture was sintered at 820°C for 6 hours and then at 800°C for 9 hours in an oxygen atmosphere to obtain a sintered product. The sintered product was ground at room temperature to prepare a lithium transition metal oxide which had an average particle diameter ($D_{50}$) of 9.8 $\mu$m, had a composition represented by $LiNi_{0.8833}Co_{0.0298}Mn_{0.0794}Al_{0.0050}Y_{0.0010}Zr_{0.0015}O_2$, and was in a form of a secondary particle in which primary particles were aggregated.

To the above-prepared lithium transition metal oxide in the form of a secondary particle, $Co(OH)_2$ was added such that a molar ratio (Co/(Ni+Co+Mn+Al+Y+Zr)) of cobalt (Co) to metals (Ni+Co+Mn+Al+Y+Zr) excluding lithium was 0.02 and $Al(OH)_3$ was added in an amount of 500 ppm based on a total weight of the above-prepared lithium transition metal oxide in the form of a secondary particle and uniformly mixed to prepare a mixture. The mixture was sintered at 740°C for 3 hours and then at 500°C for 3 hours in an oxygen atmosphere to obtain a first coated product. The first coated product was ground at room temperature such that an average particle diameter ($D_{50}$) was 9.8 $\mu$m to prepare a positive electrode active material in which a coating portion containing Co and Al was formed on the lithium transition metal oxide in the form of a secondary particle in which the primary particles were aggregated. A total composition of the positive electrode active material including the coating portion was $LiNi_{0.8641}Co_{0.0491}Mn_{0.0777}Al_{0.0066}Y_{0.0010}Zr_{0.0015}O_2$.

$H_3BO_3$ was added to the ground first coated product in an amount of 500 ppm based on a total weight of the ground first coated product and mixed to prepare a mixture. The mixture was heat-treated at 330°C for 5 hours in an air atmosphere to obtain a second coated product. The second coated product was ground at room temperature such that an average particle diameter ($D_{50}$) was 9.8 $\mu$m to prepare a positive electrode active material in which a coating portion containing Co, Al, and B was formed on the lithium transition metal oxide in the form of a secondary particle in which the primary particles were aggregated. A total composition of the positive electrode active material including the coating portion was $LiNi_{0.8602}Co_{0.0489}Mn_{0.0773}Al_{0.0066}Y_{0.0010}Zr_{0.0015}B_{0.0045}O_2$.

## Comparative Example 6

A transition metal composite hydroxide ($D_{50}$: 10.2 $\mu$m) having a composition represented by $Ni_{0.89}Co_{0.03}Mn_{0.08}(OH)_2$ in a form of a secondary particle, which was formed by aggregation of tens to hundreds of primary particles, and LiOH were mixed such that a molar ratio (Li/(Ni+Co+Mn)) of lithium (Li) to transition metals (Ni+Co+Mn) was 1.04. Herein, a mixture was prepared by adding $Al(OH)_3$, $Y_2O_3$, and $ZrO_2$ in amounts of 1,470 ppm, 1,000 ppm, and 1,500 ppm, respectively, based on a total weight of the transition metal composite hydroxide and mixing them.

The mixture was sintered at 920°C for 6 hours and then at 800°C for 9 hours in an oxygen atmosphere to obtain a sintered product. The sintered product was ground at room temperature to prepare a lithium transition metal oxide which had an average particle diameter ($D_{50}$) of 9.8 $\mu$m, had a composition represented by $LiNi_{0.8833}Co_{0.0298}Mn_{0.0794}Al_{0.0050}Y_{0.0010}Zr_{0.0015}O_2$, and was in a form of a secondary particle in which primary particles were aggregated.

To the above-prepared lithium transition metal oxide in the form of a secondary particle, $Co(OH)_2$ was added such that a molar ratio (Co/(Ni+Co+Mn+Al+Y+Zr)) of cobalt (Co) to metals (Ni+Co+Mn+Al+Y+Zr) excluding lithium was 0.02 and $Al(OH)_3$ was added in an amount of 500 ppm based on a total weight of the above-prepared lithium transition metal oxide in the form of a secondary particle and uniformly mixed to prepare a mixture. The mixture was sintered at 740°C for 3 hours and then at 500°C for 3 hours in an oxygen atmosphere to obtain a first coated product. The first coated product was ground at room temperature such that an average particle diameter ($D_{50}$) was 9.8 $\mu$m to prepare a positive electrode active material in which a coating portion containing Co and Al was formed on the lithium transition metal oxide in the form of a secondary particle in which the primary particles were aggregated. A total composition of the positive electrode active material including the coating portion was $LiNi_{0.8641}Co_{0.0491}Mn_{0.0777}Al_{0.0066}Y_{0.0010}Zr_{0.0015}O_2$.

$H_3BO_3$ was added to the ground first coated product in an amount of 500 ppm based on a total weight of the ground first coated product and mixed to prepare a mixture. The mixture was heat-treated at 330°C for 5 hours in an air atmosphere to obtain a second coated product. The second coated product was ground at room temperature such that an

average particle diameter ($D_{50}$) was 9.8 $\mu$m to prepare a positive electrode active material in which a coating portion containing Co, Al, and B was formed on the lithium transition metal oxide in the form of a secondary particle in which the primary particles were aggregated. A total composition of the positive electrode active material including the coating portion was $LiNi_{0.8602}Co_{0.0489}Mn_{0.0773}Al_{0.0066}Y_{0.0010}Zr_{0.0015}B_{0.0045}O_2$.

**Experimental Examples**

**Experimental Example 1: Particle Analysis 1**

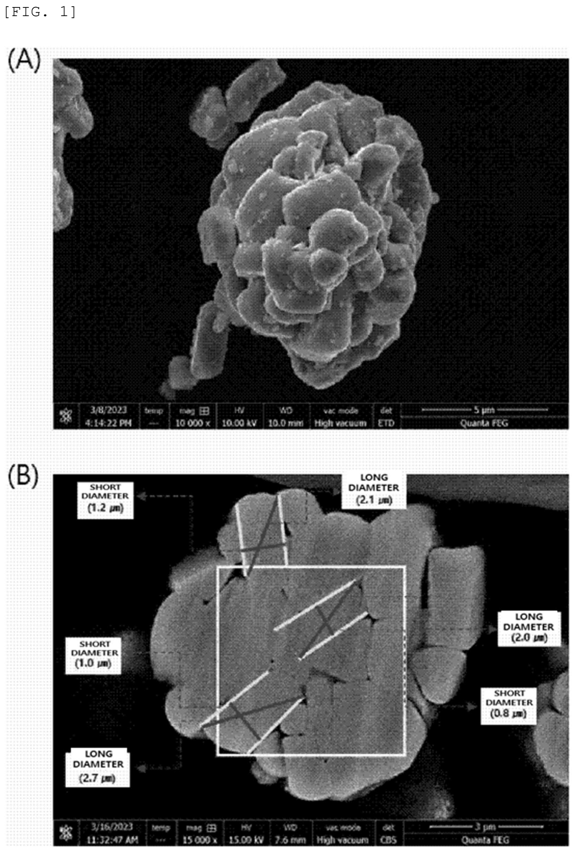

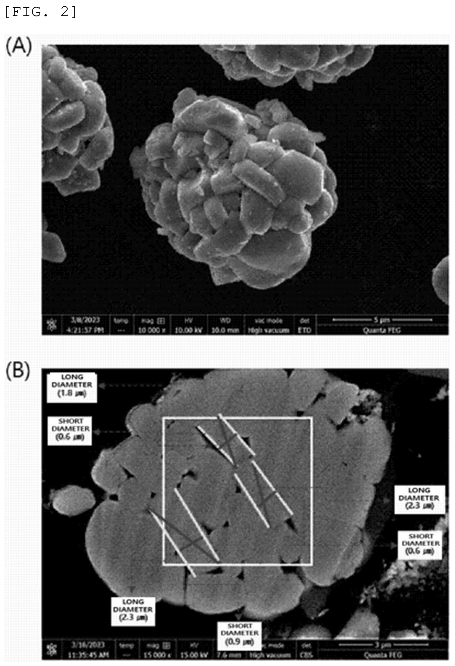

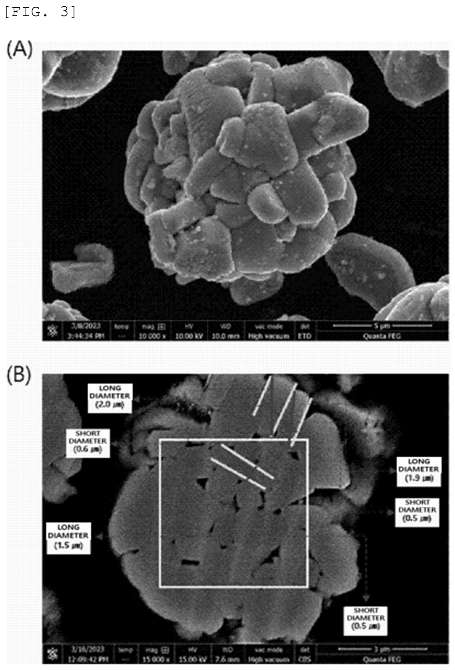

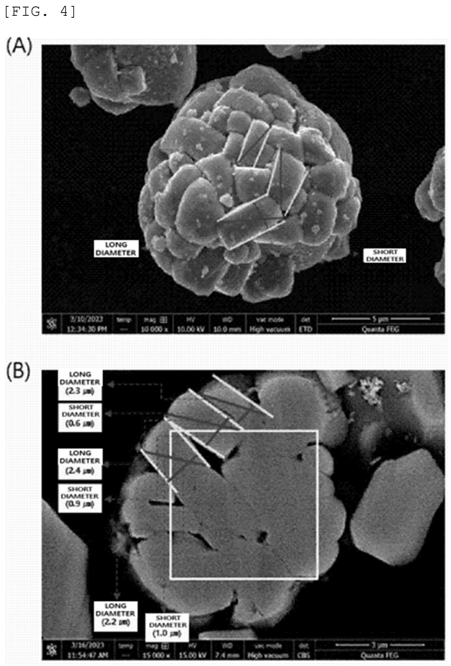

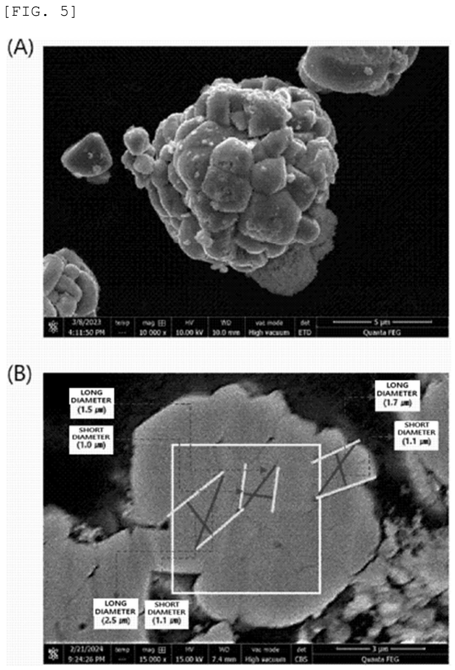

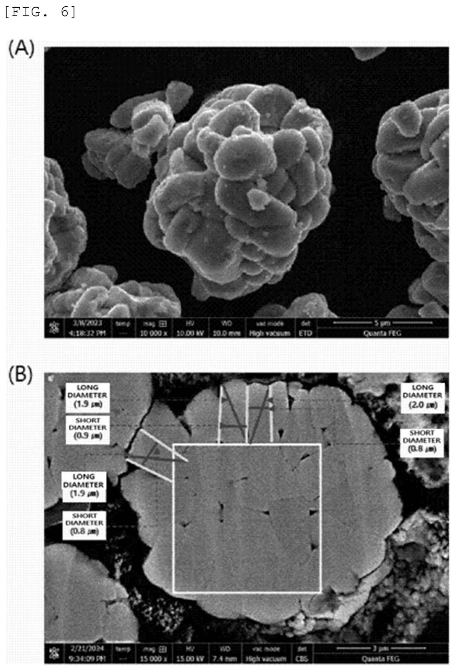

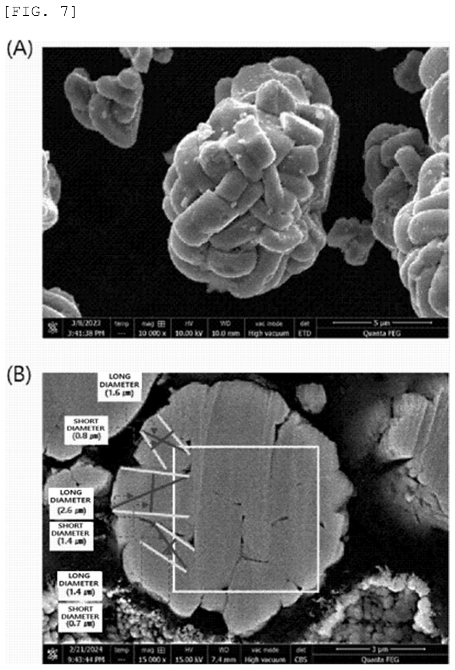

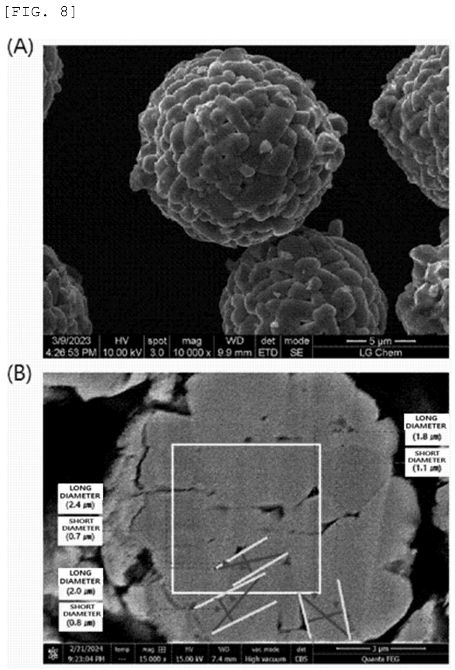

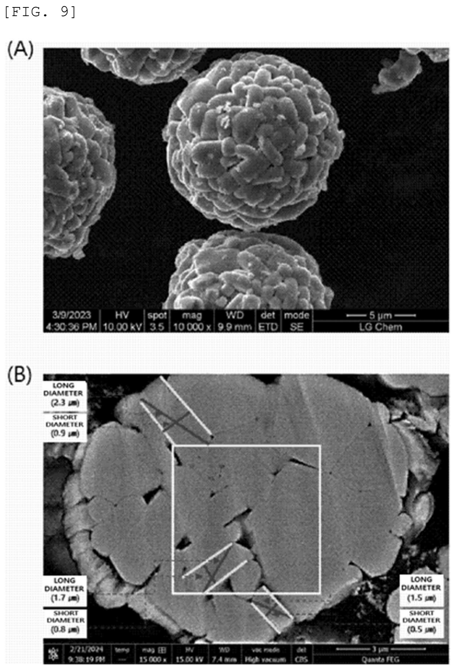

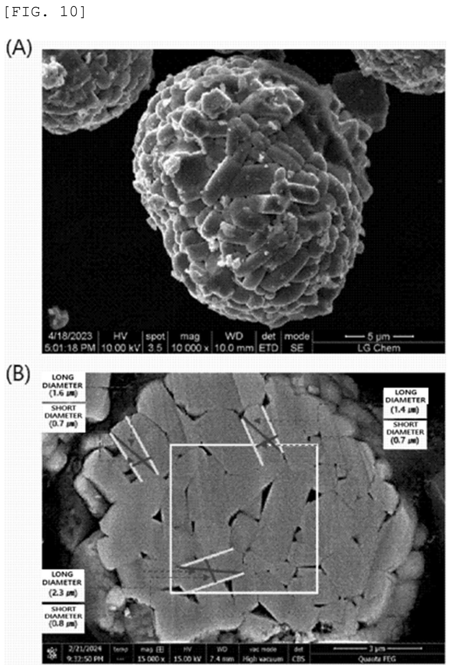

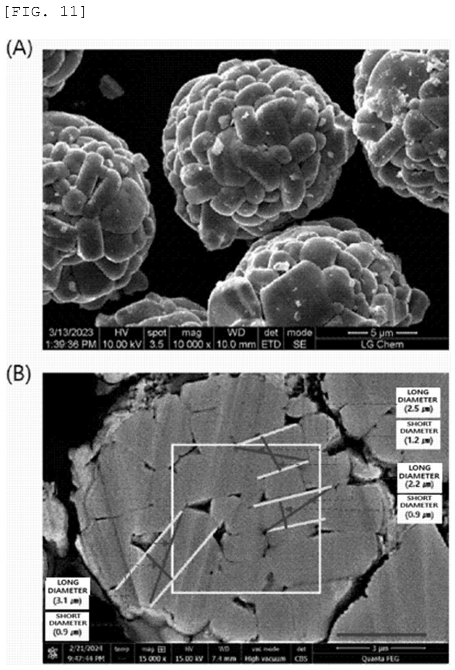

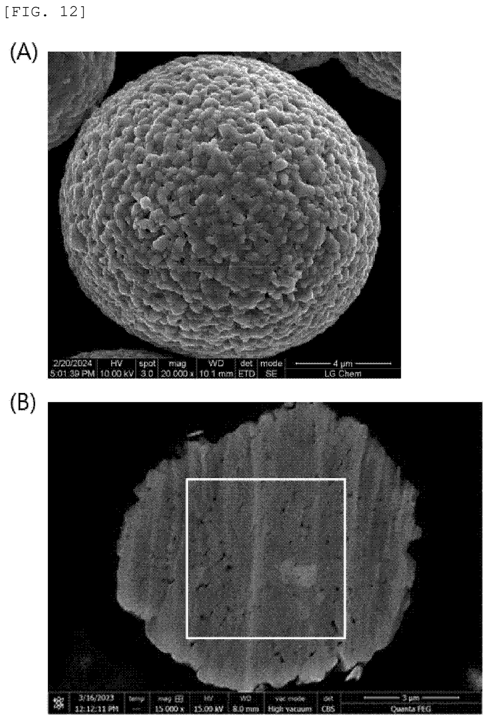

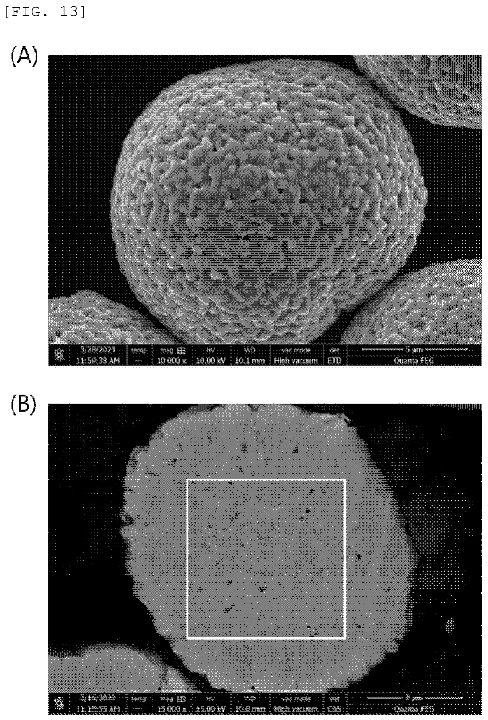

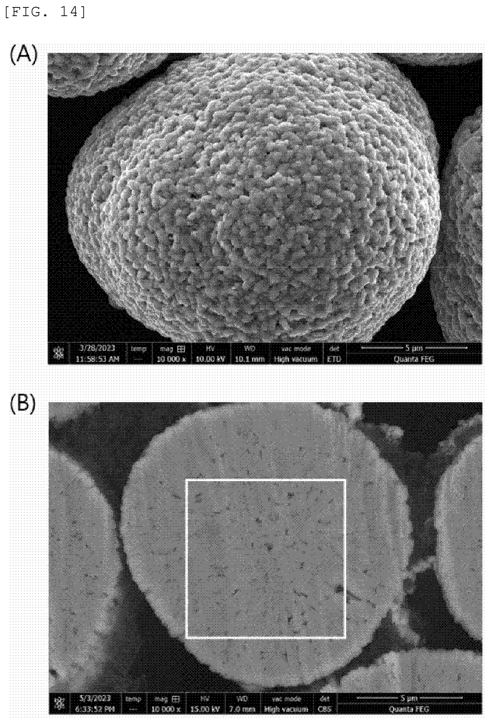

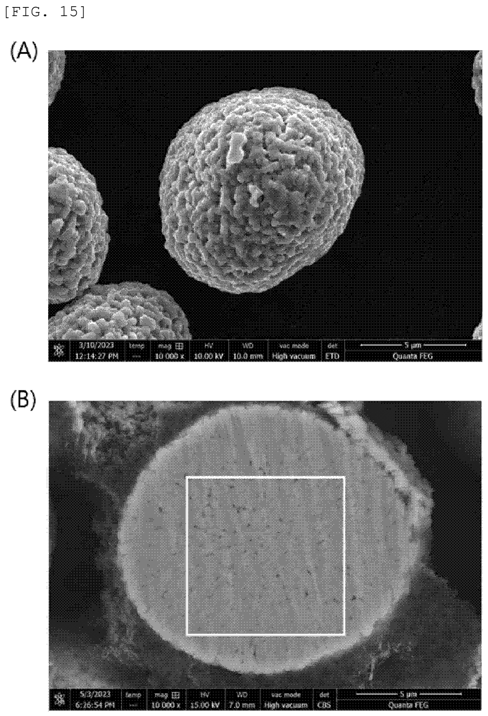

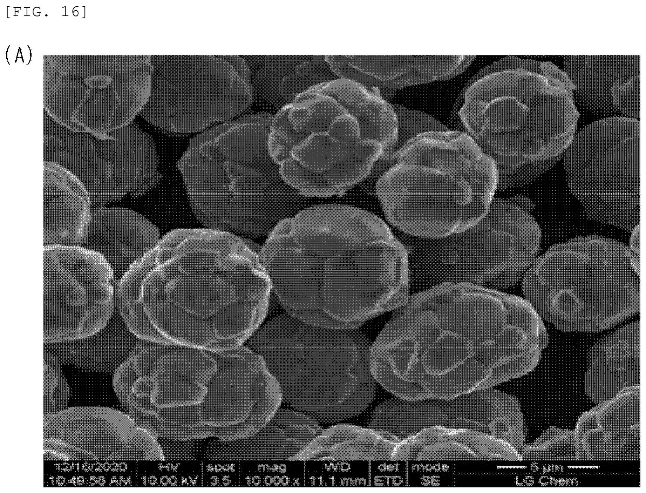

Each of the positive electrode active materials prepared in Examples 1 to 11 and Comparative Examples 1 to 6 was photographed using a scanning electron microscope (FEI quanta 250 FEG), and SEM images of Examples 1 to 11 are illustrated in order in FIGS. 1(A) to 11(A), respectively, and SEM images of Comparative Examples 1 to 4 and 6 are illustrated in order in FIGS. 12(A) to 16(A), respectively. An average particle size of the primary particles present in each of the examples and the comparative examples was measured from the SEM images, and presented in Table 1 below.

In addition, each of the positive electrode active materials prepared in Examples 1 to 11 and Comparative Examples 1 to 6 was ion-milled and then photographed using a scanning electron microscope, and SEM images of Examples 1 to 11 are illustrated in order in FIGS. 1(B) to 11(B), respectively, and SEM images of Comparative Examples 1 to 4 are illustrated in order in FIGS. 12(B) to 15(B), respectively. Each of white squares in FIGS. 1(B) to 15(B) indicates a unit area of 5 $\mu$m width $\times$ 5 $\mu$m length in a cross section of the secondary particle for the cross section of the secondary particle having a size within a range of the average particle diameter ($D_{50}$) of the secondary particle observed from the SEM image of the cross section of the secondary particle which was photographed from a cross section of the positive electrode active material, and the number of cross sections of the primary particles identified within the corresponding unit area is presented in Table 1 below.

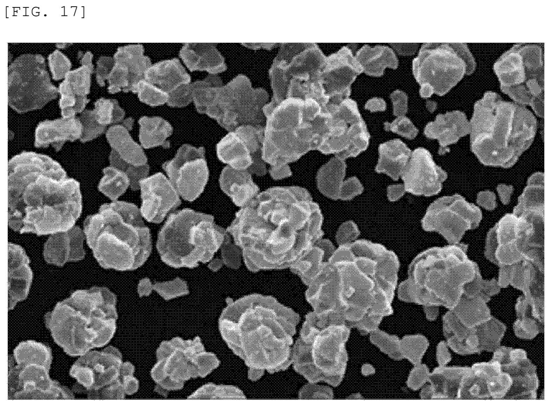

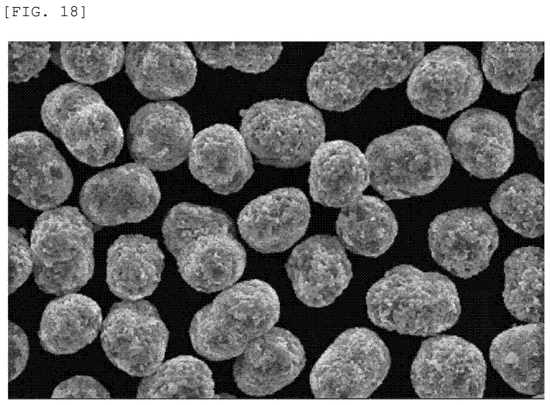

Also, image analysis was performed on the SEM image of Example 1 of the present invention based on an artificial intelligence model to obtain a segmentation image by segmentation of a plurality of lithium composite transition metal oxides, and the segmentation image is illustrated in FIG. 17 and a segmentation image of Comparative Example 1 is illustrated in FIG. 18.

[Table 1]

| Category | Average particle size of the primary particles measured from the SEM image ($\mu$m) | The number of cross sections of the primary particles within the unit area |
|---|---|---|
| Example 1 | 2.5 | 13 |
| Example 2 | 2.7 | 18 |
| Example 3 | 2.8 | 22 |
| Example 4 | 3.2 | 10 |
| Example 5 | 2.6 | 8 |
| Example 6 | 2.4 | 15 |
| Example 7 | 2.6 | 11 |
| Example 8 | 1.7 | 13 |
| Example 9 | 1.8 | 14 |
| Example 10 | 1.9 | 24 |
| Example 11 | 2.1 | 19 |
| Comparative Example 1 | < 0.5 | 120 |
| Comparative Example 2 | < 0.5 | 161 |
| Comparative Example 3 | < 0.5 | 145 |
| Comparative Example 4 | < 0.5 | 127 |
| Comparative Example 5 | 2 | 110 |
| Comparative Example 6 | 3.8 | 3 |

**Experimental Example 2: Particle Analysis 2**

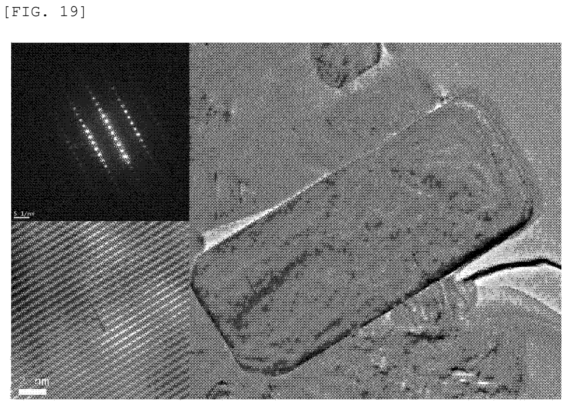

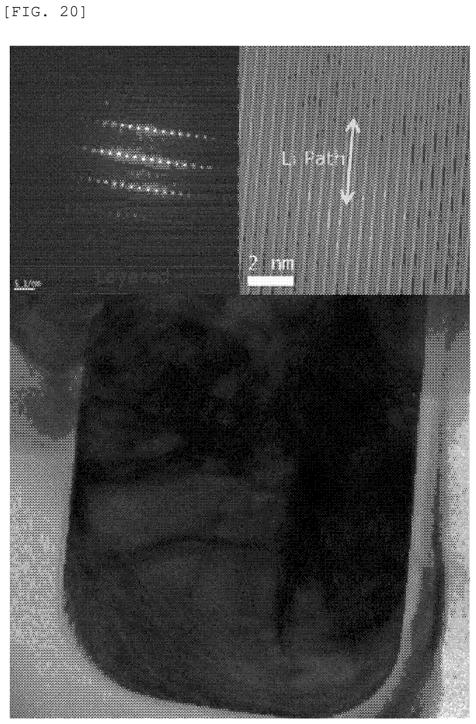

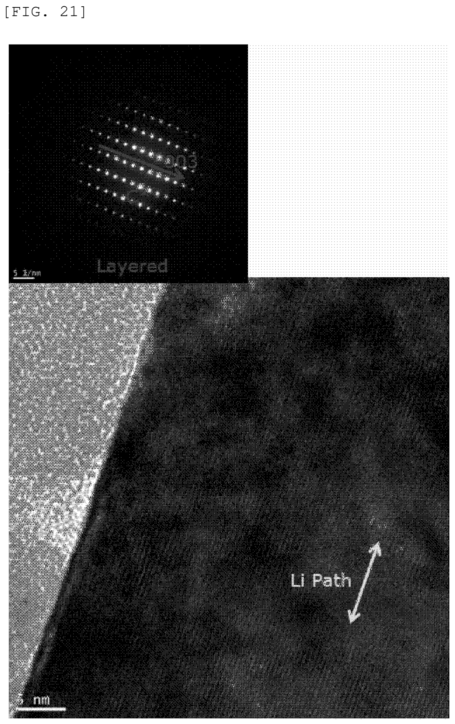

Each of the positive electrode active materials prepared in Examples 1, 2, and 8 was ion-milled and then photographed using a transmission electron microscope (FEI Titan cubed G2 60-300), and TEM images of cross sections of the primary particles of the positive electrode active materials of Examples 1, 2, and 8 are illustrated in order in FIGS. 19 to 21, respectively.

Referring to FIGS. 1 to 11 and Table 1, it may be confirmed that the positive electrode active materials of Examples 1 to 11 included a secondary particle in which a plurality of primary particles were aggregated, and the plurality of primary particles had an average particle size measured from the SEM image of 1.5 $\mu$m to 5.0 $\mu$m. Also, it may be confirmed that the plurality of primary particles included three or more disk-type primary particles. In this case, in the primary particle observed from the SEM image of the surface or cross section of the secondary particle, when an imaginary tangent line with the most contact points was drawn to each of two boundary lines of the primary particle present within an angle of 45° or less based on a long diameter direction and one imaginary line crossing the two tangent lines was drawn, the disk-type primary particle means a primary particle in which interior angles of same side were in a range of 150° to 210°. For reference, when an imaginary yellow tangent line with the most contact points was drawn to each of two boundary lines of the primary particle present within an angle of 45° or less based on a red long diameter direction in FIGS. 1(B) to 11(B), one imaginary line (not shown) crossing the two yellow tangent lines satisfied the interior angles of same side of 150° to 210°, wherein the primary particle corresponding to this case was defined as the disk-type primary particle. In addition, it may be confirmed that the disk-type primary particle had a short diameter of 0.3 $\mu$m or more and an aspect ratio (long diameter/short diameter) of 1.5 or more. Furthermore, it may be confirmed that the number of cross sections of the primary particles within the unit area was in a range of 1 to 100. Specifically, it may be confirmed that the number of cross sections of the primary particles within the unit area was in a range of 8 to 24.

Also, referring to FIGS. 1 to 11 and FIGS. 19 to 21, with respect to the positive electrode active material according to the embodiment of the present invention, it may be confirmed that an area ratio of a (003) plane to crystal planes of a surface portion of the primary particle was the largest.

With respect to the positive electrode active materials of Comparative Examples 1 to 4, it may be confirmed that the average particle size of the primary particle, which was measured from the SEM image, was small at less than 500 nm.

In addition, referring to FIGS. 17 and 18, it may be confirmed that the positive electrode active material according to the embodiment of the present invention included a single crystal primary particle.

**Experimental Example 3: Particle Analysis 3**

Each of the positive electrode active materials prepared in Examples 1 to 11 and Comparative Examples 1 to 6 was photographed using a scanning electron microscope (FEI quanta 250 FEG) equipped with EBSD.

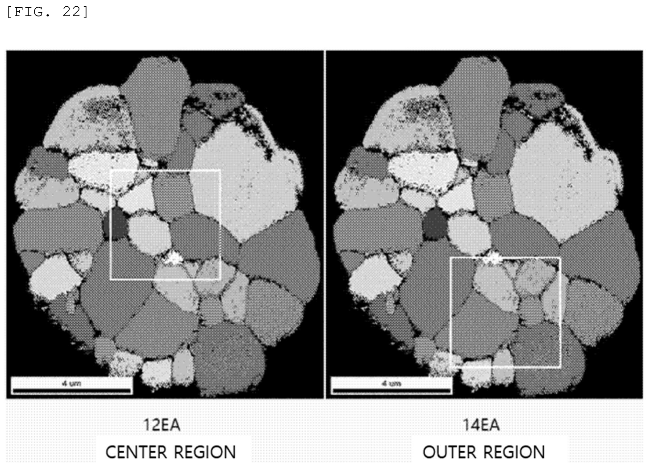

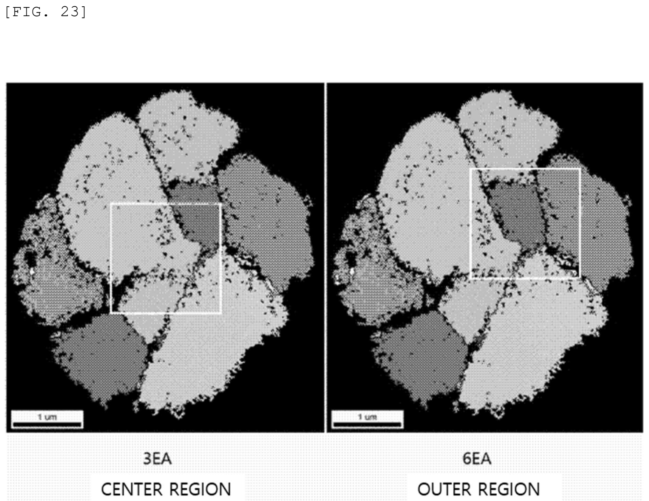

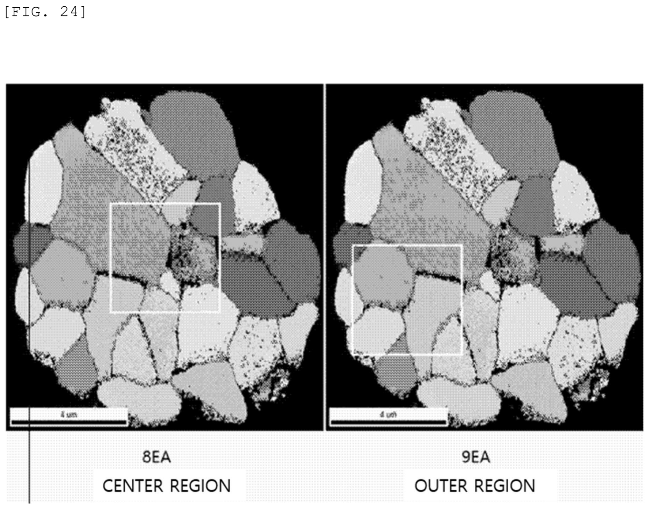

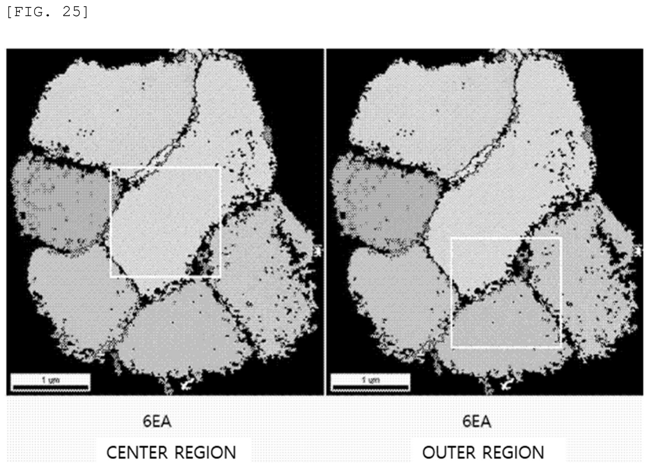

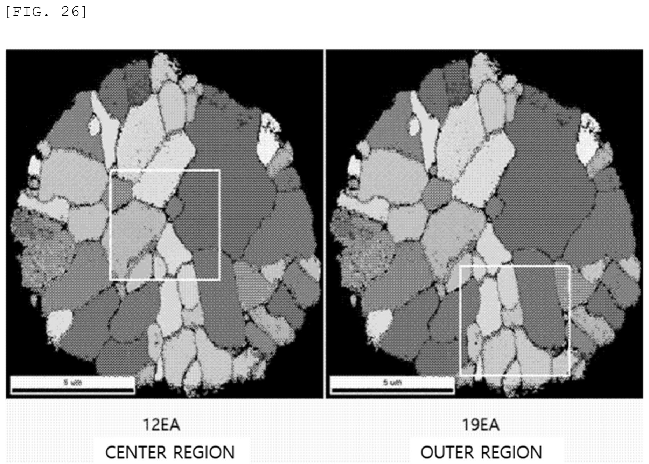

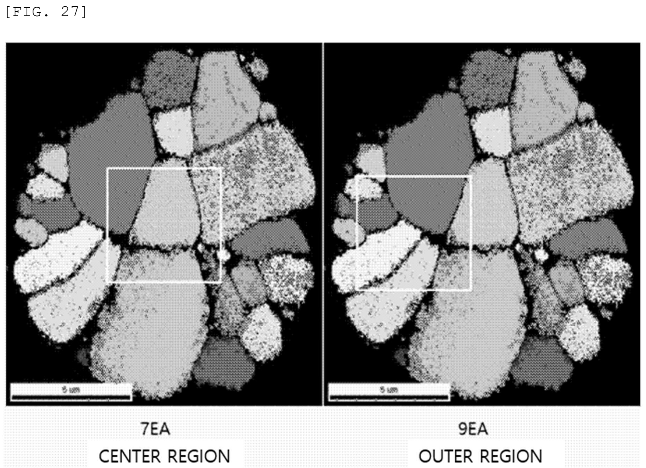

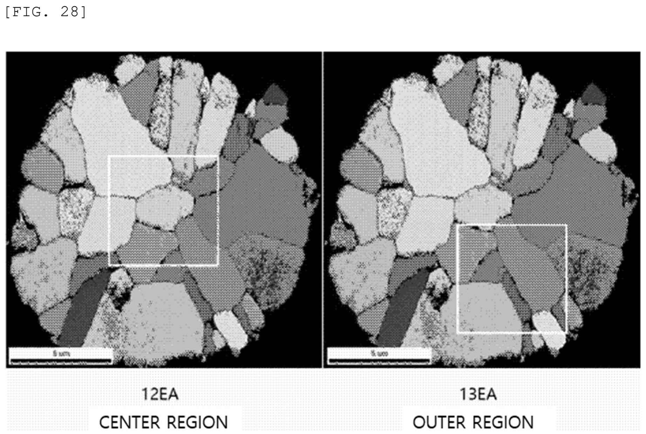

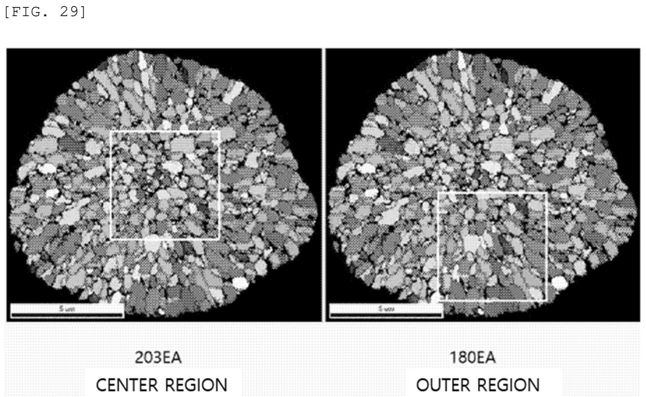

Among them, for an electron backscatter diffraction (EBSD) pattern of a cross section of the secondary particle having a size within a range of the average particle diameter ($D_{30}$) of the secondary particle which is observed from the electron backscatter diffraction (EBSD) pattern (measured under the following conditions: accelerating voltage 20 kV, WD 16 mm, measurement magnification 5,000 times (16 $\mu$m width $\times$ 16 $\mu$m height), and step size 0.025 $\mu$m) of an SEM image of the cross section of the secondary particle which was taken from a cross section of each of the positive electrode active materials of Examples 1 to 4, 8, 10, and 11 and Comparative Example 3, a unit area of 5 $\mu$m width $\times$ 5 $\mu$m length was set in each of a center region and an outer region in the cross section of the secondary particle, and presented in FIG. 22 (Example 1), FIG. 23 (Example 2), FIG. 24 (Example 3), FIG. 25 (Example 4), FIG. 26 (Example 8), FIG. 27 (Example 10), FIG. 28 (Example 11), and FIG. 29 (Comparative Example 3), and the number of cross sections of grains identified within the corresponding unit area and a degree of single-crystal formation calculated according to Equation 1 below are presented together in Table 2 below.

[Equation 1]

$$\text{Degree of single-crystal formation} = \frac{\sum_{1}^{n} \frac{4\pi}{3} \times \text{radius(grain)}^3}{n}$$

[Table 2]

| Category | The number of cross sections of grains within the unit area in the center region | The number of cross sections of grains within the unit area in the outer region | Degree of single-crystal formation ($\mu m^3$) |
|---|---|---|---|
| Example 1 | 12 | 14 | 0.86 |
| Example 2 | 3 | 6 | 0.90 |
| Example 3 | 8 | 9 | 0.92 |
| Example 4 | 6 | 6 | 0.98 |
| Example 5 | - | - | 0.87 |
| Example 6 | - | - | 0.87 |
| Example 7 | - | - | 0.88 |
| Example 8 | 12 | 19 | 1.09 |
| Example 9 | - | - | 1.20 |
| Example 10 | 7 | 9 | 1.57 |
| Example 11 | 12 | 13 | 1.56 |
| Comparative Example 1 | - | - | 0.046 |
| Comparative Example 2 | - | - | 0.04 |
| Comparative Example 3 | 203 | 180 | 0.05 |
| Comparative Example 4 | - | - | 0.07 |
| Comparative Example 5 | - | - | 0.60 |
| Comparative Example 6 | - | - | 2.80 |

Referring to Table 2, with respect to the positive electrode active materials of Examples 1 to 11, it may be confirmed that the number of cross sections of the grains within the unit area was in a range of 1 to 150. Specifically, it may be confirmed that the number of cross sections of the grains within the unit area was in a range of 3 to 19. Also, it may be confirmed that the degree of single-crystal formation was 0.15 $\mu m^3$ or more. Specifically, it may be confirmed that the degree of single-crystal formation was in a range of 0.86 $\mu m^3$ to 1.57 $\mu m^3$.

**Experimental Example 4: Particle Analysis 4**

From the SEM images obtained in Experimental Example 1, a degree of single-particle formation ($Dv_{50}$) corresponding to a diameter of volume at 50% of cumulative distribution of the volume of the primary particles present in each of the examples and the comparative examples was measured and presented in Table 3 below.

Specifically, an area of each primary particle was measured by the number of pixels corresponding to each of the n primary particles observed from an image which was obtained by projecting the SEM image of the surface of the secondary particle taken on the surface of each of the positive electrode active materials of Examples 1 to 11 and Comparative Examples 1 to 6 onto a two-dimensional plane. Thereafter, assuming that a surface of the primary particle is circular, that is, using a radius of a circle having the same area as the surface area of each primary particle, radius, as a radius of the surface of the primary particle, was derived. Using the radius, a value of volume was calculated according to Equation 5 below, and a degree of single-particle formation ($Dv_{50}$) corresponding to the diameter of volume at 50% of cumulative distribution of the volume of the primary particles was calculated and presented in Table 3 below.

[Equation 5]

$$Volume = \frac{4\pi}{3} \times radius^3$$

[Table 3]

| Category | Degree of single-particle formation ($Dv_{50}$) ($\mu$m) |
|---|---|
| Example 1 | 2.23 |
| Example 2 | 2.24 |
| Example 3 | 2.26 |
| Example 4 | 3.51 |
| Example 5 | 2.34 |
| Example 6 | 2.21 |
| Example 7 | 2.33 |
| Example 8 | 1.69 |
| Example 9 | 1.7 |
| Example 10 | 1.72 |
| Example 11 | 2.83 |
| Comparative Example 1 | 1.05 |
| Comparative Example 2 | 1.01 |
| Comparative Example 3 | 0.8 |
| Comparative Example 4 | 0.87 |
| Comparative Example 5 | 1.1 |
| Comparative Example 6 | 3.9 |

Referring to Table 3, with respect to the positive electrode active materials of Examples 1 to 11, it may be confirmed that the degrees of single-particle formation were in a range of 1.2 $\mu$m to 3.8 $\mu$m. Specifically, it may be confirmed that the degrees of single-particle formation were in a range of 1.65 $\mu$m to 3.55 $\mu$m.

With respect to the positive electrode active materials of Comparative Examples 1 to 6, it may be confirmed that degrees of single-particle formation were less than 1.2 $\mu$m or greater than 3.8 $\mu$m.

**Experimental Example 5: Particle Analysis 5**

For the positive electrode active materials prepared in Examples 1 to 11 and Comparative Examples 1 to 6, electron spectroscopy for chemical analysis (ESCA) was performed to analyze an elemental distribution in the Co and B coating layer present on the surfaces thereof using K-alpha XPS equipment by Thermo Fisher Scientific Inc. For depth profiling, etching was performed at a rate of 0.3 nm/10s using an Ar ion source to measure an amount (atomic %) of each of B and Co contained in the coating layer with a thickness of 0 nm to 100 nm, and the results thereof are presented in Tables 4 (B coating layer) and 5 (Co coating layer), respectively.

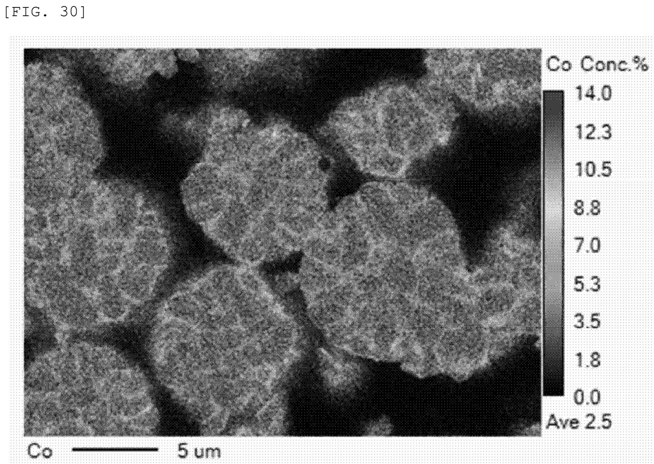

Electron probe microanalysis (EPMA) cross-sectional analysis was performed on the positive electrode active material of Example 1 to confirm surface coating characteristics. First, a positive electrode slurry was prepared by mixing the positive electrode active material of Example 1, a carbon black conductive agent, and a PVDF binder in an N-methylpyrrolidone (NMP) solvent at a weight ratio of 95:2:3. The above-prepared positive electrode slurry was applied to one surface of an aluminum current collector, dried at 130°C, and then rolled such that electrode porosity was 20% to prepare a positive electrode. In order to create a flat surface for the EPMA cross-sectional analysis, the positive electrode was Ar-ion milled at an accelerating voltage of 6 kV using HITACHI IM-5000 equipment to obtain a cross section of a positive electrode sample, a cross-sectional image of the positive electrode sample was then observed using JEOL JXA-iHP200F equipment at an accelerating voltage of 15 kV and a probe current of 50 nA and illustrated in FIG. 30.

[Table 4]

| Etching time (s) | 0 | 10 | 30 | 50 | 100 | 200 | 300 | 500 | 1000 | 2000 | 3000 |
|---|---|---|---|---|---|---|---|---|---|---|---|
| Example 1 | 10.4 | 10.7 | 9.4 | 8.4 | 6.6 | 4.3 | 3.4 | 2.4 | 1.6 | 1.3 | 1 |
| Example 2 | 11 | 10.8 | 9.4 | 8.1 | 6.5 | 4 | 3.7 | 2.8 | 1.9 | 1.1 | 1 |

(continued)

| Etching time (s) | 0 | 10 | 30 | 50 | 100 | 200 | 300 | 500 | 1000 | 2000 | 3000 |
|---|---|---|---|---|---|---|---|---|---|---|---|
| Example 3 | 10.4 | 10.8 | 9.4 | 8.9 | 6.7 | 4.3 | 3.7 | 2.4 | 1.7 | 1.2 | 1 |
| Example 4 | 10.4 | 10.2 | 9.2 | 9 | 6.8 | 4.8 | 3.5 | 2.8 | 1.8 | 1.5 | 1 |
| Example 5 | 10.4 | 10.7 | 9.9 | 8.1 | 6.7 | 4.5 | 3.4 | 2.9 | 1.1 | 1.5 | 1 |
| Example 6 | 10.4 | 10.1 | 9.2 | 8.2 | 6.1 | 4.4 | 3.8 | 2.8 | 1.2 | 1.5 | 1 |
| Example 7 | 10.4 | 10.8 | 9.7 | 8.4 | 6.2 | 4 | 3 | 2.4 | 1.5 | 1.2 | 1 |
| Example 8 | 11.2 | 11.2 | 9.1 | 8.7 | 6.8 | 4.2 | 3.1 | 2.9 | 1.9 | 1.4 | 1 |
| Example 9 | 10.7 | 10.7 | 9.1 | 8.1 | 6.4 | 4.9 | 3 | 2.8 | 1.7 | 1.5 | 1 |
| Example 10 | 10.7 | 10.8 | 9.4 | 8 | 6.4 | 4.2 | 3.4 | 2.5 | 1.8 | 1.5 | 1 |
| Example 11 | 11 | 11.2 | 9.2 | 8.7 | 6.1 | 4.5 | 3.7 | 2.9 | 1.9 | 1.5 | 1 |
| Comparative Example 1 | 16.4 | 17.5 | 15.1 | 14.8 | 11.8 | 8.9 | 7 | 5.9 | 3.5 | 2.4 | 1.5 |
| Comparative Example 2 | 16 | 17.5 | 14.8 | 14.8 | 12 | 8.7 | 7.8 | 5.1 | 3 | 2 | 1 |
| Comparative Example 3 | 16 | 16.8 | 15.1 | 14.8 | 11.4 | 8.8 | 7.5 | 5.9 | 3.5 | 1.9 | 1.5 |
| Comparative Example 4 | 15.4 | 16.4 | 15 | 14.8 | 11.2 | 8.7 | 7 | 5.5 | 3.8 | 2 | 1.1 |
| Comparative Example 5 | - | - | - | - | - | - | - | - | - | - | - |
| Comparative Example 6 | - | - | - | - | - | - | - | - | - | - | - |

[Table 5]

| Etching time (s) | 0 | 10 | 30 | 50 | 100 | 200 | 300 | 500 | 1000 | 2000 | 3000 |
|---|---|---|---|---|---|---|---|---|---|---|---|
| Example 1 | 1.8 | 3 | 4.5 | 5.4 | 5.9 | 4.8 | 3.9 | 2.2 | 1.1 | 0.9 | 0.8 |
| Example 2 | 1.7 | 2.9 | 4.9 | 5.1 | 6 | 4.5 | 3.8 | 2.1 | 1.2 | 1 | 1 |
| Example 3 | 1.6 | 2.6 | 4.5 | 5.1 | 6.1 | 4.6 | 3.9 | 2 | 1 | 0.7 | 0.7 |
| Example 4 | 1.9 | 2.7 | 4.1 | 5.2 | 6.2 | 4.7 | 3.4 | 2.4 | 1.2 | 0.8 | 0.8 |
| Example 5 | 1.7 | 2.8 | 4.2 | 5.3 | 5.8 | 4.7 | 4 | 1.9 | 1.1 | 0.9 | 0.9 |
| Example 6 | 2 | 2.8 | 4.2 | 5.5 | 5.9 | 4.8 | 3.7 | 2 | 0.9 | 0.7 | 0.8 |
| Example 7 | 1.8 | 2.7 | 4.5 | 5.4 | 5.5 | 4.9 | 3.8 | 2.1 | 1.1 | 0.9 | 0.6 |
| Example 8 | 1.6 | 3 | 4.5 | 5.3 | 5.9 | 4.5 | 3.5 | 2.2 | 1.3 | 1 | 0.7 |
| Example 9 | 1.7 | 3.1 | 4.2 | 5.3 | 5.9 | 4.8 | 3.8 | 2.1 | 1 | 1.1 | 0.9 |
| Example 10 | 2 | 3.1 | 4.4 | 5.1 | 6 | 4.9 | 3.9 | 2 | 1.2 | 0.9 | 0.8 |
| Example 11 | 1.9 | 3.3 | 4.5 | 5.1 | 6.1 | 4.9 | 4 | 2.1 | 0.9 | 1.1 | 0.7 |
| Comparative Example 1 | 0 | 0.1 | 0.1 | 0.3 | 0.3 | 0.3 | 0.4 | 0.8 | 0.9 | 0.9 | 0.6 |
| Comparative Example 2 | 0 | 0.1 | 0.2 | 0.3 | 0.2 | 0.4 | 0.5 | 0.7 | 0.8 | 0.6 | 0.5 |
| Comparative Example 3 | 0.1 | 0.1 | 0.2 | 0.2 | 0.3 | 0.5 | 0.4 | 0.7 | 0.7 | 0.8 | 1.0 |
| Comparative Example 4 | 0.1 | 0.2 | 0.1 | 0.2 | 0.3 | 0.3 | 0.4 | 0.7 | 0.7 | 0.8 | 1.0 |
| Comparative Example 5 | - | - | - | - | - | - | - | - | - | - | - |
| Comparative Example 6 | - | - | - | - | - | - | - | - | - | - | - |

Referring to the SEM images of FIGS. 1 to 11, Tables 4 and 5, and FIG. 30, with respect to the positive electrode active materials of Examples 1 to 11, it may be confirmed that a coating portion containing Co and/or B was formed the surface of the primary particle, the interface of the primary particle, and/or the surface of the secondary particle. In addition, it may be confirmed that the coating portion had both an island type, which was formed on a portion of the surface of the primary particle, the interface of the primary particle, and/or the surface of the secondary particle, and a coating layer type formed surrounding the surface of the primary particle, the interface of the primary particle, and/or the surface of the secondary particle.

**Experimental Example 6: Volume Cumulative Distribution Analysis**

For the positive electrode active materials prepared in Examples 1 to 11 and Comparative Examples 1 to 6, $D_{min}$, $D_{50}$, $D_{max}$, a mode in a cumulative distribution of volume according to a particle diameter, a y value ($P_{MODE}$) of peak point at the uppermost end of the y-axis of a peak appearing at the mode according to the volume cumulative distribution, $\theta_L$, and $\theta_R$ were measured using a particle size analyzer (PSD, Malvern Panalytical Ltd., martersizer 3500), and $\theta_L - \theta_R$ was calculated and presented in Table 6.

In addition, a skewness value (S) was calculated from Equation 3 below, and a ratio ($S/P_{MODE}$) of the skewness value (S) to the y value ($P_{MODE}$) of the peak point at the uppermost end of the y-axis of the peak appearing at the mode according to the volume cumulative distribution was calculated and presented together in Table 6 below.

$$[\text{Equation 3}]$$

$$\text{Skewness value (S)} = 3 \times$$

$$\frac{(\text{volume average particle diameter}) - (D_{50})}{\text{standard deviation of positive electrode active material particle diameter}}$$

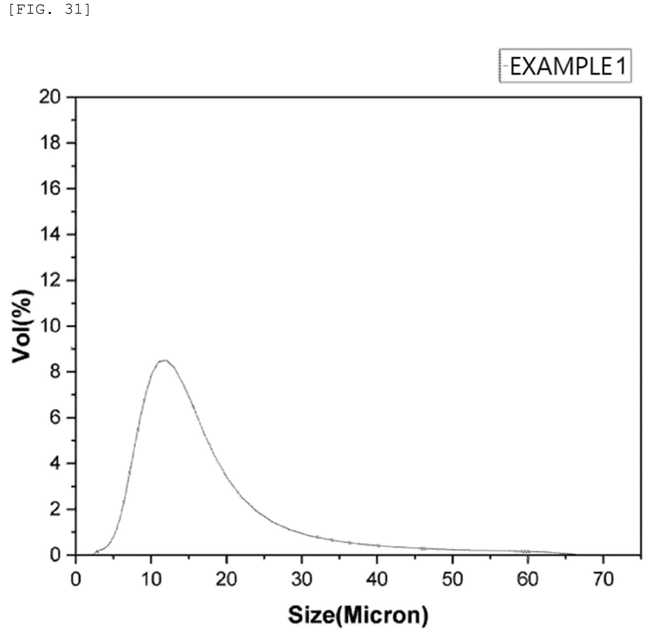

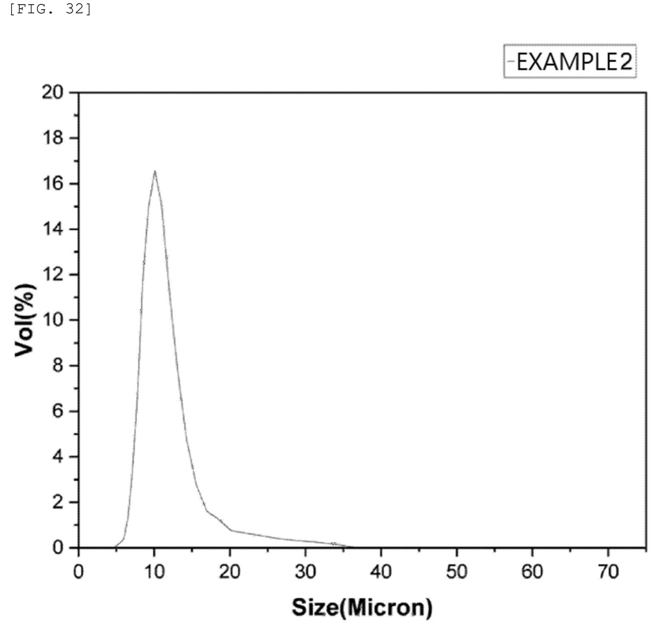

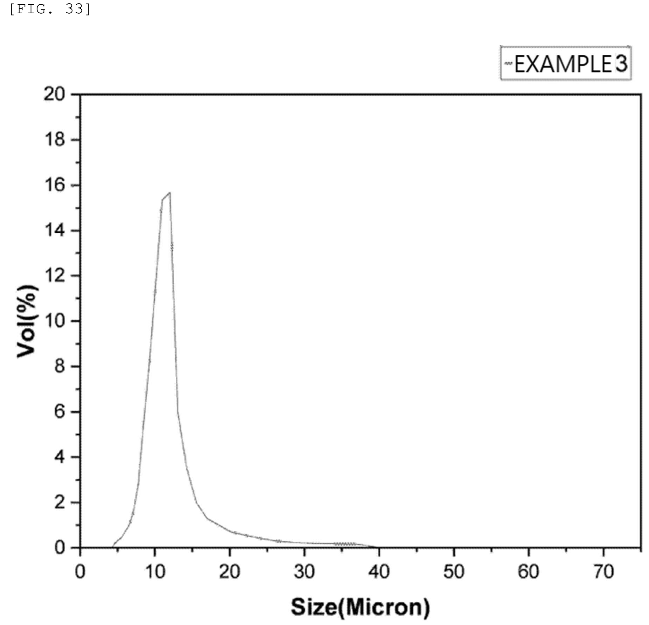

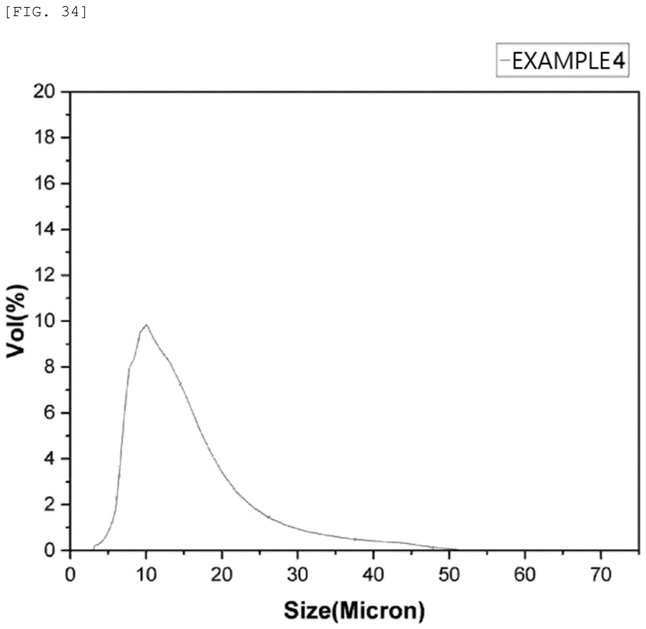

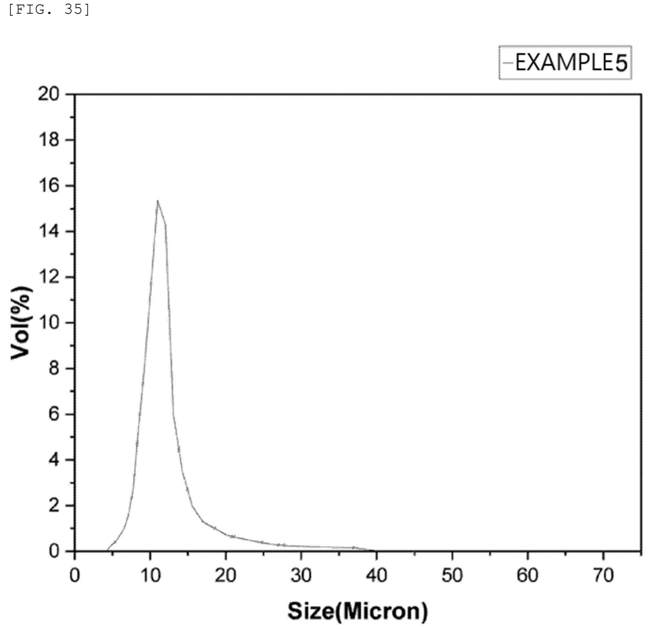

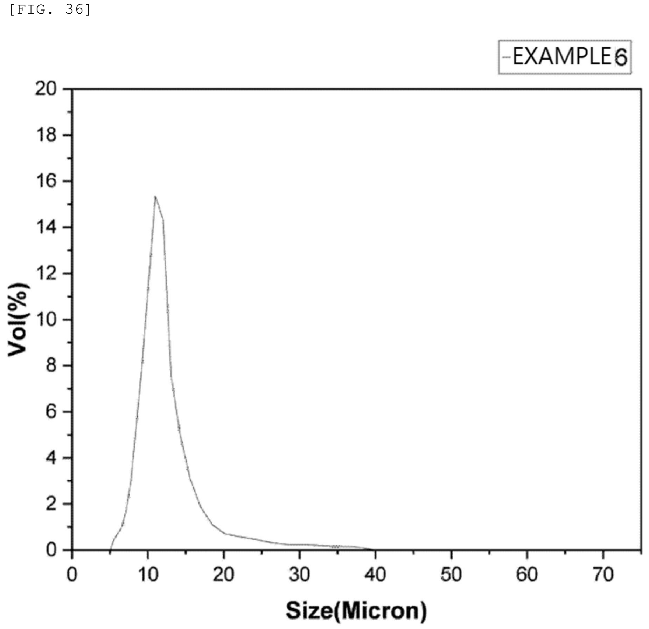

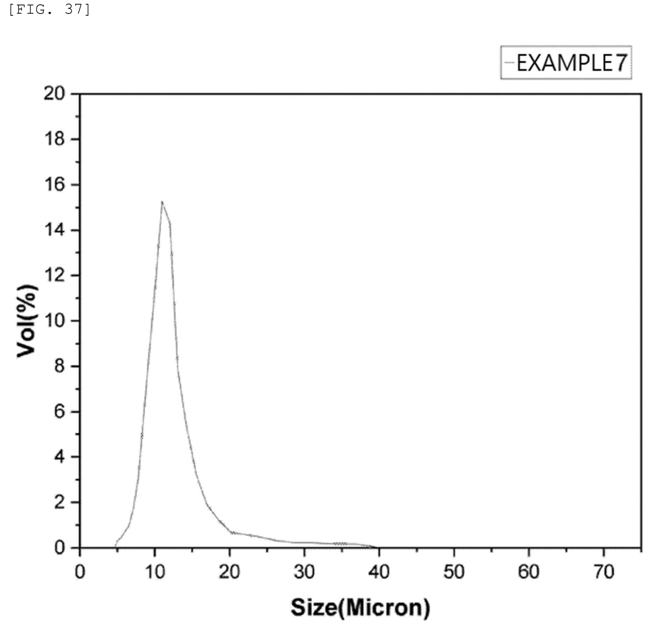

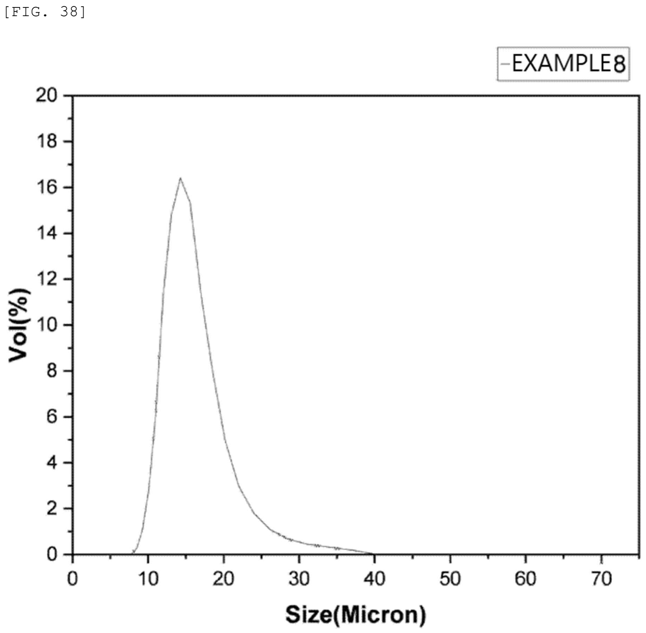

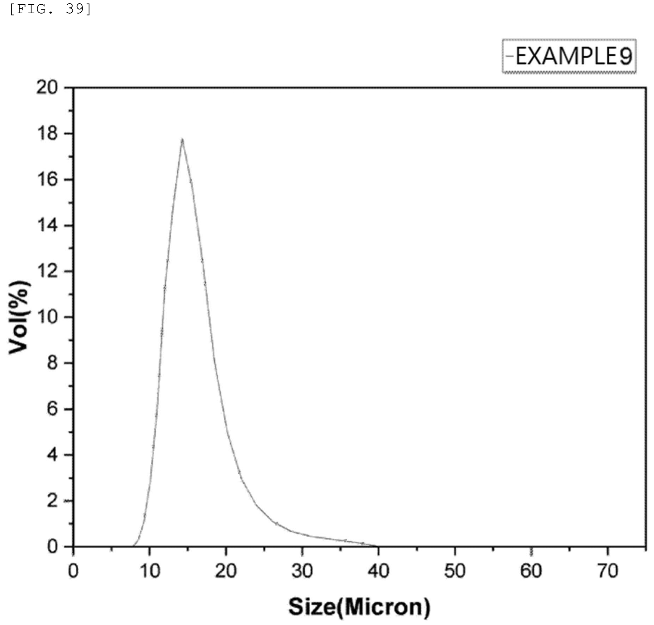

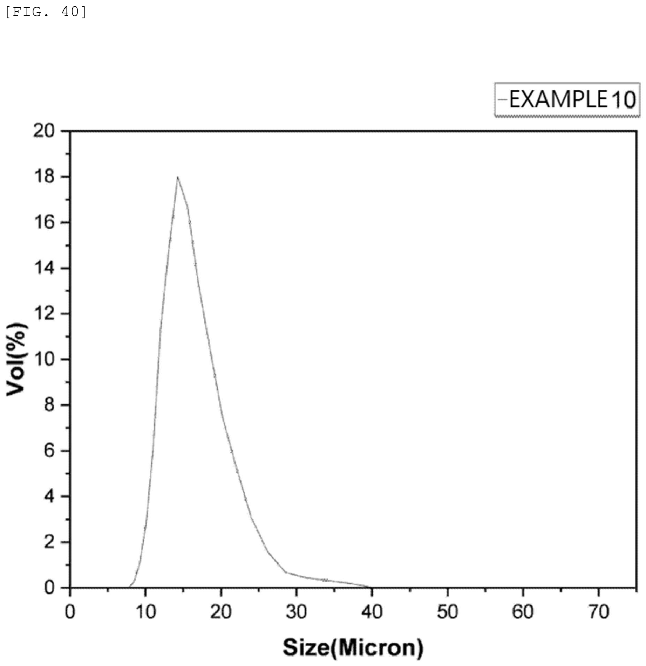

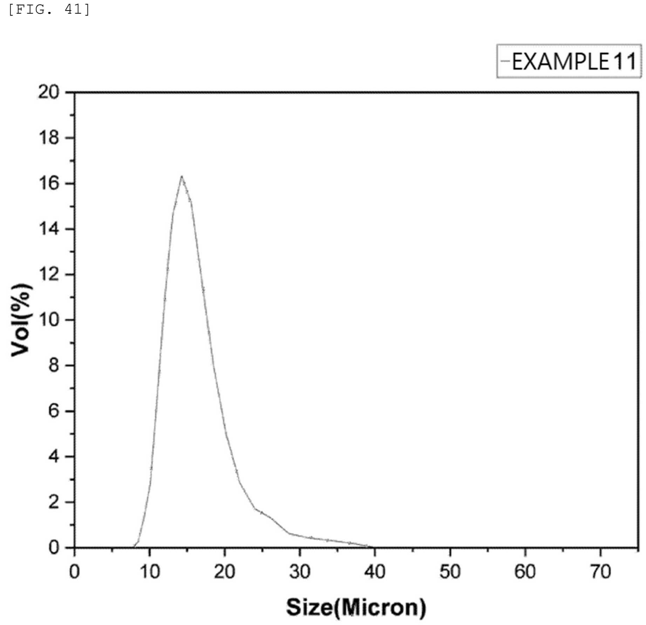

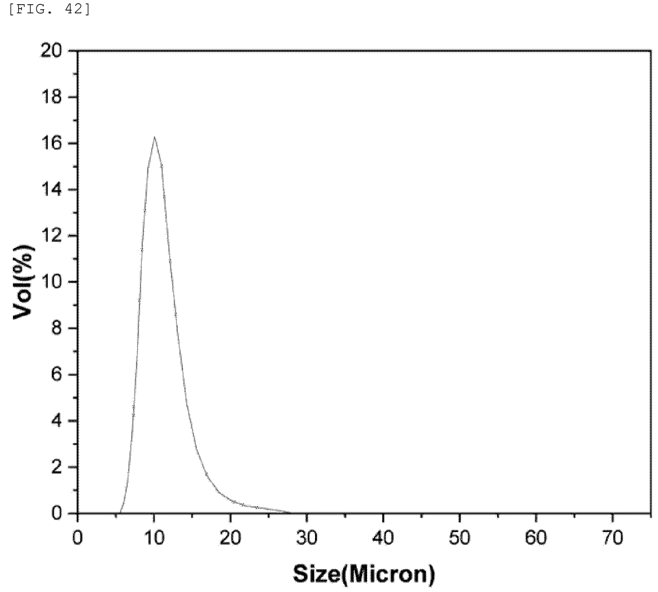

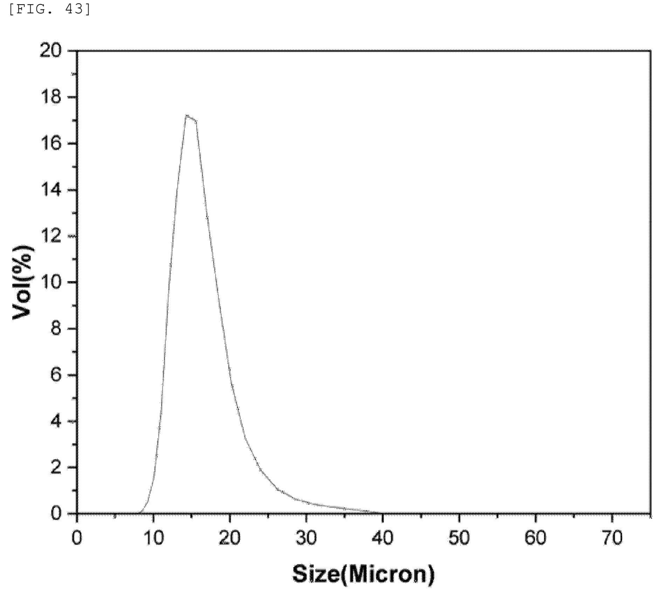

Also, frequency distribution graphs illustrating volume cumulative distributions, which were obtained by measuring the positive electrode active materials of Examples 1 to 11 and Comparative Examples 1 and 3 using a laser diffraction particle size analyzer, where an x value of the x-axis represents a particle diameter increasing from left to right on a linear scale, and a y value of the y-axis represents a weight distribution increasing from bottom to top, are illustrated in FIG. 31 (Example 1), FIG. 32 (Example 2), FIG. 33 (Example 3), FIG. 34 (Example 4), FIG. 35 (Example 5), FIG. 36 (Example 6), FIG. 37 (Example 7), FIG. 38 (Example 8), FIG. 39 (Example 9), FIG. 40 (Example 10), FIG. 41 (Example 11), FIG. 42 (Comparative Example 1), and FIG. 43 (Comparative Example 3), respectively.

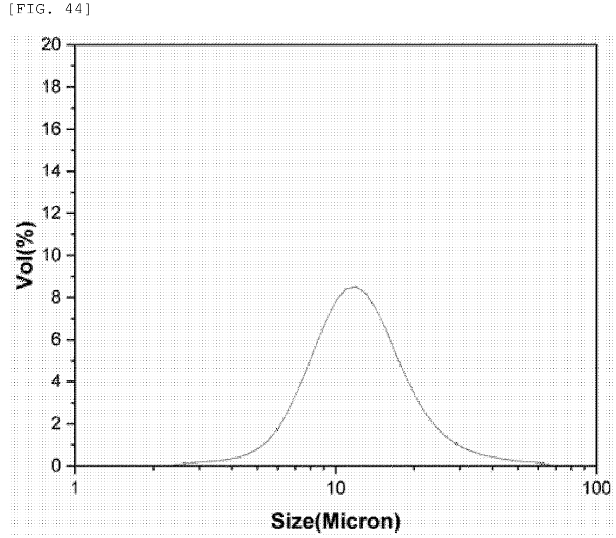

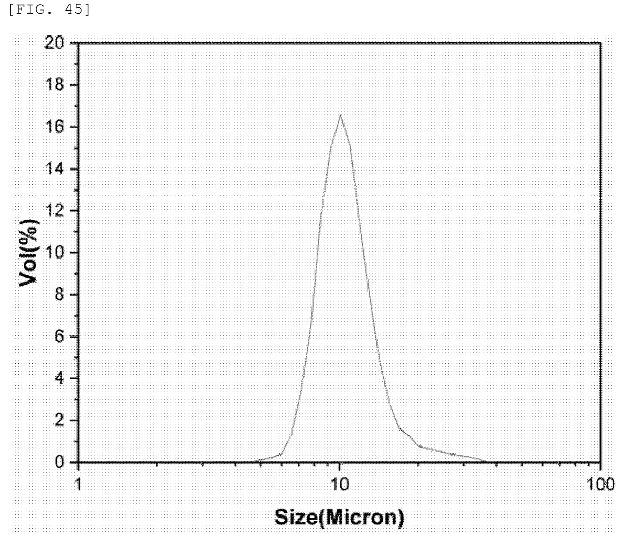

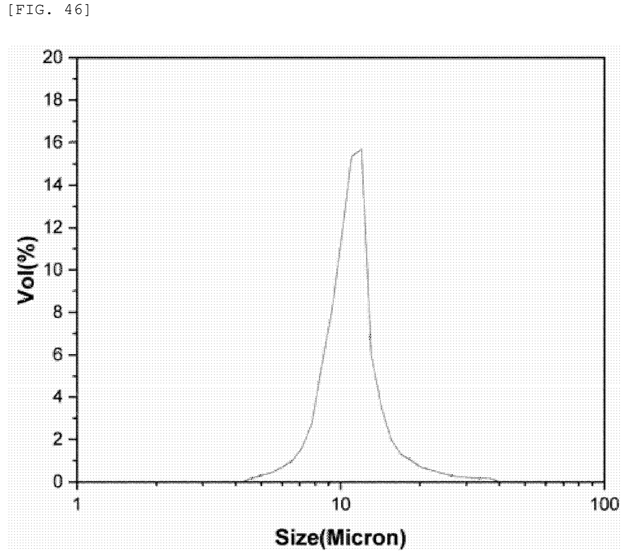

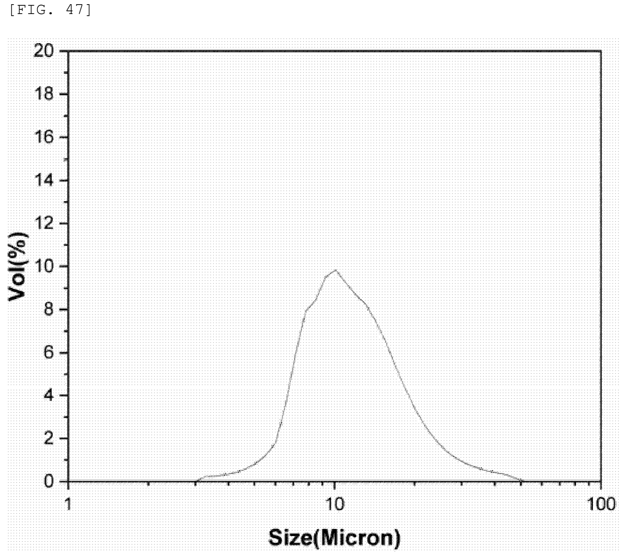

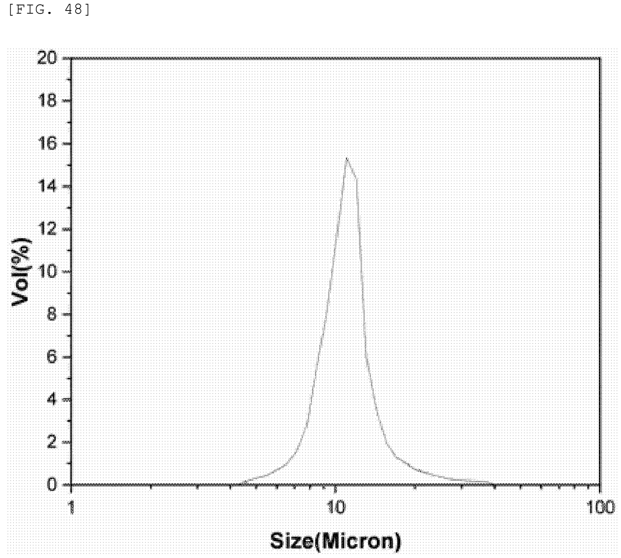

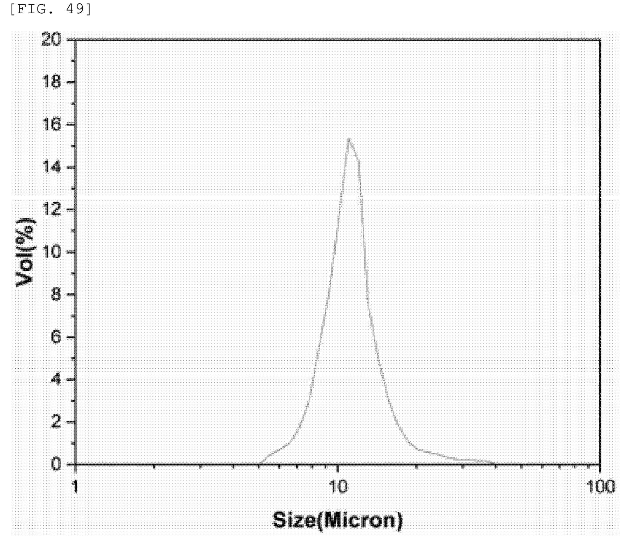

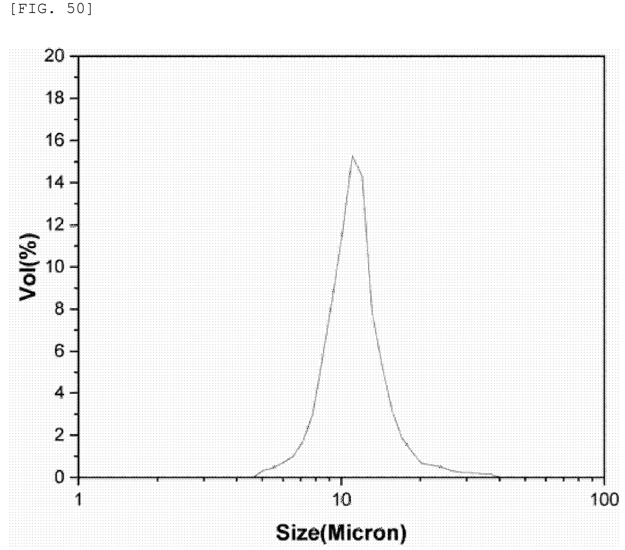

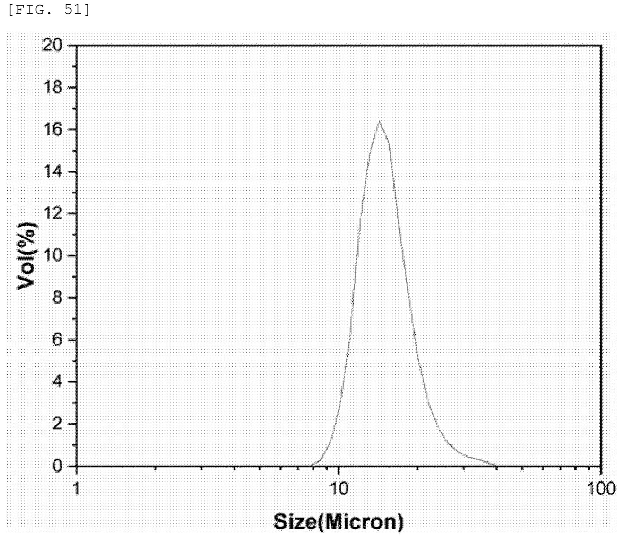

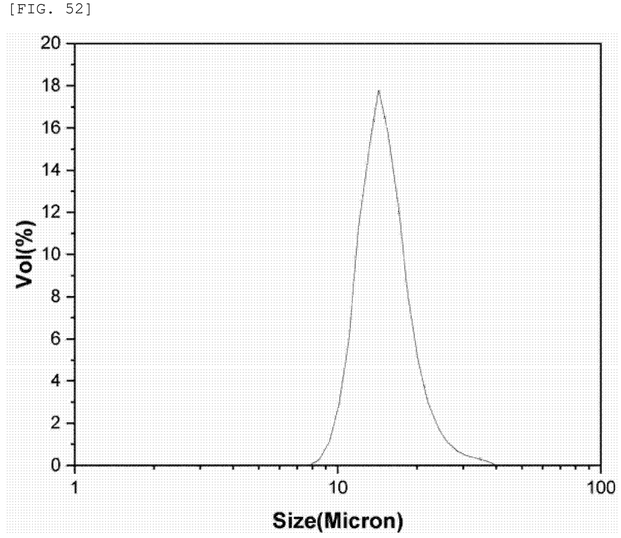

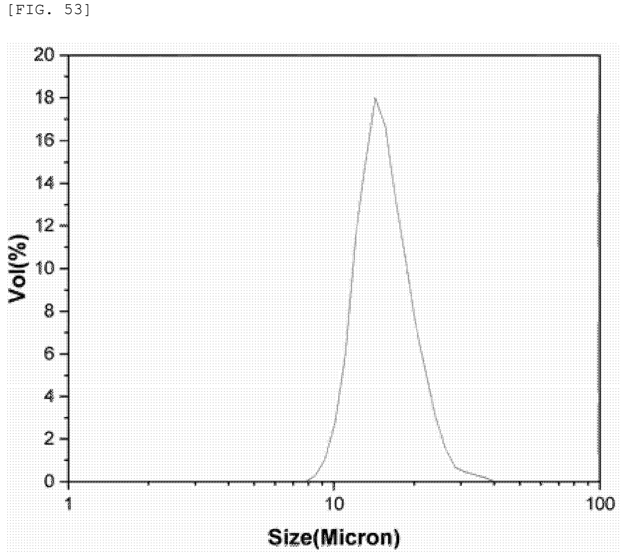

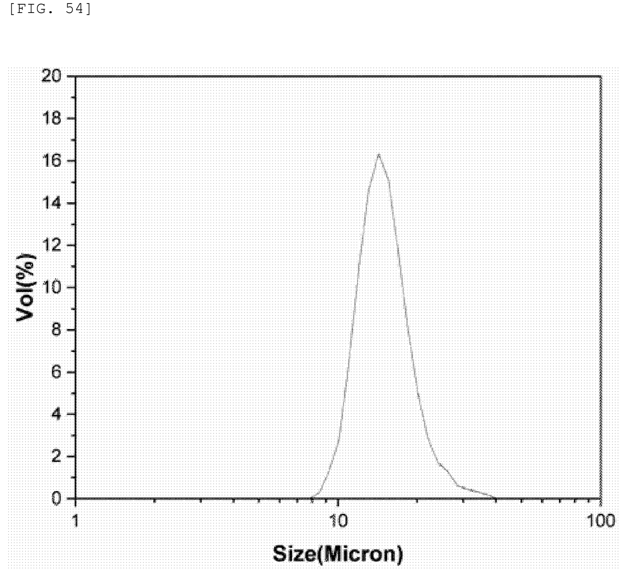

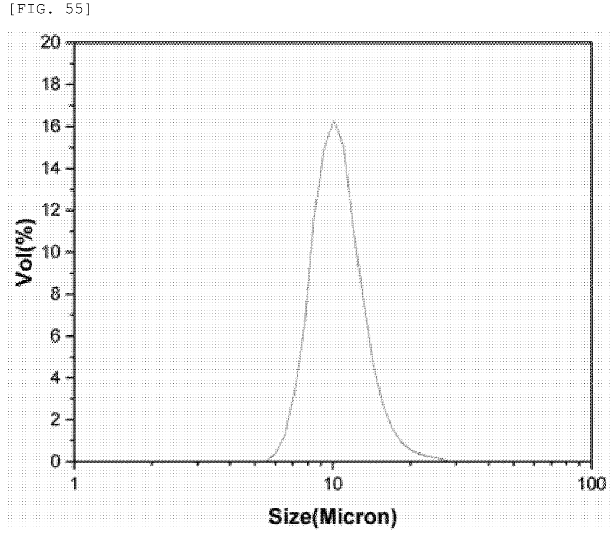

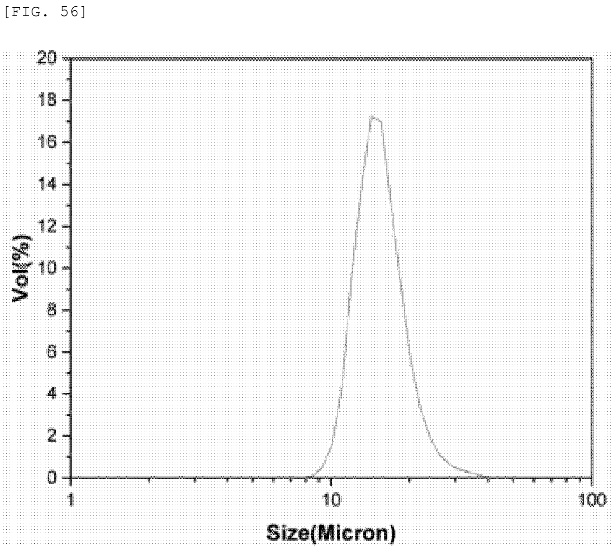

In addition, frequency distribution graphs illustrating volume cumulative distributions, which were obtained by measuring the positive electrode active materials of Examples 1 to 11 and Comparative Examples 1 and 3 using a laser diffraction particle size analyzer, where an x value of the x-axis represents a particle diameter increasing from left to right on a log scale, and a y value of the y-axis represents a weight distribution increasing from bottom to top, are illustrated in FIG. 44 (Example 1), FIG. 45 (Example 2), FIG. 46 (Example 3), FIG. 47 (Example 4), FIG. 48 (Example 5), FIG. 49 (Example 6), FIG. 50 (Example 7), FIG. 51 (Example 8), FIG. 52 (Example 9), FIG. 53 (Example 10), FIG. 54 (Example 11), FIG. 55 (Comparative Example 1), and FIG. 56 (Comparative Example 3), respectively.

[Table 6]

| Category | $D_{min}$ ($\mu$m) | $D_{50}$ ($\mu$m) | $D_{max}$ ($\mu$m) | Mode ($\mu$m) | $P_{MODE}$ | Skewness value (S) | $S / P_{MODE}$ | $\theta_L$ | $\theta_R$ | $\theta_L/\theta_R$ | $\theta_L - \theta_R$ |
|---|---|---|---|---|---|---|---|---|---|---|---|
| Example 1 | 2.52 | 11.47 | 62.23 | 12.00 | 8.51 | 0.926 | 0.109 | 47.98 0 | 33.16 1 | 1.447 | 14.81 9 |
| Example 2 | 5.04 | 10.32 | 37.00 | 10.60 | 13.72 | 1.037 | 0.076 | 71.68 4 | 63.08 9 | 1.136 | 8.595 |
| Example 3 | 4.62 | 9.87 | 37.00 | 9.92 | 12.98 | 0.587 | 0.045 | 71.21 5 | 62.58 2 | 1.138 | 8.633 |
| Example 4 | 3.27 | 10.06 | 52.33 | 10.50 | 12.75 | 1.007 | 0.079 | 50.34 5 | 42.75 1 | 1.235 | 7.594 |
| Example 5 | 5.04 | 9.95 | 37.00 | 10.37 | 12.25 | 0.744 | 0.061 | 72.13 5 | 65.42 1 | 1.103 | 6.714 |
| Example 6 | 5.50 | 10.62 | 40.35 | 10.60 | 13.32 | 1.017 | 0.076 | 72.84 2 | 65.95 | 1.105 | 6.892 |
| Example 7 | 5.04 | 10.29 | 37.00 | 10.09 | 13.06 | 0.761 | 0.058 | 72.75 3 | 65.00 5 | 1.119 | 7.748 |
| Example 8 | 8.48 | 14.07 | 37.00 | 14.27 | 16.42 | 0.658 | 0.040 | 71.52 1 | 64.75 7 | 1.104 | 6.764 |
| Example 9 | 8.48 | 14.13 | 37.00 | 14.27 | 16.31 | 0.800 | 0.049 | 70.69 5 | 63.29 5 | 1.117 | 7.400 |
| Example 10 | 8.48 | 14.20 | 37.00 | 14.27 | 16.28 | 0.781 | 0.048 | 70.53 8 | 62.81 2 | 1.123 | 7.726 |
| Example 11 | 8.48 | 14.27 | 37.00 | 14.27 | 16.30 | 0.755 | 0.046 | 70.77 4 | 63.00 4 | 1.123 | 7.770 |

(continued)

| Category | $D_{min}$ (μm) | $D_{50}$ (μm) | $D_{max}$ (μm) | Mode (μm) | $P_{MODE}$ | Skewness value (S) | S / $P_{MODE}$ | $\theta_L$ | $\theta_R$ | $\theta_L/\theta_R$ | $\theta_L - \theta_R$ |
|---|---|---|---|---|---|---|---|---|---|---|---|
| Comparative Example 1 | 6.54 | 9.85 | 26.16 | 10.09 | 16.90 | 0.596 | 0.035 | 75.64 6 | 71.02 | 1.065 | 4.626 |
| Comparative Example 2 | 7.13 | 11.82 | 37.00 | 12.00 | 14.52 | 0.411 | 0.028 | 78.62 1 | 73.02 6 | 1.077 | 5.595 |
| Comparative Example 3 | 5.04 | 9.95 | 37.00 | 10.37 | 18.01 | 0.653 | 0.036 | 72.13 5 | 70.86 0 | 1.018 | 1.275 |
| Comparative Example 4 | 5.50 | 10.62 | 40.35 | 10.60 | 12.01 | 1.825 | 0.152 | 72.84 2 | 68.95 2 | 1.056 | 3.890 |
| Comparative Example 5 | 6.54 | 10.43 | 37.00 | 10.78 | 20.36 | 0.732 | 0.036 | 64.32 5 | 59.36 5 | 1.084 | 4.960 |
| Comparative Example 6 | 5.04 | 9.98 | 26.16 | 10.31 | 18.00 | 0.655 | 0.036 | 68.38 7 | 63.03 5 | 1.085 | 5.352 |

Referring to Table 6, with respect to the positive electrode active materials of Examples 1 to 11, it may be confirmed that the $D_{50}$ was in a range of 7.0 μm to 20.0 μm. Also, it may be confirmed that ($\theta_L - \theta_R$) values were in a range of 6 to 20. In addition, it may be confirmed that positive skewness was shown in the frequency distribution graphs illustrating the volume cumulative distributions measured using the laser diffraction particle size analyzer, where the x value of the x-axis represents a particle diameter increasing from left to right on a linear scale, and the y value of the y-axis represents a weight distribution increasing from bottom to top.

**Experimental Example 7: Rolling Density Measurement**

Using an automatic pellet press (Auto Pellet Press, Carver, 3887.4), a zero point of thickness was adjusted for a circular pellet holder having a diameter of 13 mm using a cylindrical mold. Subsequently, 3 g of each of the positive electrode active materials prepared in Examples 1 to 11 and Comparative Examples 1 to 6 was put into the circular pellet holder, and a force was applied until it reached 9,000 kgf to measure a thickness of a formed pellet. Subsequently, a pellet volume was calculated using Equation 4 below, rolling density was calculated using Equation 2 below, and the results thereof are presented in Table 7 below.

Pellet volume (cm$^3$) = π(radius of circular pellet holder)$^2$ × pellet thickness          [Equation 4]

Rolling density (g/cm$^3$) = positive electrode active material weight (g)/pellet volume (cm$^3$)          [Equation 2]

[Table 7]

| Category | Rolling density (g/cm$^3$) |
|---|---|
| Example 1 | 3.67 |
| Example 2 | 3.68 |
| Example 3 | 3.67 |
| Example 4 | 3.69 |
| Example 5 | 3.68 |
| Example 6 | 3.66 |
| Example 7 | 3.69 |
| Example 8 | 3.75 |

(continued)

| Category | Rolling density (g/cm$^3$) |
|---|---|
| Example 9 | 3.76 |
| Example 10 | 3.74 |
| Example 11 | 3.76 |
| Comparative Example 1 | 3.27 |
| Comparative Example 2 | 3.30 |
| Comparative Example 3 | 3.49 |
| Comparative Example 4 | 3.46 |
| Comparative Example 5 | - |
| Comparative Example 6 | - |

Referring to Table 7, with respect to the positive electrode active materials of Examples 1 to 11, it may be confirmed that rolling densities were 3.60 g/cm$^3$ or more. Specifically, it may be confirmed that the rolling densities were 3.66 g/cm$^3$ or more.

**Experimental Example 8: BET Specific Surface Area Measurement**

A specific surface area was measured by a nitrogen gas adsorption and desorption method. Specifically, after measuring a weight of an empty cell, 3 g of each of the positive electrode active materials prepared in Examples 1 to 11 and Comparative Examples 1 to 6 was taken and pretreated at 130°C for 3 hours. After measuring a weight of the cell after the pretreatment process, a Dewar vessel containing liquid nitrogen was prepared, and the cell was then connected thereto. A Brunauer-Emmett-Teller (BET) specific surface area was measured from a nitrogen gas adsorption amount using a gas adsorption analyzer (Micromeritics TriStarr II) in a nitrogen atmosphere, and presented in Table 8 below.

[Table 8]

| Category | Specific surface area (m$^2$/g) |
|---|---|
| | |
| Example 1 | 0.305 |
| Example 2 | 0.294 |
| Example 3 | 0.240 |
| Example 4 | 0.305 |
| Example 5 | 0.312 |
| Example 6 | 0.322 |
| Example 7 | 0.307 |
| Example 8 | 0.332 |
| Example 9 | 0.328 |
| Example 10 | 0.270 |
| Example 11 | 0.338 |
| Comparative Example 1 | 0.504 |
| Comparative Example 2 | 0.592 |
| Comparative Example 3 | 0.631 |
| Comparative Example 4 | 0.729 |
| Comparative Example 5 | 0.510 |
| Comparative Example 6 | 0.200 |

Referring to Table 8, with respect to the positive electrode active materials of Examples 1 to 11, it may be confirmed that BET specific surface areas were in a range of 0.20 m$^2$/g to 0.35 m$^2$/g. Specifically, it may be confirmed that the BET specific surface areas were in a range of 0.240 m$^2$/g to 0.338 m$^2$/g.

**Experimental** Example 9: **Coin-type Half-cell Preparation and Charge and Discharge Evaluation**

A positive electrode slurry was prepared by mixing 95 parts by weight of each of the positive electrode active materials prepared in Examples 1 to 11 and Comparative Examples 1 to 6, 2 parts by weight of a conductive agent (Denka Company Limited, FX35), and 3 parts by weight of a binder (Kureha Corporation, KF9709) in a N-methylpyrrolidone (NMP) solvent. One surface of a 20 μm thick aluminum current collector was coated with the above-prepared positive electrode slurry and rolled such that a porosity of a positive electrode active material layer was 24 vol% to prepare a positive electrode.

A lithium metal electrode was used as a negative electrode, and an electrode assembly was prepared by disposing a porous polyethylene separator between the positive electrode and the negative electrode. A lithium secondary battery was prepared by disposing the electrode assembly in a battery case and injecting an electrolyte solution. In this case, the electrolyte solution was prepared by dissolving 1 M LiPF$_6$ in an organic solvent in which ethylene carbonate (EC):ethyl methyl carbonate (EMC):dimethyl carbonate (DMC) were mixed in a volume ratio of 3:3:4.

Charge capacity and discharge capacity were measured while the above-prepared lithium secondary battery including each of the positive electrode active materials prepared in Examples 1 to 11 and Comparative Examples 1 to 6 was charged at a constant current of 0.1 C to 4.25 V in a constant current/constant voltage (CC/CV) mode at 25°C (end current 0.05 C), and then discharged to 2.5 V in a CC mode, and presented in Table 9 below. In this case, it was set that 1 C = 200 mA/g.

Also, charging of the above-prepared lithium secondary battery at a constant current of 0.5 C to 4.25 V in a CC-CV mode at 45°C (end current 0.05 C) and discharging of the lithium secondary battery at a constant current of 1.0 C to 2.5 V in a CC mode were set as one cycle and 50 cycles were repeated, and a percentage of 50th cycle discharge capacity relative to 1st cycle discharge capacity was set as a capacity retention and the capacity retentions are presented together in Table 9 below.

[Table 9]

| Category | Charge capacity | Discharge capacity | Efficiency | Direct current | High-temperature (45°C) capacity retention |
|---|---|---|---|---|---|
| | (mAh/g) | (mAh/g) | (%) | (Ω) | (%) |
| Example 1 | 233.6 | 209.0 | 89.5 | 18.5 | 96.17 |
| Example 2 | 233.4 | 208.4 | 89.3 | 20.2 | 96.30 |
| Example 3 | 233.6 | 207.1 | 88.7 | 20.4 | 96.93 |
| Example 4 | 231.1 | 205.8 | 89.1 | 19.4 | 96.57 |
| Example 5 | 232.6 | 207.7 | 89.3 | 18.4 | 95.80 |
| Example 6 | 231.7 | 208.7 | 90.1 | 18.2 | 96.20 |
| Example 7 | 232.0 | 207.9 | 89.6 | 13.2 | 96.50 |
| Example 8 | 247.9 | 216.5 | 87.3 | 29.2 | 93.67 |
| Example 9 | 247.6 | 216.3 | 87.3 | 30.2 | 94.00 |
| Example 10 | 247.4 | 215.1 | 86.9 | 30.2 | 95.45 |
| Example 11 | 245.9 | 212.4 | 86.4 | 30.5 | 94.92 |
| Comparative Example 1 | 232.4 | 212.1 | 91.3 | 19.6 | 94.90 |
| Comparative Example 2 | 231.1 | 211.7 | 91.6 | 20.4 | 94.50 |
| Comparative Example 3 | 242.6 | 222.8 | 91.8 | 24.5 | 95.20 |
| Comparative Example 4 | 242.9 | 223.4 | 92.0 | 23.1 | 95.30 |
| Comparative Example 5 | 230.5 | 205.1 | 89.0 | 24.0 | 87.00 |
| Comparative Example 6 | 230.9 | 196.2 | 85.0 | 35.0 | 89.00 |

**Experimental Example 10: High-rate Discharge Capacity Evaluation**

Discharge capacity was measured while each lithium secondary battery prepared in Experimental Example 9 was charged at a constant current of 0.5 C to 4.25 V in a CC/CV mode at 25°C (end current 0.05 C), and then discharged at a constant current of 0.1 C to 2.5 V in a CC mode. Also, discharge capacity was measured while each lithium secondary battery was charged at a constant current of 0.5 C to 4.25 V in a CC/CV mode at 25°C (end current 0.05 C), and then discharged at a constant current of 1.0 C to 2.5 V in a CC mode, discharge capacity was measured while each lithium secondary battery was charged at a constant current of 0.5 C to 4.25 V in a CC/CV mode at 25°C (end current 0.05 C), and then discharged at a constant current of 2.0 C to 2.5 V in a CC mode, and a percentage of each discharge capacity relative to the discharge capacity when discharged at 0.1 C after being charged at 0.5 C is presented in Table 10 below.

[Table 10]

| Category | (1.0 C discharge capacity)/(0.1 C discharge capacity) $\times$ 100 (%) | (2.0 C discharge capacity)/(0.1 C discharge capacity) $\times$ 100 (%) |
|---|---|---|
| Example 1 | 92.77 | 90.64 |
| Example 2 | 92.72 | 90.64 |
| Example 3 | 92.70 | 90.48 |
| Example 4 | 92.66 | 90.44 |
| Example 5 | 92.82 | 90.43 |
| Example 6 | 92.85 | 90.58 |
| Example 7 | 92.83 | 90.64 |
| Example 8 | 93.43 | 91.02 |
| Example 9 | 93.38 | 90.95 |
| Example 10 | 93.35 | 90.87 |
| Example 11 | 93.04 | 89.78 |
| Comparative Example 1 | 87.47 | 86.18 |
| Comparative Example 2 | 87.60 | 86.28 |
| Comparative Example 3 | 90.44 | 87.63 |
| Comparative Example 4 | 90.84 | 88.74 |
| Comparative Example 5 | 91.05 | 88.25 |
| Comparative Example 6 | 93.89 | 92.40 |

Referring to Tables 9 and 10, with respect to the batteries including the positive electrode active materials of Examples 1 to 11, it may be confirmed that discharge capacities were large, efficiencies and high-temperature capacity retentions were high, direct current resistances were low, and rate capabilities were excellent. In contrast, it may be confirmed that the batteries including the positive electrode active materials of Comparative Examples 1 to 6 had a problem of poor efficiency and high-temperature capacity retention, and the batteries including the positive electrode active materials of Comparative Examples 1 to 5 had a problem of poor rate capability.

From these results, it may be confirmed that the positive electrode active material of the present invention was a high nickel (high Ni) positive electrode active material which may simultaneously solve a problem of a conventional secondary particle and a problem of a single particle, wherein the positive electrode active material of the present invention may improve energy density through excellent density characteristics as well as cell characteristics, such as improved lifetime and reduced gas generation amount of the lithium secondary battery, by achieving the positive electrode active material in the form of a secondary particle in which the size of the primary particle is at a micron level.

**Claims**

**1.** A positive electrode active material comprising a secondary particle in which a plurality of primary particles are aggregated,

wherein the plurality of primary particles have an average particle size measured from a scanning electron microscope (SEM) image of 1.5 $\mu$m to 5.0 $\mu$m,

wherein the particle size of the primary particle is a particle size based on a long diameter of the primary particle, and

when calculating a value of volume from Equation 5 for each of the primary particles observed from an SEM image (measurement magnification 3,000 times) of a surface of the secondary particle, a degree of single-particle formation ($Dv_{50}$) corresponding to a diameter of volume at 50% of cumulative distribution of the volume of the primary particles is in a range of 1.2 $\mu$m to 3.8 $\mu$m:

[Equation 5]

$$Volume = \frac{4\pi}{3} \times radius^3$$

wherein, in Equation 5,

radius is a radius of a surface of the primary particle when assuming that the surface of the primary particle, which is observed from the SEM image (measurement magnification 3,000 times) of the surface of the secondary particle, is circular.

2. The positive electrode active material of claim 1, wherein the degree of single-particle formation ($Dv_{50}$) is in a range of 1.65 $\mu$m to 3.55 $\mu$m.

3. The positive electrode active material of claim 1, further comprising a lithium transition metal composite oxide containing nickel, cobalt, and manganese.

4. The positive electrode active material of claim 1, further comprising a lithium transition metal composite oxide containing 60 mol% or more of nickel among total transition metals.

5. The positive electrode active material of claim 1, further comprising a lithium transition metal composite oxide having an average composition represented by Formula 1:

[Formula 1]    $Li_xNi_aCo_bMn_cM^1_dO_2$

wherein, in Formula 1,

$M^1$ is at least one selected from the group consisting of aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), vanadium (V), fluorine (F), phosphorus (P), sulfur (S), and yttrium (Y), and

$0.9 \leq x \leq 1.3$, $0.6 \leq a < 1.0$, $0 < b < 0.4$, $0 < c < 0.4$, $0 \leq d \leq 0.2$, and $a+b+c+d=1$.

6. The positive electrode active material of claim 1, wherein the plurality of primary particles comprise a single crystal primary particle.

7. The positive electrode active material of claim 1, wherein the secondary particle has an average particle diameter ($D_{50}$) according to a volume cumulative distribution measured using a laser diffraction particle size analyzer of 7.0 $\mu$m to 20.0 $\mu$m.

8. A positive electrode comprising the positive electrode active material of any one of claims 1 to 7.

9. A lithium secondary battery comprising the positive electrode of claim 8; a negative electrode; a separator disposed between the positive electrode and the negative electrode, and an electrolyte.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

(A)

(B)

[FIG. 13]

(A)

(B)

[FIG. 14]

[FIG. 15]

(A)

(B)

[FIG. 16]

(A)

[FIG. 17]

[FIG. 18]

[FIG. 19]

[FIG. 20]

[FIG. 21]

[FIG. 22]

12EA
CENTER REGION

14EA
OUTER REGION

EP 4 685 856 A1

[FIG. 23]

3EA

CENTER REGION

6EA

OUTER REGION

62

[FIG. 24]

8EA
CENTER REGION

9EA
OUTER REGION

[FIG. 25]

6EA

CENTER REGION

6EA

OUTER REGION

[FIG. 26]

12EA

CENTER REGION

19EA

OUTER REGION

[FIG. 27]

7EA
CENTER REGION

9EA
OUTER REGION

[FIG. 28]

12EA
CENTER REGION

13EA
OUTER REGION

[FIG. 29]

203EA

CENTER REGION

180EA

OUTER REGION

[FIG. 30]

[FIG. 31]

EXAMPLE 1

[FIG. 32]

[FIG. 33]

[FIG. 34]

[FIG. 35]

[FIG. 36]

[FIG. 37]

[FIG. 38]

[FIG. 39]

[FIG. 40]

[FIG. 41]

[FIG. 42]

[FIG. 43]

[FIG. 44]

[FIG. 45]

[FIG. 46]

[FIG. 47]

[FIG. 48]

[FIG. 49]

[FIG. 50]

[FIG. 51]

[FIG. 52]

[FIG. 53]

[FIG. 54]

[FIG. 55]

[FIG. 56]

**INTERNATIONAL SEARCH REPORT**

| International application No. |
|---|
| **PCT/KR2024/005824** |

### A. CLASSIFICATION OF SUBJECT MATTER

**H01M 4/02**(2006.01)i; **H01M 4/525**(2010.01)i; **H01M 4/505**(2010.01)i; **H01M 4/131**(2010.01)i; **H01M 10/052**(2010.01)i; **H01M 4/36**(2006.01)i; **H01M 4/04**(2006.01)i

According to International Patent Classification (IPC) or to both national classification and IPC

### B. FIELDS SEARCHED

Minimum documentation searched (classification system followed by classification symbols)

H01M 4/02(2006.01); H01M 10/052(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극(cathode), 1차 입자(primary particle), 2차 입자(secondary particle), 입경(particle diameter), 코팅(coating), 코발트(cobalt), 붕소(boron), 알루미늄(aluminum), 단결정(single crystal), 단입자화도(volume average value, Dv50)

### C. DOCUMENTS CONSIDERED TO BE RELEVANT

| Category* | Citation of document, with indication, where appropriate, of the relevant passages | Relevant to claim No. |
|---|---|---|
| X | KR 10-2022-0057480 A (LG ENERGY SOLUTION, LTD.) 09 May 2022 (2022-05-09) See abstract; paragraphs [0092], [0096], [0149]-[0155], [0171] and [0188]-[0191]; claims 1, 4, 6-9 and 11-13; and figure 2. | 1-9 |
| A | KR 10-2023-0026841 A (SAMSUNG SDI CO., LTD.) 27 February 2023 (2023-02-27) See entire document. | 1-9 |
| A | KR 10-2022-0113196 A (LG ENERGY SOLUTION, LTD.) 12 August 2022 (2022-08-12) See entire document. | 1-9 |
| A | KR 10-2023-0033480 A (SAMSUNG SDI CO., LTD.) 08 March 2023 (2023-03-08) See entire document. | 1-9 |
| A | KR 10-2021-0042484 A (ECOPRO BM CO., LTD.) 20 April 2021 (2021-04-20) See entire document. | 1-9 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 August 2024** | **09 August 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/005824** |

| Patent document cited in search report | | | Publication date (day/month/year) | Patent family member(s) | | | Publication date (day/month/year) |
| --- | --- | --- | --- | --- | --- | --- | --- |
| KR | 10-2022-0057480 | A | 09 May 2022 | CN | 116420251 | A | 11 July 2023 |
| | | | | EP | 4220772 | A1 | 02 August 2023 |
| | | | | JP | 2023-546964 | A | 08 November 2023 |
| | | | | KR | 10-2686481 | B1 | 19 July 2024 |
| | | | | US | 2023-0378456 | A1 | 23 November 2023 |
| | | | | WO | 2022-092922 | A1 | 05 May 2022 |
| KR | 10-2023-0026841 | A | 27 February 2023 | CN | 115939331 | A | 07 April 2023 |
| | | | | EP | 4151602 | A1 | 22 March 2023 |
| | | | | JP | 2023-029310 | A | 03 March 2023 |
| | | | | JP | 7460708 | B2 | 02 April 2024 |
| | | | | US | 2023-0076517 | A1 | 09 March 2023 |
| KR | 10-2022-0113196 | A | 12 August 2022 | CN | 116686111 | A | 01 September 2023 |
| | | | | EP | 4270539 | A1 | 01 November 2023 |
| | | | | JP | 2023-554657 | A | 28 December 2023 |
| | | | | US | 2024-0079584 | A1 | 07 March 2024 |
| | | | | WO | 2022-169331 | A1 | 11 August 2022 |
| KR | 10-2023-0033480 | A | 08 March 2023 | CN | 115732652 | A | 03 March 2023 |
| | | | | EP | 4144703 | A1 | 08 March 2023 |
| | | | | JP | 2023-036062 | A | 13 March 2023 |
| | | | | JP | 7498233 | B2 | 11 June 2024 |
| | | | | KR | 10-2667604 | B1 | 20 May 2024 |
| | | | | US | 2023-0082796 | A1 | 16 March 2023 |
| KR | 10-2021-0042484 | A | 20 April 2021 | CN | 112652745 | A | 13 April 2021 |
| | | | | EP | 3805160 | A1 | 14 April 2021 |
| | | | | JP | 2021-063004 | A | 22 April 2021 |
| | | | | JP | 2022-106805 | A | 20 July 2022 |
| | | | | JP | 7063964 | B2 | 17 May 2022 |
| | | | | JP | 7418490 | B2 | 19 January 2024 |
| | | | | KR | 10-2292889 | B1 | 24 August 2021 |
| | | | | US | 2021-0111396 | A1 | 15 April 2021 |

Form PCT/ISA/210 (patent family annex) (July 2022)

**REFERENCES CITED IN THE DESCRIPTION**

**Patent documents cited in the description**

- KR 1020230056231
- KR 1020240057193
- KR 101785262
- KR 101785262 B1
- KR 1020170119573 A